(19) Europäisches Patentamt / European Patent Office / Office européen des brevets

(11) **EP 3 847 758 B1**

(12) **EUROPÄISCHE PATENTSCHRIFT**

(45) Veröffentlichungstag und Bekanntmachung des Hinweises auf die Patenterteilung:
**17.09.2025   Patentblatt 2025/38**

(21) Anmeldenummer: **19762927.2**

(22) Anmeldetag: **30.08.2019**

(51) Internationale Patentklassifikation (IPC):
**H04B 1/713** (2011.01)        **H04L 5/00** (2006.01)
**H04L 1/00** (2006.01)

(52) Gemeinsame Patentklassifikation (CPC):
**H04B 1/713; H04L 5/0048;** H04L 1/0041;
H04L 1/0045; H04L 1/0071; H04L 1/0072

(86) Internationale Anmeldenummer:
**PCT/EP2019/073168**

(87) Internationale Veröffentlichungsnummer:
**WO 2020/048877 (12.03.2020 Gazette 2020/11)**

(54) **SYNCHRONISATIONS-BAKE**

SYNCHRONIZATION BEACON

BALISE DE SYNCHRONISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **06.09.2018   DE 102018215193**

(43) Veröffentlichungstag der Anmeldung:
**14.07.2021   Patentblatt 2021/28**

(73) Patentinhaber:
• **Fraunhofer-Gesellschaft zur Förderung der angewandten Forschung e.V.**
**80686 München (DE)**
• **Friedrich-Alexander-Universität Erlangen-Nürnberg**
**91054 Erlangen (DE)**

(72) Erfinder:
• **KILIAN, Gerd**
**91058 Erlangen (DE)**
• **BERNHARD, Josef**
**91058 Erlangen (DE)**
• **OBERNOSTERER, Frank**
**90411 Nürnberg (DE)**
• **MEYER, Raimund**
**90765 Fürth (DE)**
• **WECHSLER, Johannes**
**91058 Erlangen (DE)**
• **KNEISSL, Jakob**
**91058 Erlangen (DE)**
• **SOLLER, Dominik**
**91058 Erlangen (DE)**
• **ROBERT, Jörg**
**91054 Erlangen (DE)**

(74) Vertreter: **Schlenker, Julian et al Schoppe, Zimmermann, Stöckeler Zinkler, Schenk & Partner mbB Patentanwälte Radlkoferstraße 2 81373 München (DE)**

(56) Entgegenhaltungen:
**EP-A1- 2 151 928     US-A1- 2002 080 769**

• **TABASSAM A A ET AL: "Bluetooth Clock Recovery and Hop Sequence Synchronization Using Software Defined Radios", REGION 5 CONFERENCE, 2008 IEEE, IEEE, PISCATAWAY, NJ, USA, 17 April 2008 (2008-04-17), pages 1 - 5, XP031285302, ISBN: 978-1-4244-2076-6**

- **PETERSON B S ET AL: "Bluetooth Inquiry Time Characterization and Selection", IEEE TRANSACTIONS ON MOBILE COMPUTING, IEEE SERVICE CENTER, LOS ALAMITOS, CA, US, vol. 5, no. 9, 1 September 2006 (2006-09-01), pages 1173 - 1187, XP001546026, ISSN: 1536-1233, [retrieved on 20060717], DOI: 10.1109/ TMC.2006.125**

- **TAQWAN THAMRIN ET AL: "The Inquiry and Page Procedure in Bluetooth Connection", SOFT COMPUTING AND PATTERN RECOGNITION, 2009. SOCPAR '09. INTERNATIONAL CONFERENCE OF, IEEE, PISCATAWAY, NJ, USA, 4 December 2009 (2009-12-04), pages 218 - 222, XP031593782, ISBN: 978-1-4244-5330-6**

**Beschreibung**

Ausführungsbeispiele der vorliegenden Erfindung beziehen sich auf einen Endpunkt und eine Basisstation eines Kommunikationssystems, das in einem Frequenzband drahtlos kommuniziert, welches von einer Mehrzahl von Kommunikationssystemen zur Kommunikation genutzt wird. Weitere Ausführungsbeispiele beziehen sich auf Verfahren zum Betrieb eines Endpunkts und einer Basisstation eines solchen Kommunikationssystems. Manche Ausführungsbeispiele beziehen sich auf eine Synchronisations-Bake (engl. sync beacon).

Aus [1] ist das Telegram-Splitting-Verfahren (Telegrammaufteilungs-verfahren) bekannt, wonach ein Telegramm (oder Datenpaket) auf eine Mehrzahl von Sub-Datenpakete aufgeteilt wird, die unter Verwendung eines Sprungmusters in der Zeit und optional in der Frequenz verteilt übertragen werden.

In [3] wird eine verbesserte Reichweite für LPWAN Systeme (LPWAN = Low Power Wide Area Network, dt. Niedrigenergieweitverkehrnetzwerk), die das Telegram-Splitting-Verfahren verwenden, beschrieben.

In [4] wird eine verbesserte Übertragungssicherheit für LPWAN Systeme, die das Telegram-Splitting-Verfahren verwenden, beschrieben.

In Telegram-Splitting basierten Kommunikationssystemen kommen bedingt durch die verwendeten Sprungmuster, basierend auf denen die Sub-Datenpakete in der Zeit und Frequenz verteilt übertragen werden, sehr breitbandige Signale zum Einsatz. Neu in ein solches Kommunikationssystem einzubindende Teilnehmer haben keine Kenntnis über die im Kommunikationssystem verwendeten Sprungmuster. Zudem haben neu einzubindende Teilnehmer auf Grund von Quarztoleranzen keine Kenntnis über die exakte Frequenzlage der Signale oder das zeitliche Auftreten der Signale, so dass eine Vollsuche nach den Signalen in der Zeit und Frequenz erforderlich ist.

Kostengünstige, batteriebetriebene Teilnehmer, wie z.B. Sensorknoten, weisen jedoch in der Regel einen Empfänger auf, dessen Empfangsbandbreite wesentlich schmaler ist, als die Bandbreite, über die sich die in dem Telegram-Splitting basierten Kommunikationssystem verwendeten Signale bedingt durch die verwendeten Sprungmuster erstrecken. Zudem ist bei solchen kostengünstigen, batteriebetriebenen Teilnehmern auch die zur Verfügung stehende Rechenleistung an die Empfangsbandbreite des Empfängers angepasst.

Somit steht einem kostengünstigen Teilnehmer nicht die Möglichkeit zur Verfügung sich in einem solchen Netzwerk anzumelden.

Die US 2002/080769 A1 bezieht sich auf die Synchronisierung von Frequenzsprungmustern von Bluetooth-Transceivern, wobei das zur Kommunikation verwendete Frequenzsprungmuster von der Clock des Masters und der Adresse des Masters abgeleitet wird.

Die EP 2151928 A1 beschreibt ein Verfahren zur schnellen Synchronisation und Frequenzsprungsequenzerfassung in drahtlosen Sensornetzen.

In [T ABASSAM A A ET AL: "Bluetooth Clock Recovery and Hop Sequence Synchronization Using Software Defined Radios", REGION 5 CONFERENCE, 2008 IEEE, IEEE, PISCATAWAY, NJ, USA, 17. April 2008 (2008-04-17), Seiten 1-5, XP031285302,ISBN: 978-1-4244-2076-6] beschreibt eine Wiedergewinnung einer Bluetooth-Taktfrequenz und einer Sprungsequenzsynchronisierung mittels eines softwarebasierten Radios.

In [PETERSON B S ET AL: "Bluetooth Inquiry Time Characterization and Selection", IEEE TRANSACTIONS ON MOBILE COMPUTING, IEEE SERVICE CENTER, LOS ALAMITOS, CA, US, Bd. 5, Nr. 9, 1. September 2006 (2006-09-01 ), Seiten 1173-1187, XP001546026,ISSN: 1536-1233, DOI: 10.1109/TMC.2006.125 [gefunden am 2006-07-17] beschreibt eine Charakterisierung und Auswahl der Bluetooth-Abfragezeit.

In [TAQWAN THAMRIN ET AL: "The Inquiry and Page Procedure in Bluetooth Connection", SOFT COMPUTING AND PATTERN RECOGNITION, 2009. SOCPAR'09. INTERNATIONAL CONFERENCE OF, IEEE, PISCATAWAY, NJ, USA, 4. Dezember 2009 (2009-12-04), Seiten 218-222, XP031593782, ISBN: 978-1-4244-5330-6] beschreibt die Abfrage- und Seitenprozedur einer Bluetooth-Verbindung.

Der vorliegenden Erfindung liegt somit die Aufgabe zugrunde, ein Konzept zu schaffen, welches es Teilnehmern, die nur eine geringe Empfangsbandbreite und/oder über nur eingeschränkte Rechenleistung verfügen, ermöglicht, sich in einem Kommunikationssystem anzumelden, welches zur Kommunikation eine hohe Signalbandbreite verwendet.

Diese Aufgabe wird durch die unabhängigen Patentansprüche gelöst.

Vorteilhafte Weiterbildungen finden sich in den abhängigen Patentansprüchen.

Ausführungsbeispiele schaffen einen Endpunkt eines Kommunikationssystems, wobei in dem Kommunikationssystem [z.B. eine Basisstation des Kommunikationssystems] zur Koordinierung der Teilnehmer des Kommunikationssystems ein Steuersignal ausgesendet wird, wobei das Steuersignal entsprechend einer durch ein Steuersignalsprungmuster angegebenen frequenzsprungbasierten [und optional zeitsprungbasierten] Belegung von Ressourcen eines Frequenzbands verteilt übertragen wird, wobei der Endpunkt einen Empfänger aufweist, wobei eine Empfangsbandbreite des Empfängers zumindest um den Faktor 3 kleiner ist als eine Bandbreite der durch das Steuersignalsprungmuster angegebenen frequenzsprungbasierten [z.B. und zeitsprungbasierten] Belegung von Ressourcen des Frequenzbands, wobei der Endpunkt ausgebildet ist, um ein Referenzsignal [z.B. Synchronisationssignal], zu empfangen, wobei das Referenzsignal eine Information über das Steuersignal aufweist, wobei der Endpunkt ausgebildet ist, um das Steuersignal basierend auf der Information über das Steuersignal zu empfangen, wobei die Information über das Steuersignal, die das Referenzsignal aufweist, eine Information über das Steuersignalsprungmuster oder eine Information über die vom Kommunikationssystem zur Übertragung des Steuersignals verwendbaren Ressourcen des Frequenzbands aufweist, wobei das Referenzsignal in einem vorgegebenen Frequenzbereich des Frequenzbands übertragen wird, wobei das Referenzsignal eine Mehrzahl von Teil-Referenzdatenpaketen aufweist, die die Information über das Steuersignal enthalten, wobei das Referenzsignal entsprechend eines Referenzsprungmusters übertragen wird, wobei das Referenzsprungmuster eine frequenz- und/oder zeitsprungbasierte Belegung von Ressourcen des vorgegebenen Frequenzbereichs angibt, wobei der Endpunkt ausgebildet ist, um das Referenzsignal entsprechend des Referenzsprungmusters zu empfangen, um zumindest einen zur Dekodierung ausreichenden Teil der Mehrzahl von Teil-Referenzdatenpaketen zu erhalten.

Bei Ausführungsbeispielen kann eine Empfangsbandbreite des Empfängers zumindest um den Faktor 5 kleiner sein als eine Bandbreite der durch das Steuersignalsprungmuster angegebenen frequenzsprungbasierten Belegung von Ressourcen des Frequenzbands.

Bei Ausführungsbeispielen kann eine Empfangsbandbreite des Empfängers zumindest um den Faktor 10 kleiner sein als eine Bandbreite der durch das Steuersignalsprungmuster angegebenen frequenzsprungbasierten Belegung von Ressourcen des Frequenzbands

Bei Ausführungsbeispielen kann der Endpunkt ausgebildet sein, um eine Empfangsfrequenz des Empfängers des Endpunkts basierend auf dem Steuersignalsprungmuster auf die jeweiligen durch das Steuersignalsprungmuster angegebenen Ressourcen [z.B. definiert durch Zeitschlitze und Frequenzkanäle, in die das Frequenzband unterteilt ist] des Frequenzbands umzuschalten, um das Steuersignal zu empfangen.

Bei Ausführungsbeispielen kann die Information über das Steuersignal, die das Referenzsignal aufweist, eine Information über das Steuersignalsprungmuster oder eine Information über die vom Kommunikationssystem [z.B. Basisstation] zur Übertragung des Steuersignals verwendbaren Ressourcen des Frequenzbands aufweisen.

Beispielsweise kann die Information über das Steuersignalsprungmuster das Steuersignalsprungmuster selbst sein.

Beispielsweise kann das Steuersignalsprungmuster von der Information über das Steuersignalsprungmuster ableitbar sein.

Beispielsweise kann die Information über das Steuersignalsprungmuster ein Steuersignalsprungmusterindex sein, der das Steuersignalsprungmuster aus einem Satz von Steuersignalsprungmustern, denen unterschiedliche Steuersignalsprungmusterindizes zugeordnet sind, eindeutig identifiziert.

Beispielsweise können die von dem Kommunikationssystem zur Übertragung des Steuersignals verwendbaren Ressourcen des Frequenzbands durch ein Kanalzugriffsmuster vorgegeben sein, wobei das Steuersignal z.B. entsprechend des Steuersignalsprungmusters (=relatives Kanalzugriffsmuster) in z.B. einer Teilmenge der durch das Kanalzugriffsmuster angegebenen Ressourcen übertragen wird.

Beispielsweise kann die Information über die von dem Kommunikationssystem zur Übertragung des Steuersignals verwendbaren Ressourcen ein Zustand (z.B. PAN Counter) eines Zahlenfolgengenerators zur Erzeugung einer Zahlenfolge oder eine Zahl einer Zahlenfolge beschreiben, wobei die Zahlenfolge das Kanalzugriffsmuster bestimmt. Ferner kann die Information über die von dem Kommunikationssystem zur Übertragung des Steuersignals verwendbaren Ressourcen eine individuelle Information des Kommunikationssystems (z.B. PAN-ID) beschreiben.

Bei Ausführungsbeispielen kann die Information über das Steuersignal eine Information über eine Zeit- und Frequenzlage des Steuersignals in Bezug auf das Referenzsignal aufweisen.

Bei Ausführungsbeispielen kann der Endpunkt ausgebildet sein, um einen Zeitgeber und/oder Frequenzgeber des Endpunkts auf das Referenzsignal zu synchronisieren.

Bei Ausführungsbeispielen können das Referenzsignal und das Steuersignal zeitlich zueinander synchronisiert sein [z.B. einen definierten Zeitabstand aufweisen].

Bei Ausführungsbeispielen kann der Empfänger des Endpunkts eine Empfangsbandbreite aufweisen, die einer Bandbreite von zwei bis zehn unmittelbar benachbarten Frequenzkanälen, in die das Frequenzband unterteilt ist, entspricht.

Beispielsweise kann eine Empfangsbandbreite des Empfängers des Endpunkts so groß sein wie eine Bandbreite von zwei bis vier unmittelbar benachbarten Frequenzkanälen, z.B. so dass der Empfänger die zwei bis vier Frequenzkanäle gleichzeitig empfangen kann.

Bei Ausführungsbeispielen kann der Empfänger des Endpunkts eine Empfangsbandbreite aufweisen, die einer Bandbreite von zwei bis vier unmittelbar benachbarten Frequenzkanälen, in die das Frequenzband unterteilt ist, entspricht.

Bei Ausführungsbeispielen kann der Empfänger des Endpunkts eine Empfangsbandbreite von 250 kHz oder weniger aufweisen.

Bei Ausführungsbeispielen kann der Empfänger des Endpunkts eine Empfangsbandbreite von 100 kHz oder weniger aufweisen.

Bei Ausführungsbeispielen kann der Endpunkt batteriebetrieben sein.

Bei Ausführungsbeispielen kann der vorgegebene Frequenzbereich fest vorgegeben und dem Endpunkt bekannt sein.

Bei Ausführungsbeispielen kann der vorgegebene Frequenzbereich zumindest einen Frequenzkanal des Frequenzbands umfassen.

Bei Ausführungsbeispielen kann der vorgegebene Frequenzbereich eine Mehrzahl von Frequenzkanälen umfassen, wobei zumindest zwei Frequenzkanäle der Mehrzahl von Frequenzkanälen höchstens so weit auseinanderliegen, dass die zwei Frequenzkanäle innerhalb einer Frequenzbandbreite liegen, die der Empfangsbandbreite des Empfängers entspricht [z.B. wobei zumindest zwei Frequenzkanäle der Mehrzahl von Frequenzkanälen unmittelbar benachbarte Frequenzkanäle des Frequenzbands sind].

Beispielsweise kann das Referenzsignal drei Sub-Datenpakete aufweisen, wobei der Endpunkt ausgebildet sein kann, um mindestens zwei der Sub-Datenpakete zu empfangen, um den Inhalt zu dekodieren, und wobei der Endpunkt ausgebildet sein kann, um aufgrund der Anordnung der zwei Sub-Datenpakete sich genau zeitlich zu synchronisieren.

Bei Ausführungsbeispielen kann ein Referenzdatenpaket [z.B. Synchronisationsdatenpaket] mit der Information über das Steuersignal auf die Mehrzahl von Teil-Referenzdatenpaketen aufgeteilt sein, so dass jedes der Teil-Referenzdatenpakete nur einen Teil des Referenzdatenpakets aufweist, wobei die Mehrzahl von Teil-Referenzdatenpaketen kanalcodiert sein können, so dass nur eine Teilmenge der Mehrzahl von Teil-Referenzdatenpaketen zur erfolgreichen Decodierung des Referenzdatenpakets erforderlich ist, wobei der Endpunkt ausgebildet sein kann, um zumindest ein Teil der Mehrzahl von Teil-Referenzdatenpaketen zu empfangen und zu decodieren, um das Referenzdatenpaket mit der Information über das Steuersignal zu erhalten.

Bei Ausführungsbeispielen kann der vorgegebene Frequenzbereich ein oder mehrere Teilfrequenzbereiche aufweisen, wobei der vorgegebene Frequenzbereich breiter sein kann als die Empfangsbandbreite des Empfängers des Endpunkts, wobei entsprechend des Referenzsprungmusters pro Teilfrequenzbereich innerhalb des vorgegebenen Frequenzbereichs mindestens so viele der Mehrzahl von Teil-Referenzdatenpaketen übertragen werden, wie für die erfolgreiche Decodierung des Referenzdatenpakets erforderlich sind, wobei jeder der ein oder mehreren Teilfrequenzbereiche der Empfangsbandbreite des Empfängers des Endpunkts entspricht.

Bei Ausführungsbeispielen kann das Referenzsignal in vorgegebenen Abständen [z.B. periodisch] ausgesendet werden, wobei das Referenzsignal abwechselnd in zumindest zwei dem Endpunkt bekannten vorgegebenen Teilfrequenzbereichen des vorgegebenen Frequenzbereichs ausgesendet wird.

Bei Ausführungsbeispielen können die zumindest zwei vorgegebenen Teilfrequenzbereiche in der Frequenz so weit voneinander getrennt sein, dass eine durch einen Frequenzversatz bedingte versehentliche Synchronisation auf den jeweils anderen vorgegebenen Teilfrequenzbereich nicht möglich ist.

Bei Ausführungsbeispielen kann das Referenzsignal entsprechend eines Referenzsprungmusters übertragen werden, wobei das Referenzsprungmuster eine frequenz-und/oder zeitsprungbasierte Belegung von Ressourcen des vorgegebenen Frequenzbereichs angibt, wobei die Ressourcen durch Frequenzkanäle definiert sind, wobei zumindest zwei benachbarte Frequenzkanäle der entsprechend des Referenzsprungmusters belegten Frequenzkanäle frequenzmäßig so weit voneinander getrennt sind, dass sich diese auch mit Frequenzversatz [z. B. durch einen Quarz] nicht überlappen.

Bei Ausführungsbeispielen kann das Referenzsignal entsprechend eines Referenzsprungmusters übertragen werden, wobei das Referenzsprungmuster eine frequenz- und/oder zeitsprungbasierte Belegung von Ressourcen des vorgegebenen Frequenzbereichs angibt, wobei eine durch das Referenzsprungmuster angegebene Belegung von Ressourcen keine wiederholenden identischen Abstände zwischen den Ressourcen in der Zeit und/oder Frequenz aufweist.

Bei Ausführungsbeispielen kann das Referenzsignal eine Mehrzahl von Teil-Referenzdatenpaketen aufweisen, wobei die zumindest zwei der Mehrzahl von Teil-Referenzdatenpaketen dem Endpunkt bekannte Informationen [z.B. eine ID des Kommunikationssystems] aufweisen, wobei der Endpunkt ausgebildet sein kann, um eine Synchronisation basierend auf den bekannten Informationen durchzuführen.

Bei Ausführungsbeispielen können zumindest zwei der Mehrzahl von Teil-Referenzdatenpaketen Teil-Synchronisationssequenzen, die dem Endpunkt bekannt sind, aufweisen, wobei der Endpunkt ausgebildet sein kann, um eine Synchronisation basierend auf den Teil-Synchronisationssequenzen und den bekannten Informationen durchzuführen.

Bei Ausführungsbeispielen können innerhalb der zumindest zwei der Mehrzahl von Teil-Referenzdatenpaketen die jeweilige Teil-Synchronisationssequenz und die jeweilige bekannte Information virtuelle Synchronisationssequenzen bilden, wobei der Endpunkt ausgebildet sein kann, um die Synchronisation basierend auf den virtuellen Synchronisationssequenzen der zumindest zwei [oder allen] der Mehrzahl von Teil-Referenzdatenpaketen durchzuführen.

Bei Ausführungsbeispielen können innerhalb der zumindest zwei der Mehrzahl von Teil-Referenzdatenpaketen die jeweilige Teil-Synchronisationssequenz und die jeweilige bekannte Information einen vorgegebenen Abstand zueinander aufweisen [z.B. unmittelbar aufeinander folgen oder durch eine vorgegebene Anzahl von Symbolen voneinander beabstandet sind].

Bei Ausführungsbeispielen kann das Kommunikationssystem in einem Frequenzband drahtlos kommunizieren, welches von einer Mehrzahl von Kommunikationssystemen zur Kommunikation genutzt wird [z.B. wobei die Kommunikationssysteme untereinander unkoordiniert sind].

Bei Ausführungsbeispielen kann das Steuersignal und/oder das Referenzsignal eine Information über ein netzwerkspezifisches Kanalzugriffsmuster aufweisen, wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt.

Bei Ausführungsbeispielen kann das Steuersignalsprungmuster (1) fest definiert sein und bei jeder Aussendung des Steuersignals (z.B. Bake (engl. beacon)) gleich sein (z.B. wird das Steuersignalsprungmuster aus einem Vorrat verwendet) oder das Steuersignalsprungmuster kann (2) Teil des Kanalzugriffsmusters sein und sich somit bei jeder Aussendung des Steuersignals (z.B. Bake (engl. beacon)) ändern. Im ersten Fall kann ein Endpunkt das Steuersignalsprungmuster ohne Kenntnis des Zustands (z.B. Zählerstand) des Zahlenfolgengenerators zur Erzeugung einer Zahlenfolge, die das Kanalzugriffsmuster bestimmt, und der individuellen Information des Kommunikationssystems (z.B. ID) empfangen. Die ID und der aktuelle Zählerstand für das folgende Kanalzugriffsmuster werden im Steuersignalsprungmuster übertragen. Im zweiten Fall hat der Teilnehmer, welcher das Steuersignal empfängt bereits Kenntnis über die ID und den Zählerstand (engl. counter) da aus diesen Parametern das Kanalzugriffsmuster berechnet wird. Im ersten Fall müssen im Referenzsignal (z.B. Synchronisationsbake, engl. sync-beacon) keine Informationen über die ID und den Zählerstand vorhanden sein, im zweiten Fall schon.

Bei Ausführungsbeispielen kann das Steuersignalsprungmuster ein festes Sprungmuster sein. In diesem Fall werden im Steuersignal (z.B. Daten-Beacon) die ID (z.B. PAN-ID) und der Zählerstand (engl. counter) übertragen, um das Kanalzugriffsmuster für die folgende Datenübertragung zu signalisieren. Bei Ausführungsbeispielen kann das Steuersignalsprungmuster Teil des Kanalzugriffsmusters sein. In diesem Fall enthält das Referenzsignal die ID (z.B. PAN-ID) und den Zählerstand (engl. counter). Im Steuersignal (z.B. Daten-Beacon) werden weitere Daten zur Koordinierung bzw. Steuerung von Teilnehmern übertragen (z. B Downlink-Zeiten für bestimmte Knoten).

Bei Ausführungsbeispielen kann die Information über das Steuersignal eine Information über ein netzwerkspezifisches Kanalzugriffsmuster aufweisen [z.B. sein], wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt, wobei das Steuersignalsprungmuster ein relatives Kanalzugriffsmuster ist, wobei das Steuersignal entsprechend des relativen Kanalzugriffsmusters in zumindest einer Teilmenge der durch das Kanalzugriffsmuster angegebenen Ressourcen des Frequenzbands übertragen wird.

Bei Ausführungsbeispielen kann das Steuersignal entsprechend des relativen Kanalzugriffsmusters in den ersten Ressourcen der durch das Kanalzugriffsmuster angegebenen Ressourcen des Frequenzbands übertragen werden.

Bei Ausführungsbeispielen kann der Endpunkt ausgebildet sein, um ein zum Senden anstehendes Datenpaket [z.B. der Bitübertragungsschicht im OSI-Modell] in eine Mehrzahl von Sub-Datenpaketen aufzuteilen, die jeweils kürzer sind als das Datenpaket, und um ein Datensignal, das die Mehrzahl von Sub-Datenpaketen aufweist, entsprechend eines relativen Kanalzugriffmusters in einer Teilmenge der durch das netzwerkspezifische Kanalzugriffsmuster angegebenen verwendbaren frequenz- und/oder zeitsprungbasierten Belegung von Ressourcen des Frequenzbands zu senden.

Weitere Ausführungsbeispiele schaffen eine Basisstation eines Kommunikationssystems, wobei die Basisstation ausgebildet ist, um zur Koordinierung der Teilnehmer des Kommunikationssystems ein Steuersignal [z.B. Baken-Signal] zu senden, wobei das Steuersignal entsprechend einer durch ein Steuersignalsprungmuster angegebenen frequenzsprungbasierten [z.B. und zeitsprungbasierten] Belegung von Ressourcen eines Frequenzbands verteilt übertragen wird, wobei die Basisstation ausgebildet ist, um ein Referenzsignal [z.B. Synchronisationssignal] zu senden, wobei das Referenzsignal eine Information über das Steuersignal aufweist, wobei der vorgegebene Frequenzbereich zumindest um den Faktor 3 kleiner [z.B. schmaler] ist, als ein Frequenzbereich des Frequenzbands, in dem das Steuersignal entsprechend des Steuersprungmusters verteilt übertragen wird, wobei die Information über das Steuersignal, die das Referenzsignal aufweist, eine Information über das Steuersignalsprungmuster oder eine Information über die vom Kommunikationssystem zur Übertragung des Steuersignals verwendbaren Ressourcen des Frequenzbands aufweist, wobei die Basisstation ausgebildet ist, um das Referenzsignal mit einer Mehrzahl von Teil-Referenzdatenpaketen zu versehen, die die Information über das Steuersignal enthalten, wobei die Basisstation ausgebildet ist, um das Referenzsignal entsprechend eines Referenzsignalsprungmusters zu senden, wobei das Referenzsignalsprungmuster eine frequenz- und/oder zeitsprungbasierte Belegung von Ressourcen des vorgegebenen Frequenzbereichs angibt, wobei die Basisstation ausgebildet ist, um ein Referenzdatenpaket mit der Information über das Steuersignal auf die Mehrzahl von Teil-Referenzdatenpaketen aufzuteilen, so dass jedes der Teil-Referenzdatenpakete nur einen Teil des Referenzdatenpakets aufweist, wobei die Mehrzahl von Teil-Referenzdatenpaketen kanalcodiert sind, so dass nur eine Teilmenge der Mehrzahl von Teil-Referenzdatenpaketen zur erfolgreichen Decodierung des Referenzdatenpakets erforderlich ist.

Bei Ausführungsbeispielen kann der vorgegebene Frequenzbereich an eine Empfangsbandbreite eines Empfängers des Endpunkts angepasst sein, wobei der Frequenzbereich des Frequenzbands, in dem das Steuersignal entsprechend des Steuersignalsprungmusters verteilt übertragen wird, um den Faktor 3 größer sein kann, als der vorgegebene Frequenzbereich.

Bei Ausführungsbeispielen kann der vorgegebene Frequenzbereich zumindest einen Frequenzkanal des Frequenzbands umfassen.

Bei Ausführungsbeispielen kann der vorgegebene Frequenzbereich eine Mehrzahl von Frequenzkanälen umfassen, wobei zumindest zwei Frequenzkanäle der Mehrzahl von Frequenzkanälen höchstens so weit auseinanderliegen, dass die zwei Frequenzkanäle innerhalb einer Frequenzbandbreite liegen, die einer Empfangsbandbreite eines Empfängers eines Endpunkts des Kommunikationssystems entspricht [z.B. wobei zumindest zwei Frequenzkanäle der Mehrzahl von Frequenzkanälen unmittelbar benachbarte Frequenzkanäle des Frequenzbands sind].

Bei Ausführungsbeispielen kann die Information über das Steuersignal, die das Referenzsignal aufweist, eine Information über das Steuersignalsprungmuster oder eine Information über die vom Kommunikationssystem [z.B. Basisstation] zur Übertragung des Steuersignals verwendbaren Ressourcen des Frequenzbands aufweisen.

Beispielsweise kann die Information über das Steuersignalsprungmuster das Steuersignalsprungmuster selbst sein.

Beispielsweise kann das Steuersignalsprungmuster von der Information über das Steuersignalsprungmuster ableitbar sein.

Beispielsweise kann die Information über das Steuersignalsprungmuster ein Steuersignalsprungmusterindex sein, der das Steuersignalsprungmuster aus einem Satz von Steuersignalsprungmustern, denen unterschiedliche Steuersignalsprungmusterindizes zugeordnet sind, eindeutig identifiziert.

Beispielsweise können die von dem Kommunikationssystem zur Übertragung des Steuersignals verwendbaren Ressourcen des Frequenzbands durch ein Kanalzugriffsmuster vorgegeben sein, wobei das Steuersignal z.B. entsprechend des Steuersignalsprungmusters (=relatives Kanalzugriffsmuster) in z.B. einer Teilmenge der durch das Kanalzugriffsmuster angegebenen Ressourcen übertragen wird.

Beispielsweise kann die Information über die von dem Kommunikationssystem zur Übertragung des Steuersignals verwendbaren Ressourcen ein Zustand (z.B. PAN Counter) eines Zahlenfolgengenerators zur Erzeugung einer Zahlenfolge oder eine Zahl einer Zahlenfolge beschreiben, wobei die Zahlenfolge das Kanalzugriffsmuster bestimmt. Ferner kann die Information über die von dem Kommunikationssystem zur Übertragung des Steuersignals verwendbaren Ressourcen eine individuelle Information des Kommunikationssystems (z.B. PAN-ID) beschreiben.

Bei Ausführungsbeispielen kann die Information über das Steuersignal eine Information über eine Zeit- und Frequenzlage des Steuersignals in Bezug auf das Referenzsignal aufweisen.

Bei Ausführungsbeispielen kann die Basisstation ausgebildet sein, um das Referenzsignal und das Steuersignal zeitlich zueinander synchronisiert [z.B. mit einem definierten Zeitabstand zueinander] zu senden.

Bei Ausführungsbeispielen kann der vorgegebene Frequenzbereich ein oder mehrere Teilfrequenzbereiche aufweisen, wobei der vorgegebene Frequenzbereich breiter ist als eine Empfangsbandbreite eines Empfängers eines Endpunkts des Kommunikationssystems, wobei die Basisstation ausgebildet ist, um entsprechend des Referenzsignalsprungmusters pro Teilfrequenzbereich innerhalb des vorgegebenen Frequenzbereichs mindestens so viele der Mehrzahl von Teil-Referenzdatenpaketen zu senden, wie für die erfolgreiche Decodierung des Referenzdatenpakets erforderlich sind, wobei jeder der ein oder mehreren Teilfrequenzbereiche der Empfangsbandbreite des Empfängers des Endpunkts entspricht.

Bei Ausführungsbeispielen kann die Basisstation ausgebildet sein, um das Referenzsignal in vorgegebenen Abständen [z.B. periodisch] zu senden, wobei die Basisstation ausgebildet sein kann, um das Referenzsignal abwechselnd in zumindest zwei dem Endpunkt bekannten vorgegebenen Teilfrequenzbereichen des vorgegebenen Frequenzbereichs zu senden.

Bei Ausführungsbeispielen können die zumindest zwei vorgegebenen Teilfrequenzbereiche in der Frequenz so weit voneinander getrennt sein, dass eine durch einen Frequenzversatz bedingte versehentliche Synchronisation auf den jeweils anderen vorgegebenen Teilfrequenzbereich nicht möglich ist.

Bei Ausführungsbeispielen kann das Referenzsignal entsprechend eines Referenzsprungmusters übertragen werden, wobei das Referenzsprungmuster eine frequenz- und/oder zeitsprungbasierte Belegung von Ressourcen des vorgegebenen Frequenzbereichs angibt, wobei die Ressourcen durch Frequenzkanäle definiert sind, wobei zumindest zwei benachbarte Frequenzkanäle der entsprechend des Referenzsprungmusters belegten Frequenzkanäle frequenzmäßig so weit voneinander getrennt sind, dass sich diese auch mit Frequenzversatz [z. B. durch einen Quarz] nicht überlappen.

Bei Ausführungsbeispielen kann das Referenzsignal entsprechend eines Referenzsprungmusters übertragen werden, wobei das Referenzsprungmuster eine frequenz- und/oder zeitsprungbasierte Belegung von Ressourcen des vorgegebenen Frequenzbereichs angibt, wobei eine durch ein Referenzsprungmuster angegebene Belegung von Ressourcen keine wiederholenden identischen Abstände zwischen den Ressourcen in der Zeit und/oder Frequenz aufweist.

Bei Ausführungsbeispielen kann die Basisstation ausgebildet sein, um das Referenzsignal in vorgegebenen Abständen [z.B. periodisch] zu senden, wobei die Basisstation ausgebildet sein kann, um einen Abstand zwischen zumindest zwei aufeinanderfolgenden Aussendungen des Referenzsignals dynamisch an eine Anzahl neu anzumeldender Endpunkte anzupassen, oder wobei die Basisstation ausgebildet ist, um das Referenzsignal ansprechend auf ein externes Ereignis zusätzlich [z.B. zwischen zwei geplanten Aussendungen des Referenzsignals] zu senden.

Bei Ausführungsbeispielen kann die Basisstation ausgebildet sein, um das Referenzsignal mit einer Mehrzahl von Teil-Referenzdatenpaketen zu versehen, wobei die Basisstation ausgebildet sein kann, um eine Anzahl der Teil-Referenzdatenpaketen mit der das Referenzsignal versehen wird, dynamisch an eine Anzahl neu anzumeldender Endpunkte anzupassen.

Bei Ausführungsbeispielen kann die Basisstation ausgebildet sein, um die Mehrzahl von Teil-Referenzdatenpaketen entsprechend eines Referenzsignalsprungmusters auf unterschiedliche Frequenzkanäle des vorgegebenen Frequenzbereichs zu verteilen, wobei die Basisstation ausgebildet sein kann, um eine Anzahl an unterschiedlichen Frequenzkanälen des vorgegebenen Frequenzbereichs auf die die Mehrzahl von Teil-Referenzdatenpaketen verteilt werden dynamisch an die Anzahl neu anzumeldender Endpunkte anzupassen.

Bei Ausführungsbeispielen kann die Basisstation ausgebildet sein, um das Referenzsignal wiederholt auszusenden, wobei die Basisstation ausgebildet sein kann, um das Referenzsignal mit einer Mehrzahl von Teil-Referenzdatenpaketen zu versehen, wobei die Basisstation ausgebildet sein kann, um die Mehrzahl von Teil-Referenzdatenpaketen zumindest zweier Aussendungen des Referenzsignals entsprechend jeweiliger Referenzsignalsprungmuster zeitlich ineinander zu verschachteln.

Bei Ausführungsbeispielen können die jeweiligen Referenzsignalsprungmuster in der Zeit und Frequenz zueinander verschobene Versionen voneinander sein.

Bei Ausführungsbeispielen kann ein zeitlicher Abstand zwischen der Mehrzahl von Teil-Referenzdatenpaketen des jeweiligen Referenzsignals der Anzahl an Wiederholungen entsprechen.

Bei Ausführungsbeispielen kann die Basisstation ausgebildet sein, um das Referenzsignal mit einer Mehrzahl von Teil-Referenzdatenpaketen zu versehen, wobei zumindest zwei der Mehrzahl von Teil-Referenzdatenpaketen dem Endpunkt bekannte Daten [z.B. eine ID des Kommunikationssystems] aufweisen.

Bei Ausführungsbeispielen können die zumindest zwei der Mehrzahl von Teil-Referenzdatenpaketen Teil-Synchronisationssequenzen, die dem Endpunkt bekannt sind, aufweisen.

Bei Ausführungsbeispielen können innerhalb der zumindest zwei der Mehrzahl von Teil-Referenzdatenpaketen die jeweilige Teil-Synchronisationssequenz und die jeweiligen bekannten Daten virtuelle Synchronisationssequenzen bilden.

Bei Ausführungsbeispielen können innerhalb der zumindest zwei der Mehrzahl von Teil-Referenzdatenpaketen die jeweilige Teil-Synchronisationssequenz und die jeweiligen bekannten Daten einen vorgegebenen Abstand zueinander aufweisen [z.B. unmittelbar aufeinander folgen oder durch eine vorgegebene Anzahl von Symbolen voneinander beabstandet sind].

Bei Ausführungsbeispielen kann die Basisstation ausgebildet sein, um dem Endpunkt bekannte Daten auf zumindest zwei der Mehrzahl von Teil-Referenzdatenpaketen verschachtelt aufzuteilen, so dass jedes der zumindest zwei der Mehrzahl von Teil-Referenzdatenpaketen einen Teil der bekannten Daten aufweist.

Bei Ausführungsbeispielen kann die Basisstation ausgebildet sein, um das Referenzsignal mit einer Mehrzahl von Teil-Referenzdatenpaketen zu versehen, wobei die Basisstation ausgebildet sein kann, um eine Anzahl der Teil-Referenzdatenpakete an einen für das Steuersignal verwendeten Fehlerschutzcode anzupassen.

Bei Ausführungsbeispielen kann die Basisstation ausgebildet sein, um das Referenzsignal und das Steuersignal mit dem gleichen Fehlerschutzcode oder mit Fehlerschutzcodes vergleichbarer Leistungsfähigkeit zu versehen.

Bei Ausführungsbeispielen können die Mehrzahl Teil-Referenzdatenpaketen symbolidentisch sein.

Bei Ausführungsbeispielen kann das Kommunikationssystem in einem Frequenzband drahtlos kommunizieren, welches von einer Mehrzahl von Kommunikationssystemen zur Kommunikation genutzt wird [z.B. wobei die Kommunikationssysteme untereinander unkoordiniert sind].

Bei Ausführungsbeispielen kann das Steuersignal oder das Referenzsignal eine Information über ein netzwerkspezifisches Kanalzugriffsmuster aufweisen, wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt.

Bei Ausführungsbeispielen kann das Kommunikationssystem basierend auf einem netzwerkspezifischen Kanalzugriffsmuster kommunizieren, wobei das netzwerkspezifische Kanalzugriffsmuster eine für die Kommunikation des Kommunikationssystems verwendbare frequenz- und/oder zeitsprungbasierte Belegung von Ressourcen des Frequenzbands angibt, wobei das Steuersignalsprungmuster ein relatives Kanalzugriffsmuster ist, wobei die Basisstation ausgebildet ist, um das Steuersignal entsprechend des relativen Kanalzugriffsmusters in zumindest einer Teilmenge der durch das Kanalzugriffsmuster angegebenen Ressourcen des Frequenzbands zu senden.

Bei Ausführungsbeispielen kann die Basisstation ausgebildet sein, um das Steuersignal entsprechend des relativen Kanalzugriffsmusters in den ersten Ressourcen der durch das Kanalzugriffsmuster angegebenen Ressourcen des Frequenzbands zu senden.

Bei Ausführungsbeispielen kann der Frequenzbereich des Frequenzbands, in dem das Steuersignal entsprechend des Steuersignalsprungmusters verteilt übertragen wird, um den Faktor 5 größer sein, als der vorgegebene Frequenzbereich.

Bei Ausführungsbeispielen kann der Frequenzbereich des Frequenzbands, in dem das Steuersignal entsprechend des Steuersignalsprungmusters verteilt übertragen wird, um den Faktor 10 größer sein, als der vorgegebene Frequenzbereich.

Weitere Ausführungsbeispiele schaffen ein Kommunikationssystem mit einem Endpunkt gemäß einem der hierin beschriebenen Ausführungsbeispiele und einer Basisstation gemäß einem der hierin beschriebenen Ausführungsbeispiele.

Weitere Ausführungsbeispiele schaffen ein Verfahren zum Betrieb eines Endpunkts eines Kommunikationssystems, wobei in dem Kommunikationssystem [z.B. eine Basisstation des Kommunikationssystems] zur Koordinierung der Teilnehmer des Kommunikationssystems ein Steuersignal ausgesendet wird, wobei das Steuersignal entsprechend einer durch ein Steuersignalsprungmuster angegebenen frequenzsprungbasierten [z.B. und zeitsprungbasierten] Belegung von Ressourcen des Frequenzbands verteilt übertragen wird, wobei der Endpunkt einen Empfänger aufweist, wobei eine Empfangsbandbreite des Empfängers zumindest um den Faktor 3 kleiner ist als eine Bandbreite der durch das Steuersignalsprungmuster angegebenen frequenzsprungbasierten [z.B. und zeitsprungbasierten] Belegung von Ressourcen des Frequenzbands. Das Verfahren umfasst einen Schritt des Empfangens eines Referenzsignals [z.B. Synchronisationssignal], wobei das Referenzsignal eine Information über das Steuersignal aufweist. Ferner umfasst das Verfahren einen Schritt des Empfangens des Steuersignals basierend auf der Information über das Steuersignal, wobei die Information über das Steuersignal, die das Referenzsignal aufweist, eine Information über das Steuersignalsprungmuster oder eine Information über die vom Kommunikationssystem zur Übertragung des Steuersignals verwendbaren Ressourcen des Frequenzbands aufweist, wobei das Referenzsignal in einem vorgegebenen Frequenzbereich des Frequenzbands übertragen wird, wobei das Referenzsignal eine Mehrzahl von Teil-Referenzdatenpaketen aufweist, die die Information über das Steuersignal enthalten, wobei das Referenzsignal entsprechend eines Referenzsprungmusters übertragen wird, wobei das Referenzsprungmuster eine frequenz- und/oder zeitsprungbasierte Belegung von Ressourcen des vorgegebenen Frequenzbereichs angibt, wobei das Referenzsignal entsprechend des Referenzsprungmusters empfangen wird, um zumindest einen zur Dekodierung ausreichenden Teil der Mehrzahl von Teil-Referenzdatenpaketen zu erhalten.

Weitere Ausführungsbeispiele schaffen ein Verfahren zum Betrieb einer Basisstation eines Kommunikationssystems. Das Verfahren umfasst einen Schritt des Sendens eines Steuersignals zur Koordinierung der Teilnehmer des Kommunikationssystems, wobei das Steuersignal entsprechend einer durch ein Steuersignalsprungmuster angegebenen frequenzsprungbasierten [z.B. und zeitsprungbasierten] Belegung von Ressourcen des Frequenzbands verteilt übertragen wird. Ferner umfasst das Verfahren einen Schritt des Sendens eines Referenzsignals [z.B. Synchronisationssignal], wobei das Referenzsignal eine Information über das Steuersignal aufweist, wobei der vorgegebene Frequenzbereich zumindest um den Faktor 3 kleiner [z.B. schmaler] ist, als ein Frequenzbereich des Frequenzbands, in dem das Steuersignal entsprechend des Steuersprungmusters verteilt übertragen wird, wobei die Information über das Steuersignal, die das Referenzsignal aufweist, eine Information über das Steuersignalsprungmuster oder eine Information über die vom Kommunikationssystem zur Übertragung des Steuersignals verwendbaren Ressourcen des Frequenzbands aufweist, wobei das Referenzsignal mit einer Mehrzahl von Teil-Referenzdatenpaketen versehen ist, die die Information über das Steuersignal enthalten, wobei das Referenzsignal entsprechend eines Referenzsignalsprungmusters gesendet wird, wobei das Referenzsignalsprungmuster eine frequenz- und/oder zeitsprungbasierte Belegung von Ressourcen des vorgegebenen Frequenzbereichs angibt, wobei ein Referenzdatenpaket mit der Information über das Steuersignal auf die Mehrzahl von Teil-Referenzdatenpaketen aufgeteilt ist, so dass jedes der Teil-Referenzdatenpakete nur einen Teil des Referenzdatenpakets aufweist, wobei die Mehrzahl von Teil-Referenzdatenpaketen kanalcodiert sind, so dass nur eine Teilmenge der Mehrzahl von Teil-Referenzdatenpaketen zur erfolgreichen Decodierung des Referenzdatenpakets erforderlich ist.

Bei Ausführungsbeispielen kann vor dem Steuersignal (Bake) ein Referenzsignal bzw. Synchronisationssignal (z.B. mit sog. Sync-(Teil-)Datenpaketen) eingefügt werden, welches von neu anzumeldenden Teilnehmern zur initialen Synchronisation in Zeit und/oder Frequenz eingesetzt werden kann.

Ausführungsbeispiele der vorliegenden Erfindung werden bezugnehmend auf die beiliegenden Figuren näher beschrieben. Es zeigen:

Fig. 1     ein schematisches Blockschaltbild einer Kommunikationsanordnung mit einem ersten Kommunikationssystem,

Fig. 2     ein schematisches Blockschaltbild einer Kommunikationsanordnung von zwei untereinander unkoordinierten Netzwerken mit je einer Basisstation und jeweils vier zugehörigen Endgeräten,

Fig. 3   in einem Diagramm eine Aufteilung des Frequenzbands in Ressourcen sowie eine durch zwei unterschiedliche Kanalzugriffsmuster definierte frequenz- und zeitsprungbasierte Belegung der Ressourcen des Frequenzbands,

Fig. 4   ein schematisches Blockschaltbild eines Kommunikationssystems mit einer Basisstation und einer Mehrzahl von Endpunkten,

Fig. 5   ein schematisches Blockschaltbild eines Controllers zur Erzeugung eines Kanalzugriffsmusters,

Fig. 6   ein schematisches Blockschaltbild eines Controllers zur Erzeugung eines Kanalzugriffsmusters,

Fig. 7   ein schematisches Blockschaltbild eines Ausschnitts des Controllers,

Fig. 8   in einem Diagramm ein auf einer Monte-Carlo-Simulation beruhendes Histogramm über die Variable Δfi,

Fig. 9   in einem Diagramm eine durch ein Kanalzugriffsmuster definierte frequenz- und zeitsprungbasierte Belegung der Ressourcen des Frequenzbands sowie eine Projektion des Kanalzugriffsmusters auf eine Zeitachse,

Fig. 10   in einem Diagramm auf eine Zeitachse projizierte Ressourcenelemente eines Kanalzugriffsmusters, die in ungenutzten Zeitschlitzen resultiert,

Fig. 11   in einem Diagramm auf eine Zeitachse projizierte Ressourcenelemente eines Kanalzugriffsmusters mit einer Aktivitätsrate A=1/4,

Fig. 12   in einem Diagramm auf eine Zeitachse projizierte Ressourcenelemente eines Kanalzugriffsmusters mit einer Aktivitätsrate A=1/4 und einem vorgegebenen Mindestabstand zwischen aufeinander folgenden Zeitschlitzen des Kanalzugriffsmusters,

Fig. 13   eine zeitliche Aufteilung eines Kanalzugriffsmusters 110 in Bereiche unterschiedlicher Aktivitätsrate A1, A2 und A3,

Fig. 14   in einem Diagramm eine durch ein Kanalzugriffsmuster definierte frequenz- und zeitsprungbasierte Belegung der Ressourcen des Frequenzbands, wobei das Kanalzugriffsmuster zusätzlich bei Bedarf aktivierbare Ressourcen aufweist,

Fig. 15   in einem Diagramm eine durch ein Kanalzugriffsmuster definierte frequenz- und zeitsprungbasierte Belegung der Ressourcen des Frequenzbands, wobei ein regelmäßig stärker gestörter Frequenzbereich des Frequenzbands nicht durch das Kanalzugriffsmuster belegt wird,

Fig. 16   in einem Diagramm eine durch ein Kanalzugriffsmuster definierte frequenz- und zeitsprungbasierte Belegung der Ressourcen des Frequenzbands, wobei Ressourcen im Frequenzbereich gebündelt werden,

Fig. 17   ein schematisches Blockschaltbild eines Kommunikationssystems mit einer Basisstation und zwei Endpunkten,

Fig. 18   in einem Diagramm eine durch ein netzwerkspezifisches Kanalzugriffsmuster angegebene frequenz- und zeitsprungbasierte verwendbare Belegung von Ressourcen des Frequenzbands, eine durch ein relatives Kanalzugriffsmuster angegebene für die Übertragung zu verwendende Belegung von Ressourcen aus der verwendbaren Belegung von Ressourcen des netzwerkspezifischen Kanalzugriffsmusters, sowie Projektionen der Kanalzugriffsmuster auf Zeitachsen vor und nach der Entfernung ungenutzter Ressourcen (z.B. Zeitschlitze),

Fig. 19   in einem Diagramm eine durch ein netzwerkspezifisches Kanalzugriffsmuster angegebene frequenz- und zeitsprungbasierte verwendbare Belegung von im Frequenzbereich gebündelten Ressourcen des Frequenzbands, eine durch ein relatives Kanalzugriffsmuster angegebene für die Übertragung zu verwendende Belegung von Ressourcen aus der verwendbaren Belegung von Ressourcen des netzwerkspezifischen Kanalzugriffsmusters, sowie Projektionen der Kanalzugriffsmuster auf Zeitachsen vor und nach Entfernung ungenutzter Ressourcen (z.B. Zeitschlitze),

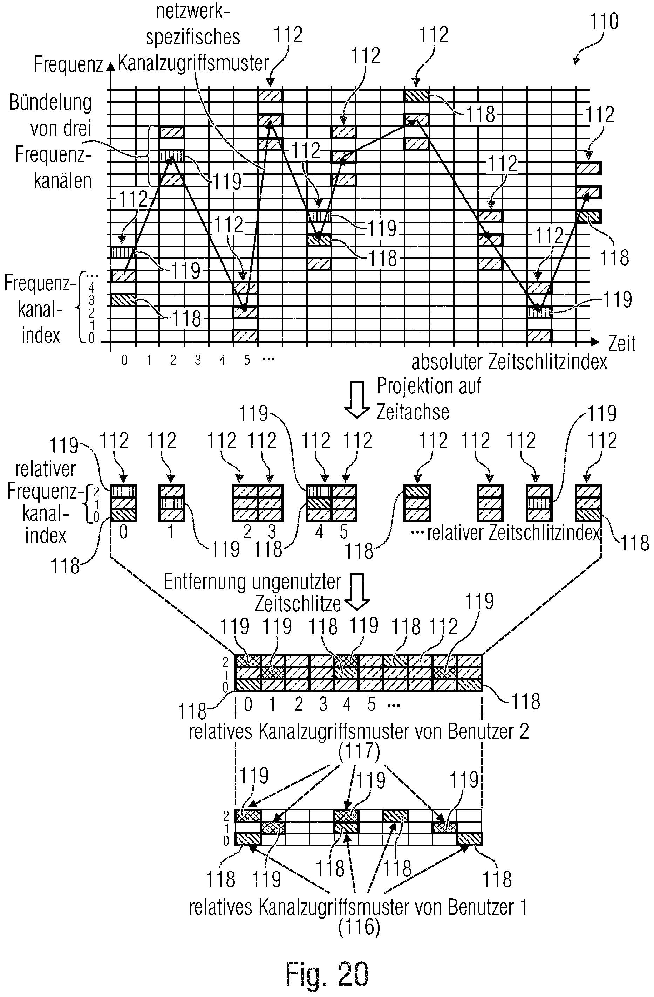

Fig. 20    in einem Diagramm eine durch ein netzwerkspezifisches Kanalzugriffsmuster angegebene frequenz- und zeitsprungbasierte verwendbare Belegung von im Frequenzbereich gebündelten Ressourcen des Frequenzbands, eine durch ein relatives Kanalzugriffsmuster angegebene für die Übertragung zu verwendende Belegung von Ressourcen aus der verwendbaren Belegung von Ressourcen des netzwerkspezifischen Kanalzugriffsmusters, eine durch ein anderes relatives Kanalzugriffsmuster angegebene für die Übertragung zu verwendende Belegung von Ressourcen aus der verwendbaren Belegung von Ressourcen des netzwerkspezifischen Kanalzugriffsmusters, sowie Projektionen der Kanalzugriffsmuster auf Zeitachsen vor und nach Entfernung ungenutzter Ressourcen (z.B. Zeitschlitze),

Fig. 21    in einem Diagramm eine Projektion eines netzwerkspezifischen Kanalzugriffsmusters und eines relativen Kanalzugriffsmusters auf die Zeitachse nach dem Entfernen ungenutzter Ressourcen (z.B. Frequenzkanäle und Zeitschlitze), wobei das relative Kanalzugriffsmuster in Frequenzrichtung für zumindest einen Teil der Zeitsprünge mehrere der in Frequenzrichtung verfügbare Ressourcen belegt,

Fig. 22    in einem Diagramm eine durch ein netzwerkspezifisches Kanalzugriffsmuster angegebene frequenz- und zeitsprungbasierte verwendbare Belegung von im Frequenzbereich zu Blöcken (oder Clustern) gebündelten Ressourcen des Frequenzbands, wobei unterschiedlichen Teilen des Blocks von zusammenhängenden Ressourcen unterschiedliche Symbolraten und/oder unterschiedliche Anzahlen von Symbolen zugeordnet sind,

Fig. 23    in einem Diagramm eine Projektion eines netzwerkspezifischen Kanalzugriffsmusters und eines relativen Kanalzugriffsmusters mit D Ressourcen auf die Zeitachse nach dem Entfernen ungenutzter Ressourcen (Frequenzkanäle und Zeitschlitze),

Fig. 24    in einer Tabelle eine Ressourcenberechnung für verschiedene exemplarische Anwendungsfälle,

Fig. 25    in einem Diagramm Simulationsergebnisse der Paketfehlerrate für verschiedene Kanalzugriffmusterlängen M in Abhängigkeit von der Anzahl gleichzeitig aktiver Endgeräte bei 360 zur Verfügung stehenden Ressourcenelementen,

Fig. 26    in einem Diagramm Simulationsergebnisse der Paketfehlerrate für verschiedene Kanalzugriffmusterlängen M in Abhängigkeit von der Anzahl gleichzeitig aktiver Endgeräte bei 60 zur Verfügung stehenden Ressourcenelementen,

Fig. 27    in einem Diagramm auf eine Zeitachse projizierte Ressourcen eines Kanalzugriffsmusters, wobei Ressourcen des Kanalzugriffsmusters zu Clustern gleicher Länge L (z.B. L=4) gruppiert werden, wobei das relative Kanalzugriffsmuster eine Belegung von einer Ressource pro Cluster angibt,

Fig. 28    ein schematisches Blockschaltbild eines Kommunikationssystems mit einer Basisstation und einem Endpunkt, gemäß einem Ausführungsbeispiel der vorliegenden Erfindung,

Fig. 29    in einem Diagramm eine Belegung von Ressourcen des Frequenzbands bei der Übertragung des Referenzsignals mit einem Referenzdatenpaket sowie eine durch das Steuersignalsprungmuster angegebenen Belegung von Ressourcen des Frequenzbands bei der Übertragung des Steuersignals mit der Mehrzahl von Teil-Steuerdatenpaketen, gemäß einem Ausführungsbeispiel der vorliegenden Erfindung,

Fig. 30    in einem Diagramm eine durch ein Referenzsignalsprungmuster definierte Belegung von Ressourcen des vorgegebenen Frequenzbereichs des Frequenzbands bei der Übertragung des Referenzsignals mit einer Mehrzahl von Teil-Referenzdatenpaketen sowie eine durch ein Steuersignalsprungmuster angegebenen Belegung von Ressourcen des Frequenzbands bei der Übertragung des Steuersignals mit der Mehrzahl von Teil-Steuerdatenpaketen, gemäß einem Ausführungsbeispiel der vorliegenden Erfindung,

Fig. 31    in einem Diagramm eine durch ein Referenzsignalsprungmuster definierte Belegung von Ressourcen des Frequenzbands bei der wiederholten Aussendung des Referenzsignals mit der Mehrzahl von Teil-Referenzdatenpaketen in unterschiedlichen Teilfrequenzbereichen des vorgegebenen Frequenzbereichs sowie eine durch ein Steuersignalsprungmuster angegebene Belegung von Ressourcen des Frequenzbands bei der wiederholten (periodischen) Übertragung des Steuersignals mit der Mehrzahl von Teil-Steuerdatenpaketen, gemäß einem Ausführungsbeispiel der vorliegenden Erfindung,

Fig. 32    in einem Diagramm durch Referenzsignalsprungmuster angegebene Belegungen von Ressourcen des vorgegebenen Frequenzbereichs des Frequenzbands bei der mehrfachen Aussendung des Referenzsignals, so dass die Mehrzahl von Teil-Referenzdatenpaketen der mehrfachen Aussendung des Referenzsignals zeitlich ineinander verschachtelt sind, sowie eine durch ein Steuersignalsprungmuster definierte Belegung von Ressourcen des Frequenzbands bei der Übertragung des Steuersignals mit der Mehrzahl von Teil-Steuerdatenpaketen, gemäß einem Ausführungsbeispiel der vorliegenden Erfindung,

Fig. 33    eine schematische Ansicht eines der Mehrzahl von Teil-Referenzdatenpaketen, gemäß einem Ausführungsbeispiel der vorliegenden Erfindung,

Fig. 34    eine schematische Ansicht der Codierung und Aufteilung der Daten eines Referenzdatenpakets auf eine Mehrzahl von Teil-Referenzdatenpaketen, gemäß einem Ausführungsbeispiel der vorliegenden Erfindung,

Fig. 35    eine schematische Ansicht der Aufteilung von codierten Daten auf eine Mehrzahl von Teil-Referenzdatenpaketen, gemäß einem Ausführungsbeispiel der vorliegenden Erfindung,

Fig. 36    ein Flussdiagramm eines Verfahrens zum Betrieb eines Endpunkts eines Kommunikationssystems, gemäß einem Ausführungsbeispiel der vorliegenden Erfindung, und

Fig. 37    ein Flussdiagramm eines Verfahrens zum Betrieb einer Basisstation eines Kommunikationssystems, gemäß einem Ausführungsbeispiel der vorliegenden Erfindung.

In der nachfolgenden Beschreibung der Ausführungsbeispiele der vorliegenden Erfindung werden in den Figuren gleiche oder gleichwirkende Elemente mit dem gleichen Bezugszeichen versehen, so dass deren Beschreibung untereinander austauschbar ist.

Es wird im Folgenden vorausgesetzt, dass es innerhalb jedes Netzwerks eine koordinierende Instanz (im Folgenden "Basisstation" genannt) sowie nicht-koordinierende Teilnehmer (im Folgenden "Endgeräte" genannt) gibt.

Für den Betrieb von Niedrigenergie-Weitverkehrsnetzwerken (LPWANs) hat sich die Übertragung von Nachrichten in Form des Telegrammaufteilungs-Verfahrens (Telegram Splitting) als besonders vorteilhaft erwiesen. Die Grundzüge dieses Übertragungsprinzips sind beispielhaft in [1], [3], [4] dargestellt. Hierbei wird eine Nachricht (Datenpaket) in eine Vielzahl von Teil-Datenpaketen aufgeteilt und auf unterschiedliche Zeit-/Frequenzressourcen verteilt übertragen. Die Abfolge der Aussendungen der Teil-Datenpakte in Zeit und Frequenz wird als Kanalzugriffsmuster oder Sprungmuster bezeichnet.

Bei Kanalzugriffsverfahren kommt z.B. in LPWAN Netzwerken oftmals ein "konkurrenzbasierter Zugriff" (engl. contention based access) zum Einsatz. Hierbei stehen den Endgeräten keine exklusiv zugewiesenen Ressourcen zu Verfügung, sondern mehrere Endgeräte greifen eigeninitiativ auf ein gemeinsames Angebot an Funkressourcen zu. Dadurch kann es zu Zugriffskonflikten kommen, d.h. zur gleichzeitigen Belegung von Funkressourcen durch zwei oder mehr Teilnehmer. Um die Auswirkung solcher Zugriffskonflikte zu minimieren, steht den Endgeräten ein Vorrat von untereinander unterschiedlichen Kanalzugriffsmustern (Sprungmustern) zur Verfügung.

Diese Kanalzugriffsmuster (oder Parameter von denen sich das Kanalzugriffsmuster ableiten lässt) werden von der koordinierenden Instanz an die Teilnehmer des Netzwerkes typischerweise in einer Bake (engl. Beacon) übermittelt (siehe Abschnitt A).

Um die Störfestigkeit dieser Netzwerke gegenseitig zu minimieren, verwendet jedes Netzwerk in der Regel ein anderes Kanalzugriffsmuster, welches zusätzlich auch zeitabhängig ist.

Neue Teilnehmer, welche einem Netzwerk beitreten wollen, haben zunächst keine Information über das verwendete Kanalzugriffsmuster bzw. den aktuellen Zustand des Kanalzugriffsmusters. Zudem haben sie auf Grund von Quarz Toleranzen kein Wissen über die exakte Frequenzlage des Signals oder das zeitliche Auftreten der Bake. Sie müssen somit eine Vollsuche (in Zeit und Frequenz) nach der Bake durchführen.

Typischerweise belegen Netzwerke die eine Bake nutzen eine relativ hohe Signalbandbreite von mehreren 10 kHz. Da bei typischen Quarztoleranzen von 20ppm das Signal bei einem 1 GHz Träger um wenige 10 kHz verschoben sein kann, ist am Empfänger immer noch ein großer Teil des Signals empfangbar, auch wenn die Frequenzen entsprechend verschoben sind. Dieser Umstand erleichtert es den Frequenzversatz zu kompensieren und benötigt somit nur noch eine Bakensuche über die Zeit.

Wird jedoch ein schmalbandiges System mit geringer Signalbandbreite verwendet, so ist neben der Zeit auch die Frequenz eine unbekannte, da die Signalbandbreite kleiner ist und für eine hohe Empfangsempfindlichkeit das entsprechende Filter vor dem Empfänger auch schmaler ausgelegt ist als der zu erwartende Frequenzversatz. Um eine Vollsuche durchführen zu können, muss der Teilnehmer die Möglichkeit haben, das Spektrum mit einer Bandbreite abzutasten, die mindestens der Signalbandbreite zzgl. der Frequenzversätze entspricht.

Zudem muss der Teilnehmer das entsprechende abgetastete Signal so schnell verarbeiten können, dass in der Zeit in der die Daten verarbeitet werden, die Frequenz- und Zeitversätze, welche durch die Quarztoleranzen entstehen, sich noch nicht so stark ausgewirkt haben, dass eine neue Synchronisation erforderlich ist.

Wird in einer Bake das Frequenz- oder Kanalzugriffsmuster für die nächsten Baken übermittelt, so muss die Datenverarbeitung entsprechend abgeschlossen sein, bevor diese Information ihre Gültigkeit verliert.

Netzwerke die das Telegramsplittingverfahren nutzen, belegen für die einzelne Aussendung eines Teildatenpakets nur eine geringe Bandbreite, da für die Synchronisation aber der Empfang mehrerer Teilsubpakete von Nöten ist, und diese mittels Frequenzsprungverfahren über eine große Bandbreite verteilt werden um die Störanfälligkeit zu verringern, ist es für die Synchronisation mit einem Telegramsplitting Signal weiterhin notwendig, einen großen Frequenzbereich für die initiale Synchronisation zu betrachten.

In kleinen (häufig batteriebetriebenen) (Low-Cost (dt. kostengünstigen)) Teilnehmern steht eine derart hochratige Datenverarbeitung nicht zur Verfügung und auch eine dafür notwendige Empfangsbandbreite kann normalerweise nicht bereitgestellt werden. Somit steht einem (Low-Cost) Teilnehmer nicht die Möglichkeit zur Verfügung sich in einem Netzwerk anzumelden, auch wenn er, wie in Abschnitt B beschrieben, nach der erfolgreichen Anmeldung problemlos im Netzwerk kommunizieren kann.

An diesem Punkt setzen Ausführungsbeispiele der vorliegenden Erfindung an, in dem vor dem Steuersignal (z.B. Baken-Signal) ein Referenzsignal übertragen wird, das von neu anzumeldenden Teilnehmern zur initialen Synchronisation in Zeit und Frequenz eingesetzt werden können.

Bevor Ausführungsbeispiele der vorliegenden Erfindung in Abschnitt C beschrieben werden, die es einem Endpunkt ermöglichen sich in einem Kommunikationssystem anzumelden, welches zur Übertragung von Daten Signale nutzt, die eine wesentlich größere Bandbreite aufweisen als ein Empfänger des Endpunkts gleichzeitig verarbeiten kann, wird zunächst in Abschnitt A erläutert, wie Kommunikationssysteme, die in dem gleichen Frequenzband kommunizieren, durch unterschiedliche Kanalzugriffsmuster voneinander getrennt werden können, und im Anschluss daran in Abschnitt B erläutert, wie ein oder mehrere Teilnehmer eines Kommunikationssystems unter Verwendung eines relativen Kanalzugriffsmusters auf eine Auswahl der durch das netzwerkspezifische Kanalzugriffsmuster für das Kommunikationssystem freigegebene Ressourcen zugreifen können.

## A. Netzwerkspezifische Kanalzugriffsmuster

Die in diesem Abschnitt A und dessen Unterabschnitte folgenden Beispiele sind nicht erfindungsgemäß und dienen lediglich der Veranschaulichung.

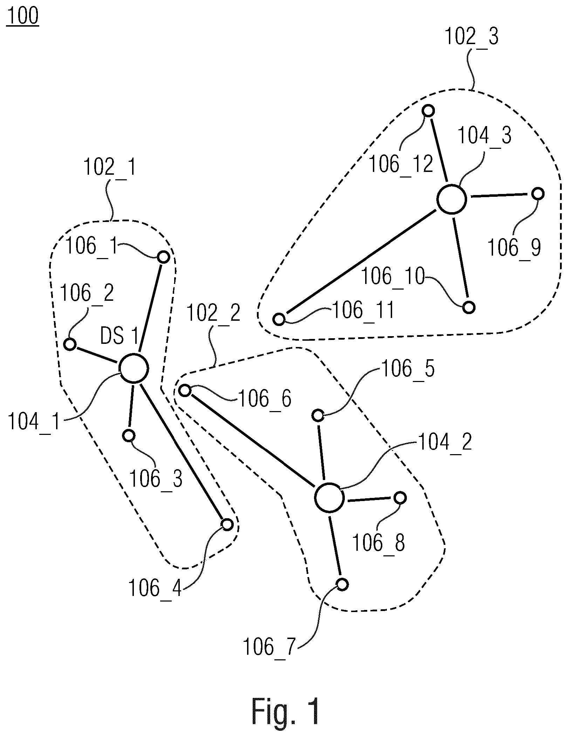

Fig. 1 zeigt ein schematisches Blockschaltbild einer Kommunikationsanordnung 100 mit einem ersten Kommunikationssystem 102_1, gemäß einem Beispiel.

Das erste Kommunikationssystem 102_1 kann eine Basisstation 104_1 und ein oder mehrere Endpunkte 106_1-106_n aufweisen, wobei n eine natürliche Zahl größer gleich eins ist. In dem in Fig. 1 gezeigten Beispiel weist das erste Kommunikationssystem 102_1 zur Veranschaulichung vier Endpunkte 106_1-106_4 auf, das erste Kommunikationssystem 104_1 kann jedoch genauso 1, 10, 100, 1.000, 10.000 oder sogar 100.000 Endpunkte aufweisen.

Das erste Kommunikationssystem 102_1 kann ausgebildet sein, um in einem Frequenzband (z.B. einem lizenzfreien und/oder genehmigungsfreien Frequenzband, z.B. ISM Band), welches von einer Mehrzahl von Kommunikationssystemen zur Kommunikation genutzt wird, drahtlos zu kommunizieren. Das Frequenzband kann dabei eine wesentlich größere (z.B. um zumindest den Faktor zwei größere) Bandbreite aufweisen als Empfangsfilter der Teilnehmer des ersten Kommunikationssystems 102_1.

In Reichweite des ersten Kommunikationssystems 102_1 können - wie dies in Fig. 1 angedeutet ist - beispielsweise ein zweites Kommunikationssystem 102_2 und ein drittes Kommunikationssystem 102_3 sein, wobei diese drei Kommunikationssysteme 102_1, 102_2 und 102_3 das gleiche Frequenzband zur drahtlosen Kommunikation nutzen können.

Das erste Kommunikationssystem 102_1 kann ausgebildet sein, um basierend auf einem Kanalzugriffsmuster unterschiedliche Frequenzen oder Frequenzkanäle des Frequenzbands (z.B. in die das Frequenzband unterteilt ist) abschnittsweise (z.B. zeitschlitzweise) für die Kommunikation zu nutzen, unabhängig davon ob diese von einem anderen Kommunikationssystem (z.B. dem zweiten Kommunikationssystem 102_2 und/oder dem dritten Kommunikationssystem 102_3) verwendet werden, wobei sich das Kanalzugriffsmuster von einem anderen Kanalzugriffsmuster, basierend auf dem zumindest ein anderes Kommunikationssystem der Mehrzahl von anderen Kommunikationssystemen (z.B. dem zweiten Kommunikationssystem 102_2) auf das Frequenzband zugreift, unterscheidet.

In einer solchen Kommunikationsanordnung 100, wie sie in Fig. 1 gezeigt ist, können die Signale untereinander unkoordinierter Kommunikationssysteme (z.B. das erste Kommunikationssystem 102_1 und das zweite Kommunikationssystem 102_2) somit durch unterschiedliche Kanalzugriffsmuster voneinander getrennt werden, so dass eine wechselseitige Störung durch Interferenzen vermieden oder minimiert wird.

Beispielsweise können Teilnehmer des ersten Kommunikationssystems 102_1, wie z.B. eine Basisstation 104_1 und mehrere Endpunkte 106_1-106_4, basierend auf einem ersten Kanalzugriffsmuster (z.B. welches eine für die Kommunikation des ersten Kommunikationssystems 102_1 verwendbare frequenzsprungbasierte Belegung (z.B. von Ressourcen) des Frequenzbands angibt) drahtlos untereinander kommunizieren, während Teilnehmer des zweiten Kommunikationssystems 102_2, wie z.B. eine Basisstation 104_2 und mehrere Endpunkte 106_5-106_8, basierend auf einem zweiten Kanalzugriffsmuster (z.B. welches eine für die Kommunikation des zweiten Kommunikationssystems 102_2 verwendbare frequenzsprungbasierte Belegung (z.B. von Ressourcen) des Frequenzbands angibt) drahtlos untereinander kommunizieren, wobei das erste Kanalzugriffsmuster und das zweite Kanalzugriffsmuster unterschiedlich sind (z.B. eine Überlappung in den verwendeten Ressourcen von weniger als 20% aufweisen, im Idealfall keine Überlappung aufweisen).

Wie bereits erwähnt, sind die Kommunikationssysteme (z.B. das erste Kommunikationssystem 102_1 und das zweite Kommunikationssystem 102_2) untereinander unkoordiniert.

Dass die Kommunikationssysteme 102_1, 102_2, 102_3 untereinander unkoordiniert sind, bezieht sich hierin darauf, dass die Kommunikationssysteme untereinander (= zwischen den Kommunikationssystemen) keine Information über das jeweils verwendete Kanalzugriffsmuster austauschen, oder mit anderen Worten, dass ein Kommunikationssystem keine Kenntnis über das von einem anderen Kommunikationssystem verwendete Kanalzugriffsmuster hat. Dem ersten Kommunikationssystem 102_1 ist somit nicht bekannt, welches Kanalzugriffsmuster von einem anderen Kommunikationssystem (z.B. dem zweiten Kommunikationssystem 102_2) verwendet wird.

Beispiele beziehen sich somit auf eine Kommunikationsanordnung 100 von untereinander unkoordinierten und ggf. untereinander auch unsynchronisierten Funknetzwerken (oder Kommunikationssystemen) 102_1, 102_2 zur Datenübertragung, die auf ein gemeinsam genutztes Frequenzband zugreifen. Mit anderen Worten, es gibt zumindest zwei Funknetzwerke 102_1, 102_2, welche jeweils unabhängig voneinander arbeiten. Beide Netzwerke 102_1, 102_2 setzen dabei das gleiche Frequenzband ein.

Bei Beispielen wird davon ausgegangen, dass bei jeder einzelnen Datenübertragung jeweils nur ein (kleiner) Teil des Frequenzbandes genutzt wird, wie z.B. ein Frequenzkanal oder ein Teilfrequenzkanal. Beispielsweise kann das Frequenzband in (Teil-)Frequenzkanäle zerlegt werden, wobei ein Frequenzkanal eine echte Teilmenge des gesamten Frequenzbandes ist. Die Gesamtheit aller zur Verfügung stehenden Frequenzkanäle konstituiert dabei das genutzte Frequenzband. Die Übertragung einer Nachricht (Datenpaket) kann z.B. im Telegram-Splitting-Verfahren nacheinander über eine Folge unterschiedlicher Frequenzkanäle erfolgen. In diesem Falle sind Beispiele von besonderem Nutzen.

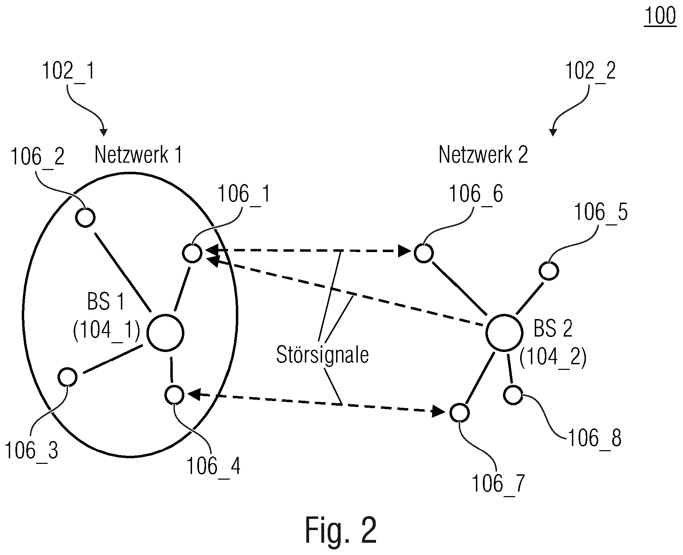

Oftmals sind Netzwerke (oder Kommunikationssysteme) 102_1, 102_2 örtlich so angeordnet, dass Sendesignale von Teilnehmern eines Netzwerks (z.B. des Kommunikationssystems 102_2) auch von Teilnehmern anderer, in der Nähe befindlicher Netzwerke (z.B. des Kommunikationssystems 102_1) empfangbar sind. Mithin treten sie dort als Störsignale (Interferenzen) auf, welche die Leistungsfähigkeit eines Funkübertragungssystems grundsätzlich erheblich beeinträchtigen können, wie dies in Fig. 2 gezeigt ist.

Im Detail zeigt Fig. 2 eine schematische Ansicht von zwei untereinander unkoordinierten Netzwerken 102_1, 102_2 mit je einer Basisstation (BS 1) 104_1, (BS 2) 104_2 und jeweils vier zugehörigen Endgeräten 106_1-106_4, 106_5-106_8. Mit anderen Worten, Fig. 2 zeigt eine beispielhafte Netzwerktopologie für zwei Netzwerke 102_1, 102_2 mit Basisstationen (BS 1) 104_1, (BS 2) 104_2 sowie jeweils vier Endgeräten 106_1-106_4, 106_5-106_8. Die rot gestrichelten Pfeile 108 symbolisieren exemplarisch potentielle Störsignale, d.h. die Funkteilnehmer können die Sendesignale der Teilnehmer aus dem jeweils anderen Netzwerk als Störsignale empfangen. Je nach Gegebenheit kann eine Vielzahl von Netzwerken untereinander in Empfangsreichweite sein, sodass die Teilenehmer (Basisstationen oder Endgeräte) ggf. einer erheblichen Zahl von Störern aus anderen Netzwerken ausgesetzt sein können.

Wird (wie oben erwähnt) das Frequenzband als gemeinsam genutzte Ressource in einzelne, nichtüberlappende Frequenzkanäle unterteilt, so kann die Auswirkung der Störsignale signifikant reduziert werden. In untereinander koordinierten Netzwerken kann jedem Netzwerk ein Teil des Frequenzbands (eine Menge an Frequenzkanälen) exklusiv zugeordnet werden, sodass die wechselseitige Störung (Interferenz) minimiert werden kann. In gänzlich unkoordinierten Netzwerken ist dies nicht möglich.

Bei Beispielen wird daher der Zugriff auf das physikalische Übertragungsmedium (d.h. den physikalischen Funkkanal) in jedem Netzwerk so ausgestaltet, dass zumindest eins aus

a) der Kanalzugriff, d.h. die Frequenz- und Zeitbelegung des Funkkanals, in einem Netzwerk, möglichst wenig Überlappung in Zeit und Frequenz mit dem Kanalzugriff in anderen Netzwerken desselben Standards hat (hoher Grad an "Orthogonalität"),

b) der Kanalzugriff innerhalb gewünschter Vorgaben (z.B. mittlere Zugriffshäufigkeit pro Zeit) einen (pseudo-)zufälligen Charakter hat ("Zufälligkeit"),

c) soweit nach den Vorgaben vermeidbar zwischen Netzwerken keine längeren Sequenzen von (in Zeit und Frequenz) identischem Kanalzugriff auftreten ("Vermeidung systematischer Überlappungen"),

d) alle Frequenzkanäle innerhalb des Frequenzbandes möglichst gleichmäßig genutzt werden, um eine möglichst hohe Frequenzdiversität sowie ggf. die Einhaltung behördlicher, regulatorischer Vorgaben zu erzielen ("Gleichverteilung der Frequenzkanalnutzung"),

e) die Information über Frequenz- und Zeitbelegung des Funkkanals z.B. für zu einem Netzwerk neu hinzukommende Teilnehmer mit möglichst geringem Signalisierungsaufwand übermittelt werden kann ("Reduzierung von Signalisierungsinformation"),

erfüllt ist.

Vereinfacht ausgedrückt wird bei Beispielen eine wechselseitige Störung zwischen mehreren Netzwerken (Inter-Netzwerk-Interferenz) dadurch reduziert, dass der Kanalzugriff auf das gemeinsam genutzte Frequenzband in Frequenz und Zeit unterschiedlich, bevorzugt möglichst "orthogonal" und mit (pseudo-)zufälligem Charakter, erfolgt.

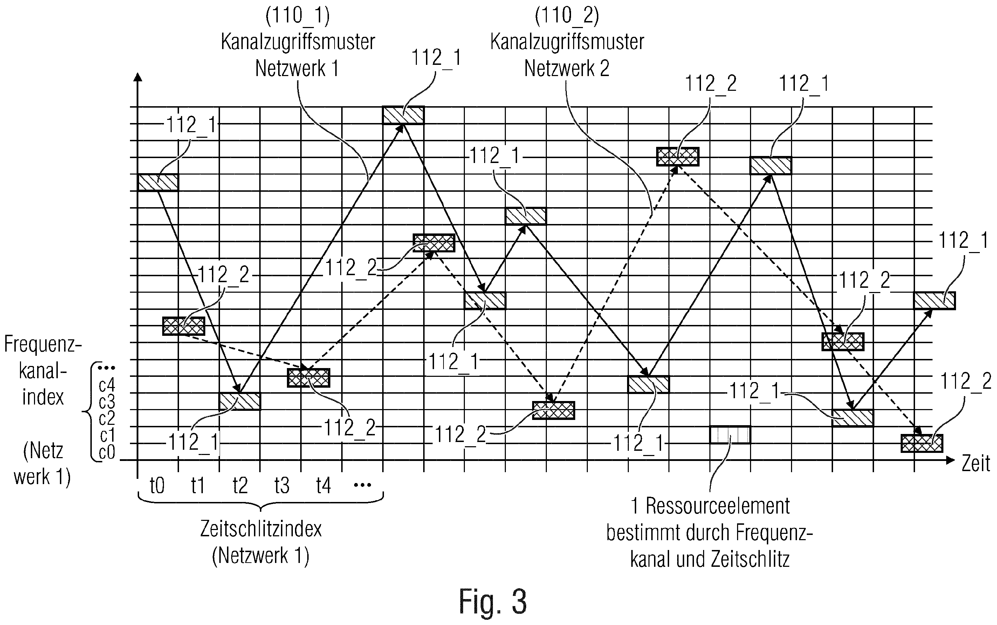

Im Folgenden wird zur Veranschaulichung davon ausgegangen, dass neben der Aufteilung des Frequenzbandes in diskrete Frequenzkanäle (Indizes c0, c1, c2,...) auch eine zeitliche Diskretisierung der Zugriffe innerhalb eines jeden Netzwerks erfolgt. Die zugehörigen zeitlichen Ressourcen werden als Zeitschlitze (engl. Timeslots) bezeichnet und sind in Fig. 3 mit den Indizes t0, t1, t2,... versehen. Beide Anforderungen (Diskretisierung in Frequenz und Zeit) sind jedoch nicht notwendige Voraussetzungen für die Anwendung von Beispielen.

Im Detail zeigt Fig. 3 in einem Diagramm eine Aufteilung des Frequenzbands in Ressourcen sowie eine durch zwei unterschiedliche Kanalzugriffsmuster definierte frequenz- und zeitsprungbasierte Belegung der Ressourcen des Frequenzbands. Dabei beschreibt die Ordinate die Frequenzkanalindizes und die Abszisse die Zeitschlitzindizes.

Beispielsweise können Teilnehmer des ersten Kommunikationssystems 102_1 basierend auf dem ersten Kanalzugriffsmuster 110_1, welches eine für die Kommunikation des ersten Kommunikationssystems 102_1 verwendbare frequenzsprungbasierte Belegung von Ressourcen des Frequenzbands angibt, drahtlos untereinander kommunizieren, während Teilnehmer des zweiten Kommunikationssystems 102_2 basierend auf dem zweiten Kanalzugriffsmuster 110_2, welches eine für die Kommunikation des zweiten Kommunikationssystems 102_2 verwendbare frequenzsprungbasierte Belegung von Ressourcen des Frequenzbands angibt, drahtlos untereinander kommunizieren, wobei das erste Kanalzugriffsmuster und das zweite Kanalzugriffsmuster unterschiedlich sind (z.B. eine Überlappung von weniger als 20% aufweisen, im Idealfall keine Überlappung aufweisen).

Mit anderen Worten, Fig. 3 zeigt in Form eines Gitterrasters eine Übersicht aller grundsätzlich verfügbaren Ressourcen in Frequenz und Zeit (schematische Darstellung der Frequenzkanäle und Zeitschlitze sowie beispielhafte Kanalzugriffsmuster), wobei ein einzelnes Ressourcenelement im ersten Kommunikationsnetzwerk 102_1 durch Zuordnung eines Frequenzkanalindex und eines Zeitschlitzindex bestimmt ist. Beispielhaft sind die durch das erste Kommunikationsnetzwerk 102_1 belegbaren Ressourcen die mit Bezugszeichen 112_1 gekennzeichneten Ressourcenelemente. Die Menge aller innerhalb eines Kommunikationsnetzwerks belegbaren Ressourcen stellt ein Kanalzugriffsmuster 110_1 dar. Für das erste Kommunikationsnetzwerk 102_1 sind dies alle durch Bezugszeichen 112_1 gekennzeichnete Ressourcenelemente, die durch Pfeile verbunden sind. In äquivalenter Weise ist das Kanalzugriffsmuster eines weiteren Kommunikationsnetzwerks (z.B. des zweiten Kommunikationsnetzwerks 102_2) in Fig. 3 beispielhaft eingetragen (alle durch Bezugszeichen 112_2 gekennzeichneten Ressourcenelemente, die durch Pfeile verbunden sind), welches nicht im selben Frequenz- und Zeitraster wie das erste Kommunikationsnetzwerk 102_1 verankert ist (Ressourcenelemente sind in Frequenz und Zeit aus dem Grundraster vom ersten Kommunikationsnetzwerk 102_1 verschoben).

Wichtig ist die Unterscheidung zwischen

- allen grundsätzlich (maximal) verfügbaren Ressourcenelementen, d.h. die Gesamtmenge aller Ressourcenelemente, aus denen das Kanalzugriffsmuster eine geeignete Untermenge auswählt (in Fig. 3 z.B. alle Elemente des Gitternetzes),
- allen in das Kanalzugriffsmuster tatsächlich aufgenommenen Ressourcenelementen (in Fig. 3 alle mit Bezugszeichen 112_1 versehenen Ressourcenelemente) und
- der Menge an Ressourcenelementen (des Kanalzugriffsmusters), die im Netzwerk tatsächlich für eine Datenübertragung belegt werden (es könnte bei geringem Datenaufkommen z.B. nur jedes dritte im Kanalzugriffsmuster vorhandene Ressourcenelement tatsächlich genutzt werden).

Die Gestaltung des Kanalzugriffsmusters bedeutet somit auch eine Festlegung des aktiv nutzbaren Ressourcenvorrats für dieses Kommunikationsnetzwerk (oder Kommunikationssystems).

Im Folgenden werden Beispiele von Basisstationen, Endpunkten und/oder Kommunikationssystemen beschrieben, die zur Kommunikation Kanalzugriffsmuster nutzten, die zumindest eines der oben genannten Kriterien a) bis e) erfüllen. Ferner werden im Folgenden Beispiele der Erzeugung solcher Kanalzugriffsmuster beschrieben.

**A.1. Basisstation, Endpunkt und Kommunikationssystem**

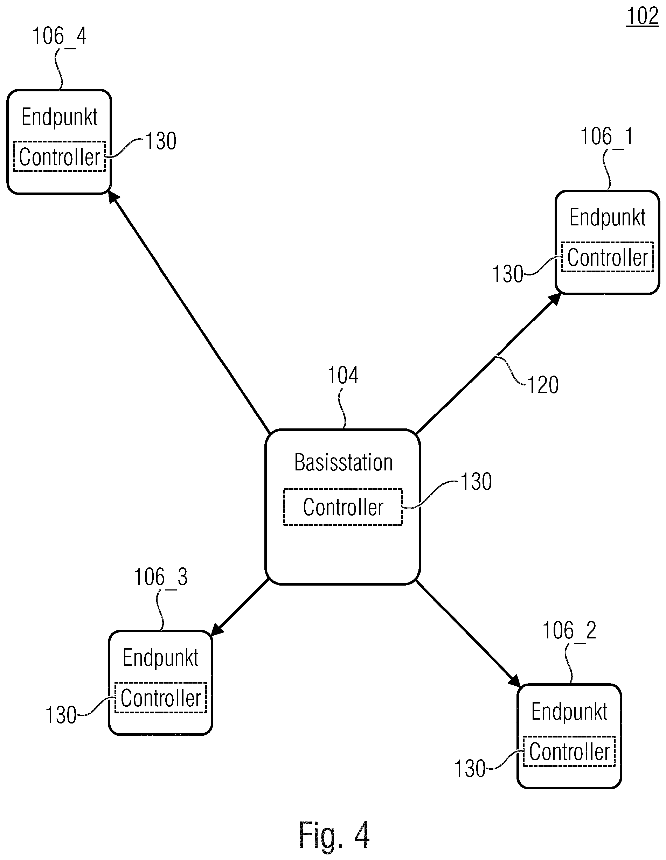

Fig. 4 zeigt ein schematisches Blockschaltbild eines Kommunikationssystems 102 mit einer Basisstation 104 und einer Mehrzahl von Endpunkten 106_1-106_4, gemäß einem Beispiel.

Wie in Fig. 4 gem. einem Beispiel gezeigt ist, kann das Kommunikationssystem 102 eine Basisstation und vier Endpunkte 106_1-106_4 aufweisen. Das Kommunikationssystem ist jedoch nicht auf solche Beispiele beschränkt, vielmehr kann das Kommunikationssystem ein oder mehrere Endpunkte 106_1-106_n aufweisen, wobei n eine natürliche Zahl größer gleich eins ist. Beispielsweise kann das Kommunikationssystem 1, 10, 100, 1.000, 10.000 oder sogar 100.000 Endpunkte aufweisen.

Die Teilnehmer (= Basisstation 104 und Endpunkte 106_1-106_4) des in Fig. 4 gezeigten Kommunikationssystems nutzen zur gegenseitigen Kommunikation ein Frequenzband (z.B. ein lizenzfreies und/oder genehmigungsfreies Frequenzband, z.B. ISM Band), welches von einer Mehrzahl von Kommunikationssystemen zur Kommunikation genutzt wird, wie dies oben in Bezug auf die Fig. 1 bis 3 erläutert wird. Das Kommunikationssystem 102 arbeitet dabei unkoordiniert in Bezug auf die anderen Kommunikationssysteme, die das gleiche Frequenzband nutzen.

Die Basisstation 104 kann ausgebildet sein, um ein Signal 120 zu senden, wobei das Signal 120 eine Information über ein Kanalzugriffsmuster 110 aufweist, wobei das Kanalzugriffsmuster eine für die Kommunikation des Kommunikationssystems 102 verwendbare frequenz- und/oder zeitsprungbasierte Belegung (z.B. von Ressourcen) des Frequenzbands angibt (z.B. eine zeitliche Abfolge von für die Kommunikation des Kommunikationssystems verwendbaren (z.B. über das Frequenzband verteilten) Frequenzressourcen), wobei die Information einen Zustand eines Zahlenfolgengenerators zur Erzeugung einer Zahlenfolge beschreibt, wobei die Zahlenfolge das Kanalzugriffsmuster bestimmt.

Beispielsweise kann der Zustand des Zahlenfolgengenerators ein innerer Zustand des Zahlenfolgengenerators sein, wobei von dem inneren Zustand des Zahlenfolgengenerators eine Zahl der Zahlenfolge abgeleitet werden kann. Basierend auf dem inneren Zustand des Zahlenfolgengenerators können auch auf den inneren Zustand des Zahlenfolgengenerators folgende innere Zustände des Zahlenfolgengenerators ermittelt werden, von denen auch folgende Zahlen der Zahlenfolge abgeleitet werden können. Beispielsweise kann die Zahl der Zahlenfolge direkt von dem inneren Zustand des Zahlenfolgengenerators abgeleitet werden (z.B. Zustand = Zahl), z.B. bei der Implementierung des Zahlenfolgengenerators als Zähler, oder aber über eine Abbildungsfunktion, z.B. bei der Implementierung des Zahlenfolgengenerators als Schieberegister, ggf. mit Rückkoppelung.

Zumindest einer der Endpunkte 106_1-106_4 kann ausgebildet sein, um das Signal 120 mit der Information über das Kanalzugriffsmuster 110 zu empfangen, und um das Kanalzugriffsmuster 110 basierend auf der Information über das Kanalzugriffsmuster zu ermitteln, wobei die Information einen Zustand eines Zahlenfolgengenerators zur Erzeugung einer Zahlenfolge beschreibt, wobei die Zahlenfolge das Kanalzugriffsmuster bestimmt.

Beispielsweise kann die Basisstation 104 und/oder zumindest einer der Endpunkte 106_1-106_4 ausgebildet sein, um das Kanalzugriffsmuster in Abhängigkeit von dem Zustand des Zahlenfolgengenerators pseudozufällig zu ermitteln, wie z.B. unter Verwendung einer pseudozufälligen Abbildungsfunktion.

Ferner kann die Basisstation 104 und/oder zumindest einer der Endpunkte 106_1-106_4 ausgebildet sein, um das Kanalzugriffsmuster in Abhängigkeit von einer individuellen Information des Kommunikationssystems (z.B. einer immanenten Information des Kommunikationssystems, wie z.B. einem netzwerkspezifischen Identifikator) pseudozufällig zu ermitteln.

Im Folgenden werden Beispiele der Erzeugung von Kanalzugriffsmustern beschrieben. Die Kanalzugriffsmuster werden hierbei durch die Basisstation 104 erzeugt und können basierend auf dem Signal mit der Information 120 über das Kanalzugriffsmuster von zumindest einem (oder allen) der in Fig. 4 gezeigten Endpunkte 106_1-106_4 ermittelt werden, beispielsweise durch jeweils einen Controller (Steuergerät, Steuereinheit) 130, der in die Basisstation 104 und/oder in die Endpunkte 106_1-106_4 implementiert ist. Die Vorgabe der Kanalzugriffsmuster erfolgt hierbei (ausschließlich) durch die Basisstation 104, während die Endpunkte 106_1-106_4 das Kanalzugriffsmuster nur "kennen", also nach derselben Methode generieren wie die Basisstation 104.

Dabei wird in der folgenden Beschreibung von einem Funkübertragungssystem (oder einer Kommunikationsanordnung) mit mehreren unabhängigen, untereinander unkoordinierten Kommunikationsnetzwerken ausgegangen, deren Teilnehmer wechselseitig in Empfangsreichweite sind, sodass Sendesignale von Teilnehmern eines Netzwerks potentiell als Störsignale für Teilnehmer anderer Netzwerke in Betracht kommen. Für die Anwendung von Beispielen ist es nicht nötig, dass Information (Daten oder Signalisierungsinformation) zwischen unterschiedlichen Netzwerken ausgetauscht wird. Ebenso ist es unerheblich, ob die Netzwerke untereinander zeitlich und/oder in der Frequenz synchronisiert sind.

Ferner wird vorausgesetzt, dass es innerhalb jedes Netzwerks eine koordinierende Instanz gibt (im Folgenden "Basisstation" genannt), welche den nicht-koordinierenden Teilnehmern des Netzwerks (im Folgenden "Endgeräte" oder "Endpunkte" genannt) Information über das innerhalb des Netzwerks angewandte Kanalzugriffsmuster übermitteln kann.

Diese Information kann z.B. über regelmäßig ausgesendete Baken-Signale (engl. Beacon) übertragen werden, jedoch auch in unregelmäßigen Abständen übertragen werden oder ggf. dediziert an einzelne Endgeräte oder Gruppen von Endgeräten.

Des Weiteren wird davon ausgegangen, dass das gesamte, zur Übertragung zur Verfügung stehende Frequenzband in eine Vielzahl von einzelnen Frequenzkanälen unterteilt ist, auf die jeweils einzeln oder in Teilmengen (Gruppen von Frequenzkanälen) zugegriffen werden kann.

Ohne Einschränkung der Allgemeinheit und zur besseren Veranschaulichung wird in den folgenden Ausführungen davon ausgegangen, dass innerhalb jedes Netzwerks ein festes, diskretes Zeitraster existiert, zu welchem Kanalzugriffe erfolgen können (siehe auch Fig. 3). Ein Kanalzugriff in Form von Aussendung eines Signals kann sowohl durch Endgeräte als auch durch die Basisstation erfolgen. Ein Kanalzugriff muss jedoch in einer im Kanalzugriffsmuster dafür vorgesehenen Ressource nicht notwendigerweise erfolgen, falls z.B. keine Daten oder sonstigen Informationen zur Übertragung anstehen.

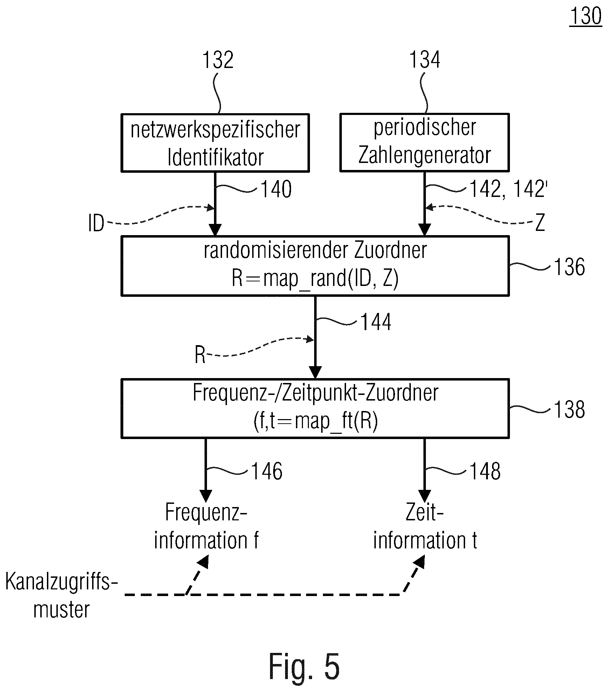

Fig. 5 zeigt ein schematisches Blockschaltbild eines Controllers 130 zur Erzeugung eines Kanalzugriffsmusters, gemäß einem Beispiel.

Wie in Fig. 5 zu erkennen ist, kann der Controller 130 einen Speicher 132, einen periodischen Zahlengenerator 134 zur Erzeugung einer periodischen Zahlenfolge Z, einen randomisierenden Zuordner 136 und einen Frequenz-/Zeitpunkt-Zuordner 138 aufweisen.

Der Speicher (z.B. ein Register) 132 kann ausgebildet sein, um einen netzwerkspezifischen Identifikator ID 140, z.B. eine (individuelle) Bitsequenz, die sich nicht ändert, vorzuhalten. Der periodische Zahlengenerator 134 kann ausgebildet sein, um seinen Zustand 142 oder eine von seinem Zustand abgeleitete Zahl 142' der periodischen Zahlenfolge bereitzustellen. Der randomisierende Zuordner 136 kann ausgebildet sein, um in Abhängigkeit von dem Zustand 142 des Zahlenfolgengenerators 134 oder der davon abgleiten Zahl 142' der periodischen Zahlenfolge und des netzwerkspezifischen Identifikators ID 140 eine Pseudozufallszahl R 144 zu ermitteln. Der Frequenz-/Zeitpunkt-Zuordner 138 kann ausgebildet sein, um basierend auf der Pseudozufallszahl R 144 eine Frequenzinformation f 146 und eine Zeitinformation t 148 zu ermitteln. Beispielsweise können die Frequenzinformation f 146 und die Zeitinformation t 148 einen Frequenzkanal und einen Zeitschlitz (oder einen Frequenzkanalindex und einen Zeitschlitzindex) und somit eine Ressource des Kanalzugriffsmusters beschreiben bzw. definieren.

Der Controller 130 kann beispielsweise - wie dies in Fig. 4 angedeutet ist - in der Basisstation 104 und/oder in dem einen oder den mehreren Endpunkt(en) 106_1-106-4 implementiert sein, um das von dem Kommunikationssystem 102 verwendete individuelle (oder Netzwerkindividuelle) Kanalzugriffsmuster zu berechnen.

Mit anderen Worten, Fig. 5 zeigt die Grundstruktur zur Erzeugung von Kanalzugriffsmustern, gemäß einem Beispiel.

Die Erzeugung der Kanalzugriffsmuster erfolgt iterativ, d.h. die in Fig. 5 dargestellten Blöcke werden einmal pro Erzeugung einer einzelnen Kanalzugriffsinformation aufgerufen. Durch N-maligen Aufruf wird somit ein Kanalzugriffsmuster mit N Kanalzugriffen generiert.

Die Funktion der Teilblöcke wird im Folgenden im Detail erläutert. Es wird der Begriff "Zahl" verwendet. Dabei handelt es sich allgemein um diskrete Information, welche in unterschiedlicher Darstellung (z.B. in dezimaler Form, als binäre Sequenz o.Ä.) vorliegen kann.

Netzwerkspezifischer Identifikator "ID"

Beim netzwerkspezifischen Identifikator handelt es sich um eine feste Zahl, die von einer äußeren Instanz (z.B. bei Konfiguration des Netzwerks bzw. der koordinierenden Basisstation) festgelegt wird. Idealerweise ist sie von Netzwerk zu Netzwerk unterschiedlich. Beispielsweise könnte es sich um eine eindeutige, hinreichend lange Basisstations-ID, eindeutige Netzwerk-ID oder jeweils einen hinreichend langen Hash darüber handeln. Diese Größe ist fest und variiert als einzige in der gezeigten Anordnung nicht von Aufruf zu Aufruf.

Periodischer Zahlengenerator "Z"

Der periodische Zahlengenerator 134 generiert eine sich periodisch mit der Periodizität P wiederholende Folge von Zahlen Z. Er besitzt einen inneren Zustand $S_n$, aus dem sich die nächste erzeugte Zahl und der nächste innere Zustand $S_{n+1}$ eindeutig bestimmen lassen. Das entscheidende Merkmal ist, dass sich bereits aus einem einzigen inneren Zustand (welcher zu einem beliebigen Zeitschritt vorliegt) die gesamte periodische Folge für jeden beliebigen Zeitschritt ableiten lässt. Ein einfaches Beispiel ist z.B. ein Modulo-P-Zähler, der periodisch die Zahlenfolge 0,1,2...(P-1) liefert. Ein weiteres Beispiel ist ein deterministischer Zufallszahlengenerator (engl. pseudo random number generator), z.B. implementiert in Form eine rückgekoppelten Schieberegisters (LFSR). Ein drittes Beispiel ist ein endlicher Körper (engl. Galois field) mit P Elementen.

Randomisierender Zuordner

Der randomisierende Zuordner 136 generiert aus den beiden Eingangszahlen ID und Z eine Ausgangszahl R, d.h. *R=map_rand(ID, Z)*, wobei *map_rand die* Zuordnungsfunktion darstellt. Die Zuordnung hat dabei möglichst zufälligen Charakter, d.h. eine mathematisch korrelierte Eingangssequenz (bestehend aus ID, Z) erzeugt eine möglichst in sich unkorrelierte Ausgangssequenz R.

Beispiele für eine randomisierende Zuordnung sind

- Verkettung der beiden Eingangszahlen
- die Anwendung einer zyklischen Redundanzprüfung (engl. cyclic redundancy check, kurz CRC) auf die Eingangsgrößen ID, Z, welche zur Zahl R führt und randomisierenden Charakter hat,
- die Anwendung einer Hash-Funktion
- die Anwendung einer Verschlüsselung, z.B. AES-Verschlüsselung, wobei der zugehörige Schlüssel dabei allen autorisierten Teilnehmern bekannt ist und was somit auch ein Verfahren zur Einbringung von "transport layer security" (kurz TLS) darstellt.

Die Folge der Elemente der Zahl R ist nach obigen Maßgaben pseudozufälliger Natur. Sie sollte von Netzwerk zu Netzwerk unterschiedlich sein, um Überlappungen der Kanalzugriffsmuster möglichst zu vermeiden.

Frequenz-/Zeitpunkt-Zuordner

Der Frequenz-/Zeitpunkt-Zuordner 138 ordnet jeder Eingangszahl R mittels einer Abbildung ein 2-Tupel von Frequenzinformation (Funkfrequenz f) und Zeitinformation (Zugriffszeitpunkt t) zu, d.h. (f,t)=*map*_ft(R), wobei *"map_ft"* die Zuordnungsfunktion darstellt. Während die Abfolge der Frequenzen grundsätzlich beliebig innerhalb des vorgegebenen Frequenzbands sein kann, müssen die Zeitpunkte dabei von Aufruf zu Aufruf in monoton ansteigender Form vorliegen, da "Rücksprünge" in der Zeit nicht zulässig sind.

Von besonderer Bedeutung ist als Beispiel der Fall, dass der Kanalzugriff in Frequenz- und Zeitrichtung (wie weiter oben beschrieben) diskretisiert ist, d.h. in Form von diskreten Frequenzkanälen und diskreten Zeitschlitzen erfolgt. In diesem Fall ordnet der Frequenz-/Zeitpunkt-Zuordner jeder Eingangszahl R ein 2-Tupel von Frequenzkanalindex fi und Zeitschlitzindex ti zu, d.h. (fi,ti)=map_ft(R). Die Zeitschlitze werden dabei in zeitlich aufsteigender Reihenfolge indiziert, da "Rücksprünge" in der Zeit nicht zulässig sind. Weitere Ausführungen zur Belegung der Zeitschlitze finden sich in Abschnitt 3.

Die Abfolge der 2-Tupel (f,t) bzw. (fi, ti) basiert auf der Folge der Elemente von R und definiert das Kanalzugriffsmuster.

Die genaue Gestaltung des Frequenz-/Zeitpunkt-Zuordners bestimmt gemeinsam mit der Wahrscheinlichkeitsfunktion der Zahl R die Zugriffsstatistik auf den Kanal.

Zustandssignalisierung und Prädizierbarkeit

Die in Fig. 5 gezeigte Anordnung generiert ein Kanalzugriffsmuster, welches sowohl von einem zeitlich unveränderlichen, netzwerkspezifischen Identifikator als auch von einem zustandsabhängigen (und damit zeitlich veränderlichen) periodischen Zahlengenerator (Periodizität P) abhängt. Über den netzwerkspezifischen Identifikator kann sichergestellt werden, dass Netzwerke mit unterschiedlichen netzwerkspezifischen Identifikatoren stets unterschiedliche Sequenzen von R generieren, selbst wenn ihr Zahlengenerator sich im gleichen Zustand befinden sollte. Damit kann sichergestellt werden, dass unterschiedliche Netzwerke keine identischen Kanalzugriffsmuster erzeugen und somit im ungünstigsten Fall in eine "Dauerkollision" der Kanalzugriffe geraten.

Ein Endgerät benötigt zur Ermittlung des im Netzwerk angewandten Kanalzugriffsmusters sowohl den netzwerkspezifischen Identifikator als auch den jeweiligen Zustand des periodischen Zahlengenerators.

Den *netzwerkspezifischen Identifikator* erhält das Endgerät bereits bei der Erstanmeldung beim Netzwerk. Dieser wird vorteilhafterweise mittels regelmäßig von der Basisstation ausgesandter Baken-Signale (beacon) übermittelt und allen autorisierten Endgeräten zugänglich gemacht. Alternativ kann der netzwerkspezifische Identifikator dem Endgerät auch im Zuge der Erstkonfiguration (mit Auslieferung) bekannt gemacht werden, somit also vor der ersten Inbetriebnahme im Netzwerk.

Der Zustand des *periodischen Zahlengenerators* kann entweder in einem regelmäßigen Baken-Signal und/oder in eigenen, dedizierten Zustands-Signalisierungs-Ressourcen übermittelt werden. Ein Zahlengenerator mit Periodizität P hat P interne Zustände, sodass zur Übermittlung des jeweiligen Zustands $\lceil \log_2(P) \rceil$ Bits übertragen werden müssen. Die pro Zustandssignalisierung übertragene Informationsmenge (Anzahl der Bits) kann somit durch die gewählte Periodizität des Zahlengenerators nach Anforderung gesteuert werden.

Die für die Zustandssignalisierung übertragene Information kann in Form mehrerer Teilinformationen übertragen werden, wobei die Übertragung in unterschiedlicher Häufigkeit erfolgen kann. So könnten als Beispiel für den Fall, dass es sich bei dem periodischen Zahlengenerator (Z) um einen Zähler handelt, die höherwertigen Bits (engl. most significant bits (MSBs)) des Zählers getrennt von den niederwertigen Bits (engl. least significant bits (LSBs)) übertragen werden und auch mit einer anderen Häufigkeit (z.B. seltener). Auch wenn es sich nicht um einen Zähler handelt, könnte die gesamte Zustandsinformation in Form mehrerer Teil-Zustandsinformationen mit unterschiedlicher Übertragungshäufigkeit übertragen werden.

Durch die Periodizität des Zahlengenerators kann ein Endgerät, welchem der Zustand des Zahlengenerators zu mindestens einem Zeitpunkt bekannt ist, das gesamte Kanalzugriffsmuster für beliebige Zeitpunkte/Zeitschlitze in der Zukunft bestimmen. Damit ist es dem Endgerät möglich, in einem energiesparenden Ruhezustand z.B. die Sende-/Empfangseinheit zu deaktivieren und bei der nachfolgenden Aktivierung der Sende-/Empfangseinheit den dann gültigen Abschnitt des Kanalzugriffsmusters aus dem letzten zuvor bekannten Zustand zu prädizieren. Eine Aussendung der Zustandsinformation durch die Basisstation kann somit in vergleichsweise großen zeitlichen Abständen erfolgen.

Zusammenfassend hat das hierin beschriebene Verfahren den Vorteil, dass durch die Kombination eines netzwerkspezifischen Identifikators und eines periodischen Zahlengenerators ein vergleichsweise großer Zustandsraum für die (Pseudozufalls-)Zahl R aufgespannt wird. Damit wird verhindert, dass die Kanalzugriffsmuster von Netzwerken mit unterschiedlichen netzwerkspezifischen Identifikatoren identisch sind, womit eine systematische Kollision der Kanalzugriffe verschiedener, untereinander unkoordinierter Netzwerk minimiert werden kann. Dies erweist sich beim Telegram-Splitting-Multiple-Access (TSMA) Verfahren als besonders vorteilhaft.

Vorteilhafte Merkmale des Frequenz-Zeit-Zuordners werden in den folgenden Abschnitten detaillierter ausgeführt.

Weiteres Beispiel des Controllers

Gemäß Fig. 5 und obiger Beschreibung wird ein periodischer Zahlengenerator 134 benötigt. Dieser wird im folgenden Beispiel wie folgt ersetzt.

Reale Funknetzwerke werden oftmals mit einem Baken-Signal betrieben, welches regelmäßig ausgesendet wird. Jede Baken-Aussendung kann dabei mit einem Zähler versehen werden, welcher einem Baken-Sequenzindex entspricht. Dieser Baken-Sequenzindex wird hier als "Bakenindex" bezeichnet.

Ebenso ist es gebräuchlich, dass in einem zeitschlitzbasierten System die Zeitschlitze mit einem (in Zeitrichtung aufsteigenden) Zeitschlitzindex-Zähler versehen werden (siehe auch Fig. 3). Dieser wird hier als "Zeitschlitzindex" bezeichnet. Der Bakenindex wird in gewissen, im System vorgegebenen Abständen wieder auf null zurückgesetzt, sodass er eine Periodizität aufweist. Entsprechendes gilt für den Zeitschlitzindex (der z.B. nach einer Baken-Aussendung wieder bei null beginnt).

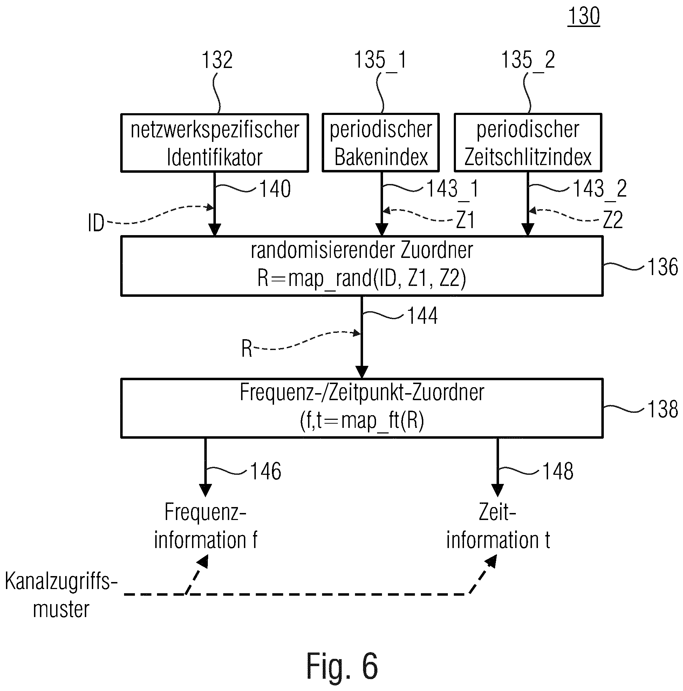

Fig. 6 zeigt ein schematisches Blockschaltbild eines Controllers 130 zur Erzeugung eines Kanalzugriffsmusters, gemäß einem Beispiel.

Der Controller 130 kann einen Speicher 132, einen ersten Zwischenspeicher 135_1, einen zweiten Zwischenspeicher 135_2, einen randomisierenden Zuordner 136 und einen Frequenz-/Zeitpunkt-Zuordner 138 aufweisen.

Der Speicher (z.B. ein Register) 132 kann ausgebildet sein, um einen netzwerkspezifischen Identifikator ID 140, z.B. eine (individuelle) Bitsequenz, die sich nicht ändert, vorzuhalten. Der erste Zwischenspeicher (z.B. ein Register) 135_1 kann ausgebildet sein, um einen periodischen Bakenindex Z1 143_1 vorzuhalten. Der zweite Zwischenspeicher (z.B. ein Register) 135_2 kann ausgebildet sein, um einen periodischen Zeitschlitzindex Z2 143_2 vorzuhalten. Der randomisierende Zuordner 136 kann ausgebildet sein, um in Abhängigkeit von dem periodischen Bakenindex Z1 143_1, dem periodischen Zeitschlitzindex Z2 143_2 und dem netzwerkspezifischen Identifikator ID 140 eine Pseudozufallszahl R 144 zu ermitteln. Der Frequenz-/Zeitpunkt-Zuordner 138 kann ausgebildet sein, um basierend auf der Pseudozufallszahl R 144 eine Frequenzinformation f 146 und eine Zeitinformation t 148 zu ermitteln. Beispielsweise können die Frequenzinformation f 146 und die Zeitinformation t 148 einen Frequenzkanal und einen Zeitschlitz (oder einen Frequenzkanalindex und einen Zeitschlitzindex) und somit eine Ressource des Kanalzugriffsmusters beschreiben bzw. definieren.

Mit anderen Worten, Fig. 6 zeigt eine modifizierte Grundstruktur zur Erzeugung von Kanalzugriffsmustern mit Bakenindex und Zeitschlitzindex. In Fig. 6 ist ein Beispiel dargestellt, in welchem gegenüber dem in Fig. 5 gezeigtem Beispiel der periodische Zahlengenerator (Ausgang Z) 134 durch die beiden Blöcke "periodischer Bakenindex" (Ausgang Z1) 135_1 und "periodischer Zeitschlitzindex" (Ausgang Z2) 135_2 ersetzt wurde. Alle weiteren Blöcke sind funktional unverändert (der Randomisierende Zuordner hat nun drei Eingänge).

Die in Fig. 5 und 6 gezeigten Controller 130 ermöglichen die Erzeugung von Netzwerkindividuellen Kanalzugriffsmustern, wobei diese zumindest eine aus folgenden Eigenschaften aufweisen:

• Die Kanalzugriffsmuster enthalten untereinander möglichst wenige überlappende Teilsequenzen,

- es gibt (z.B. in Bereichen mit hoher Netzwerkdichte) einen großen Vorrat von Kanalzugriffsmustern,
- die Kanalzugriffsmuster sind so gestaltet, dass sie eine sehr hohe Periodizität aufweisen,
- die Kanalzugriffsmuster führen (bei Vorliegen entsprechender Anforderungen) zu einer im Mittel gleichmäßigen Nutzung der zur Verfügung stehenden Frequenzkanäle,
- die Signalisierung des angewandten Musters erfolgt durch die koordinierende Instanz mit möglichst wenig Signalisierungsinformation, und
- Endgeräte können, bereits bei einmaligem, vollständigem Erhalt der Signalisierung des Kanalzugriffsmusters den Inhalt des Kanalzugriffsmusters zu beliebigen, zukünftigen Zeitpunkten bestimmen (dies ermöglicht Endgeräten, z.B. aus Energiespargründen längere Empfangspausen einzulegen und bei Wiedereinschalten dennoch das dann jeweils gültige Kanalzugriffsmuster auf der Basis von vor der Empfangspause erhaltener Information zu ermitteln).

### A.2. Steuerung der Kanalzugriffe im Frequenzbereich

Zur Vereinfachung der folgenden Darstellung wird angenommen, dass der Frequenzbereich (oder das Frequenzband) in diskrete Frequenzkanäle unterteilt ist und dass eine Übertragung nach dem TSMA-Verfahren erfolgt.

Mobilfunkkanäle weisen i.d.R. eine über der Frequenz variierende Signaldämpfung auf. Wird gemäß dem TSMA-Verfahren ein Datenpaket in Form mehrerer Teil-Datenpakete übertragen und ist der zugrundeliegende Mobilfunkkanal im Sender nicht bekannt, so kann die Fehlerrate der Übertragung im Mittel reduziert oder sogar minimiert werden, indem die einzelnen Teil-Datenpakete möglichst über den gesamten Frequenzbereich verteilt übertragen werden (Ausnutzung der Frequenzdiversität).

Aus diesem Grund kann es (insbesondere wenn ein Datenpaket aus nur wenigen Teil-Datenpaketen besteht) vorteilhaft sein, wenn gewährleistet ist, dass die Frequenzkanäle auf denen die Teil-Datenpakete übertragen werden, relativ zueinander einen gewissen (Mindest-)Abstand im Frequenzbereich haben.

Da das Kanalzugriffsmuster innerhalb eines Netzwerks in maßgeblicher Weise das Frequenzsprungverhalten bei TSMA bestimmt, kann mit einem geeigneten Verfahren sichergestellt werden, dass zwischen zwei aufeinanderfolgenden Frequenzkanälen des Kanalzugriffsmusters ein Mindestabstand besteht.

Der Frequenz-/Zeitpunkt-Zuordner 138 (siehe Fig. 5 oder 6) kann daher ausgebildet sein, um basierend auf der Pseudozufallszahl R eine Frequenzinformation f und eine Zeitinformation t zu ermitteln, wobei die Frequenzinformation f einen Abstand zwischen zwei aufeinanderfolgenden Frequenzkanälen angibt.

Der Frequenz-/Zeitpunkt-Zuordner 138 in Fig. 5 oder 6, der auf Basis der pseudozufälligen Zahl R absolute Frequenzkanäle von Zugriff zu Zugriff unabhängig festlegt, kann also alternativ auch Abstände zwischen zwei aufeinanderfolgenden Frequenzkanälen bestimmen.

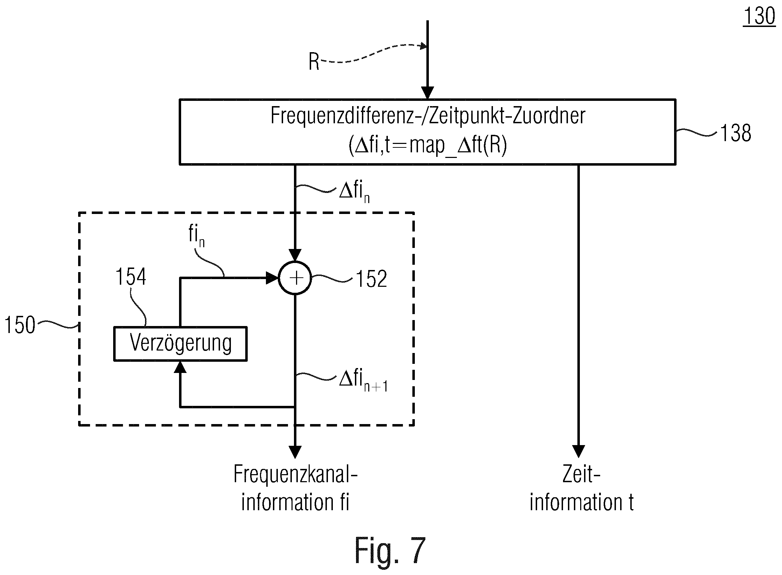

Fig. 7 zeigt ein schematisches Blockschaltbild eines Ausschnitts des Controllers 130, gemäß einem Beispiel. Wie in Fig. 7 zu erkennen ist, kann der Frequenz-/Zeitpunkt-Zuordner 138 (siehe Fig. 5 oder 6) ausgebildet sein, um basierend auf der Pseudozufallszahl R eine Frequenzinformation und eine Zeitinformation zu ermitteln, wobei die Frequenzinformation einen Abstand $\Delta fi_n$ zwischen zwei aufeinanderfolgenden Frequenzkanälen angibt.

Wie in Fig. 7 ferner zu erkennen ist, kann der Controller 130 einen Abbilder 150 aufweisen, der ausgebildet sein kann, um den Abstand $\Delta fi_n$ zwischen zwei aufeinanderfolgenden Frequenzkanälen auf einen Frequenzkanalindex fi abzubilden, beispielsweise durch einen Kombinierer (z.B. Addierer) 152 und ein Verzögerungsglied 154.

Mit anderen Worten, Fig. 7 zeigt die Erzeugung von Frequenzsprüngen mit Mindest- und oder Höchstsprungweite. In Fig. 7 ist dabei veranschaulicht, dass der Frequenz-/Zeitpunkt-Zuordner 138 von Fig. 5 oder 6 nunmehr durch einen Frequenzdifferenz-/Zeitpunkt-Zuordner 138 ersetzt ist, welcher an seinem unmittelbaren Ausgang keine absoluten Frequenzkanalindizes mehr liefert, sondern Frequenzkanalindex-Differenzen.

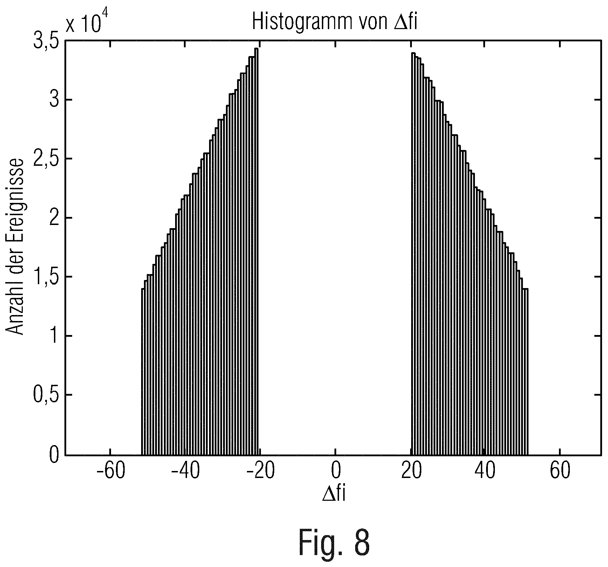

Durch eine geeignete Zuordnungsfunktion $(\Delta fi,t)=map\_\Delta ft(R)$ im Frequenzdifferenz-/Zeitpunkt-Zuordner kann sichergestellt werden, dass nur Frequenzkanalindexsprünge $\Delta fi_n=fi_{n+1}-fi_n$ (von Kanalzugriff n zu Kanalzugriff n+1) erfolgen, welche z.B. innerhalb eines gewünschten Bereichs liegen, z.B. $\Delta fi_{max}\geq\Delta fi\geq\Delta fi_{min}$ für $\Delta fi>0$ und $\Delta fi_{max}\geq(-\Delta fi)\geq\Delta fi_{min}$ für $\Delta fi<0$. Für die Implementierung einer solchen Beschränkung gibt es zahlreiche Verfahren, welche selbst nicht Gegenstand der Erfindung sind. Eine beispielhafte Implementierung in Form eines entsprechenden Programmcodes für MATLAB (mit welchem Fig. 8 erzeugt wurde) findet sich im Anhang.

Fig. 8 zeigt in einem Diagramm ein auf einer Monte-Carlo-Simulation beruhendes Histogramm über die Variable $\Delta fi$ (Differenz des Frequenzkanalindex $\Delta fi$ zwischen zeitl. benachbarten Kanalzugriffen).

Im dargestellten Beispiel stehen 72 Frequenzkanäle zur Verfügung. Die den Simulationsergebnissen zugehörigen Parameter sind $\Delta fi_{min}=21$, $\Delta fi_{max}=51$, d.h. der Betrag des Abstands zwischen zwei im Kanalzugriffsmuster aufeinanderfolgenden Zugriffen beträgt zwischen 21 und 51 Frequenzkanälen.

Durch geeignete, sich dem Fachmann leicht erschließende Modifikationen des beispielhaften Programmcodes lassen sich andere Verteilungsformen für $\Delta fi$ erzeugen (z.B. Gleichverteilung im Bereich von $-\Delta fi_{min}$ bis $-\Delta fi_{max}$ bzw. $+\Delta fi_{min}$ bis $+\Delta fi_{max}$) als in Fig. 8 gezeigt.

**A.3. Vorgabe der zeitlichen Kanalzugriffsaktivität**

In einem hoch ausgelasteten System können alle verfügbaren Zeitschlitze in das Kanalzugriffsmuster mit aufgenommen werden. In weniger stark ausgelasteten Systemen muss nicht jeder Zeitschlitz für den Kanalzugriff zur Verfügung stehen. Dies ist in der folgenden Abbildung dargestellt.

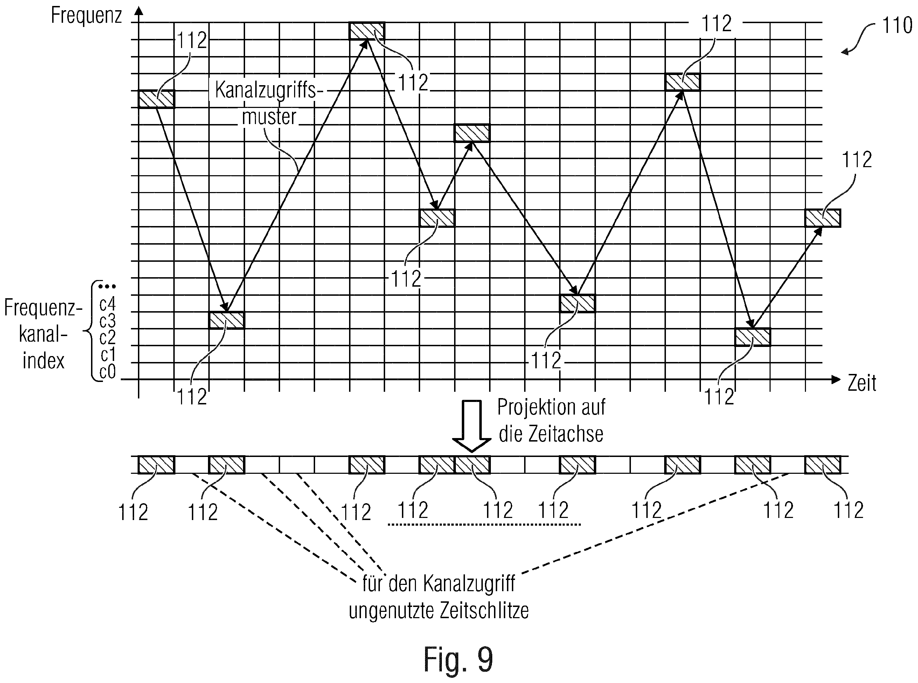

Fig. 9 zeigt in einem Diagramm eine durch ein Kanalzugriffsmuster 110 definierte frequenz- und zeitsprungbasierte Belegung der Ressourcen 112 des Frequenzbands sowie eine Projektion des Kanalzugriffsmusters 110 auf eine Zeitachse, gemäß einem Beispiel. Dabei beschreibt die Ordinate die Frequenzkanalindizes und die Abszisse die Zeitschlitzindizes.

Mit anderen Worten, Fig. 9 zeigt im oberen Teil beispielhaft ein Kanalzugriffsmuster 110 in den Dimensionen Frequenz und Zeit (Ressourcenelemente 112) sowie im unteren Teil dessen Projektion auf die Zeitdimension. Es ist zu erkennen, dass nicht jeder Zeitschlitz Teil des Kanalzugriffsmusters 110 ist.

Damit steht für die Erzeugung eines pseudozufälligen Kanalzugriffsmusters 110 neben der Dimension Frequenz (in Form des Frequenzkanalindex) zusätzlich die Dimension Zeit (in Form des Zeitschlitzindex) zur Verfügung. Bei der Erzeugung eines Kanalzugriffsmusters kann somit eine mittlere Aktivitätsrate A vorgegeben werden. Diese sei hier definiert als mittleres Verhältnis von für den Kanalzugriff genutzten Zeitschlitzen zu insgesamt maximal verfügbaren Zeitschlitzen. Bei Nutzung jedes Zeitschlitzes beträgt die Aktivitätsrate A somit 1 (100%). Wird hingegen im Mittel nur jeder dritte Zeitschlitz ins Kanalzugriffsmuster aufgenommen, so beträgt die mittlere Aktivitätsrate A=1/3.

Die Aktivitätsrate bestimmt also die (zeitliche) Dichte der im Kanalzugriffsmuster 110 angebotenen Ressourcen 112.

Die zu einer vorgegebenen Aktivitätsrate für den Kanalzugriff ausgewählten Zeitschlitze können pseudozufällig aus einem geeigneten Teil der Pseudozufallszahl R (siehe Fig. 5 oder 6) bestimmt werden.

Beispiel 1

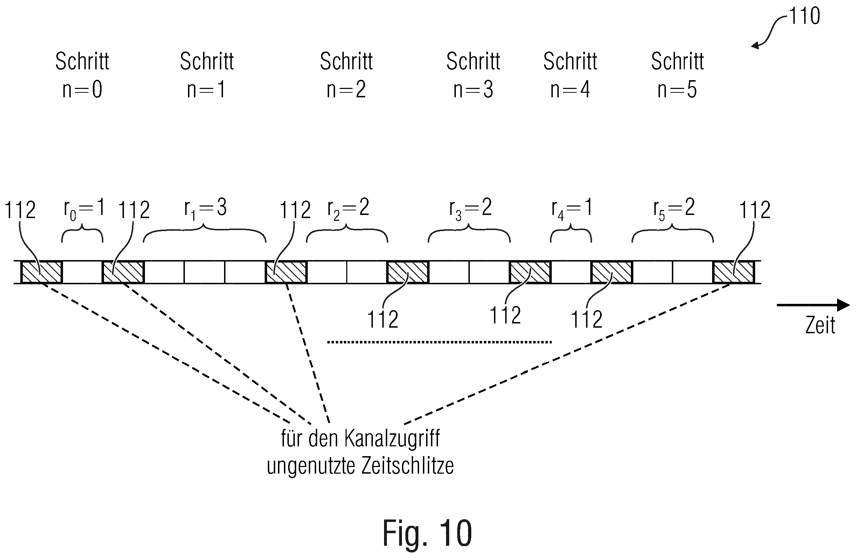

In jedem Schritt n kann aus der zugehörigen Pseudozufallszahl $R_n$ eine ganze Zahl $r_n$ abgeleitet werden, die Werte zwischen $r_{min}$ und $r_{max}$ annehmen kann, d.h. $r_{min} \leq r_n \leq r_{max}$. Nach jedem im Kanalzugriffsmuster 110 aktiven Zeitschlitz kann eine Anzahl von $r_n$ Zeitschlitzen übersprungen werden, diese werden somit nicht für den Kanalzugriff verwendet. Dieser Vorgang ist exemplarisch in Fig. 10 dargestellt.

Im Detail zeigt Fig. 10 in einem Diagramm auf eine Zeitachse projizierte Ressourcenelemente 112 eines Kanalzugriffsmusters 110, die in ungenutzten Zeitschlitzen resultiert, gemäß einem Beispiel.

Mit anderen Worten, Fig. 10 zeigt eine beispielhafte Abfolge von genutzten und ungenutzten Zeitschlitzen, gemäß einem Beispiel.

Wird die Zahl r aus der Zahl R dergestalt abgeleitet, dass die Elemente von r zwischen $r_{min}$ und $r_{max}$ mit gleicher Häufigkeit auftreten (Gleichverteilung), so ergibt sich folgende Aktivitätsrate:

$$A=2/(2+r_{min}+r_{max}).$$

Das im obigen Beispiel vorgestellte Verfahren hat den Vorteil, dass Mindest- und Höchstabstände zwischen den im Kanalzugriffsmuster 110 aktiven Zeitschlitzen vorgegeben werden können. Die Vorgabe von Mindestabständen kann insbesondere bei batteriebetriebenen Geräten vorteilhaft sein, bei denen Sendepausen einer gewissen Mindestlänge zwischen zwei aufeinanderfolgenden Aussendungen (Erholungsphase) die Batterielebensdauer erhöhen.

In vergleichbarer Vorgehensweise lässt sich vorgeben, dass eine Mindestzahl von aktiven Zeitschlitzen direkt aufeinander folgt.

Beispiel 2

Bei einer Implementierung gemäß Beispiel 1 können theoretisch längere Bereiche mit lokal deutlich höherer oder niedrigerer Aktivitätsrate als gewünscht vorkommen. Dieser Effekt wird in dem folgenden Beispiel vermieden.

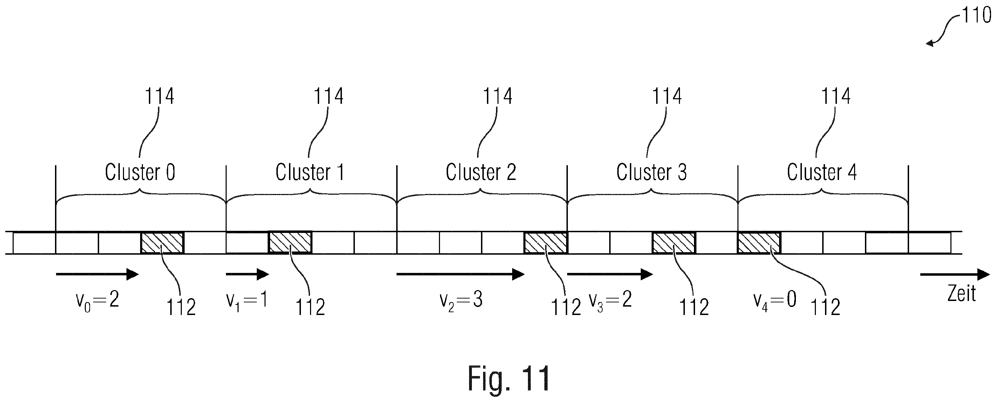

Hierbei werden periodisch Gruppen von aufeinanderfolgenden Zeitschlitzen vorgegeben, innerhalb welcher jeweils ein aktiver Zeitschlitz des Kanalzugriffsmusters platziert wird. Dies ist für eine Aktivitätsrate von 1/4 (25%) in Fig. 11 exemplarisch dargestellt.

Im Detail zeigt Fig. 11 in einem Diagramm auf eine Zeitachse projizierte Ressourcenelemente 112 eines Kanalzugriffsmusters 110 mit einer Aktivitätsrate A=1/4, gemäß einem Beispiel.

Mit anderen Worten, Fig. 11 zeigt eine beispielhafte Abfolge von genutzten und ungenutzten Zeitschlitzen, gemäß einem Beispiel.

Wie in Fig. 11 zu erkennen ist, können die Zeitschlitze zu Clustern 114 (im Beispiel von Fig. 11 der Länge 4) gruppiert werden. In jedem Cluster 114 wird genau ein Zeitschlitz des Kanalzugriffsmusters 110 platziert. Die Position der ins Kanalzugriffsmuster 110 aufgenommenen Zeitschlitze innerhalb des Clusters 114 kann durch eine Verschiebung $v_n$ bestimmt werden, welche von der Pseudozufallszahl $R_n$ abgeleitet und die ganzzahlige Werte zwischen 0 und (Clusterlänge-1) annehmen kann.

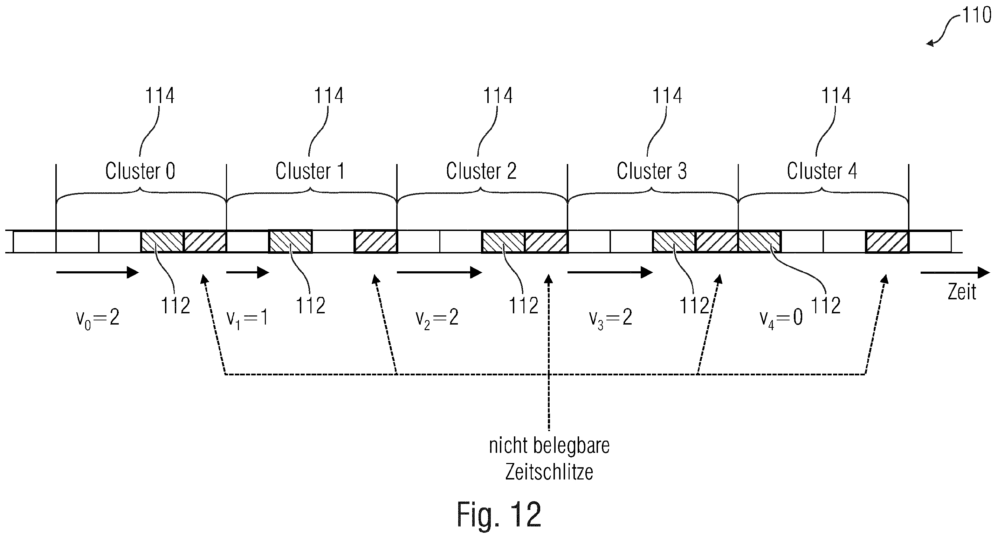

Für den Fall, dass ein Mindestabstand zwischen zwei aufeinanderfolgenden Zeitschlitzen des Kanalzugriffsmusters 110 gewährleistet werden soll, können zwischen den Clustern 114 nicht belegbare Bereiche eingebracht werden. Diese können aus einem oder mehreren Zeitschlitzen bestehen, wie dies in Fig. 12 veranschaulicht ist.

Im Detail zeigt Fig. 12 in einem Diagramm auf eine Zeitachse projizierte Ressourcenelemente 112 eines Kanalzugriffsmusters 110 mit einer Aktivitätsrate A=1/4 und einem vorgegebenen Mindestabstand zwischen aufeinander folgenden Zeitschlitzen des Kanalzugriffsmusters 110, gemäß einem Beispiel.

Mit anderen Worten, Fig. 12 zeigt eine beispielhafte Abfolge von genutzten und ungenutzten Zeitschlitzen mit nicht belegbaren Zeitschlitzen, gemäß einem Beispiel.

Wie in Fig. 12 zu erkennen ist, verringert sich aufgrund der nicht belegbaren Zeitschlitze der zulässige Bereich der Verschiebungsvariablen $v_n$ auf den Wertebereich von 0 bis (Clusterlänge-1-Länge des nicht belegbaren Bereichs).

Je nach gewählter Aktivitätsrate kann es sein, dass die Cluster 114 unterschiedliche Längen aufweisen müssen, um die gewünschte Aktivitätsrate zu erzielen. In diesem Fall variiert der Wertebereich von $v_n$ entsprechend der jeweiligen Clusterlänge. Um z.B. eine Aktivitätsrate von 40% einzustellen, können sich Cluster der Länge zwei und der Länge drei abwechseln.

### A.4. Kanalzugriffsmuster mit Bereichen unterschiedlicher Aktivitätsrate

Datenpakete, die den Empfänger möglichst schnell erreichen sollen (kurze Latenzzeit), benötigen bei der Übertragung möglichst dicht aufeinanderfolgende Kanalzugriffe, d.h. eine vergleichsweise hohe Aktivitätsrate im Kanalzugriffsmuster.

Bei Datenpaketen, bei denen hingegen die Übertragungssicherheit (z.B. hohe Robustheit gegen externe Störer) im Vordergrund steht, kann eine Verteilung der Aussendung über einen längeren Zeitraum vorteilhaft sein, mithin also eine vergleichsweise niedrige Aktivitätsrate im Kanalzugriffsmuster günstig sein. Dasselbe gilt für Geräte, bei denen eine zeitlich entzerrte Energieentnahme aus der Batterie (zeitlich gestreckte Sendeaktivität) gewünscht wird.

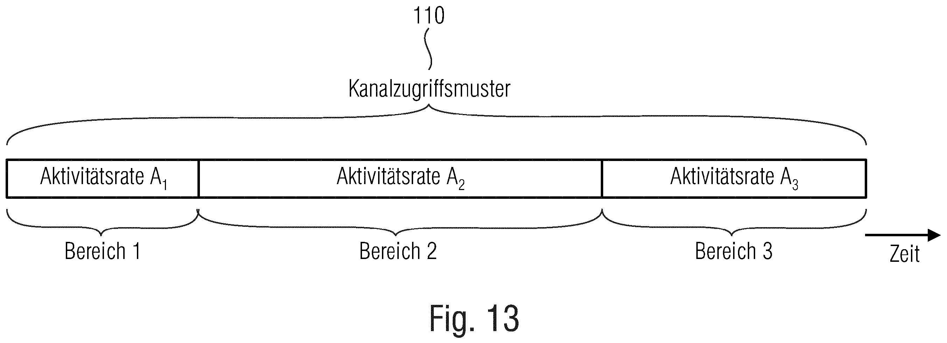

Wie oben dargestellt, kann durch geeignete Maßnahmen die Aktivitätsrate, d.h. die Frequenz des Kanalzugriffs, vorgegeben werden. Um in einem Netzwerk den ggf. unterschiedlichen Anforderungen gerecht zu werden, wird kann ein Kanalzugriffsmuster so gestaltet werden, dass es Bereiche mit unterschiedlichen Aktivitätsraten aufweist. Dies ist in Fig. 13 exemplarisch dargestellt. Je nach individueller Anforderung können Endgeräte dann z.B. in dem für sie geeigneten Bereich senden.

Im Detail zeigt Fig. 13 eine zeitliche Aufteilung eines Kanalzugriffsmusters 110 in Bereiche unterschiedlicher Aktivitätsrate $A_1$, $A_2$ und $A_3$, gemäß einem Beispiel.

Mit anderen Worten, Fig. 13 zeigt ein Beispiel für ein Kanalzugriffsmuster mit drei Bereichen unterschiedlicher Aktivitätsrate innerhalb des Kanalzugriffsmusters 110.

### A.5. Bedarfsabhängige (dynamische) Anpassung der Aktivitätsrate des Kanalzugriffsmusters

In Netzwerken (oder Kommunikationssystemen) 102 können zu unterschiedlichen Zeitpunkten unterschiedliche Lastsituationen vorliegen. Wie weiter oben ausgeführt, kann über die Gestaltung das Kanalzugriffsmusters 110 (d.h. dessen Aktivitätsrate bzw. mittlerer zeitlicher Dichte) eine Festlegung des aktiv nutzbaren Ressourcenvorrats für dieses Netzwerk erfolgen.

Das Bereitstellen eines hohen Ressourcenvorrats (hohe Aktivitätsrate) bei niedriger tatsächlicher Last kann insbesondere bei batteriebetriebenen Geräten nachteilig sein. Als Beispiel sei hier eine batteriebetriebene Basisstation (z.B. eines PAN-Netzwerks, ggf. im sog. Repeaterbetrieb), genannt, welche während aller aktiven Ressourcen des Kanalzugriffsmusters den Empfänger betreibt und damit Energie einsetzt.

Daher kann es sinnvoll sein, die mittlere Aktivitätsrate, also die zeitliche Dichte der durch das Kanalzugriffsmuster 110 angebotenen Ressourcen, den vorliegenden Lastverhältnissen dynamisch anzupassen. Wenn die Aktivitätsrate des Kanalzugriffsmusters 110 geändert ist, wird dies den Teilnehmern im Netzwerk entsprechend signalisiert, wofür z.B. das Baken-Signal (oder auch dedizierte Signalisierungsressourcen) in Frage kommt.

Befindet sich ein Endgerät 106 in einem längeren Ruhezustand (Energiesparmodus), so kann es vorkommen, dass es die während des Ruhezustands ausgesendete Signalisierungsinformation der Basisstation 104 über ein ggf. geändertes Kanalzugriffsmuster nicht erhält. In einem solchen Szenario kann es sinnvoll sein, dass ein Kanalzugriffsmuster 110 einen Mindestvorrat an (Grund-)Ressourcen bereitstellt, der jederzeit und ohne besondere Signalisierung zur Verfügung steht, sowie einen zusätzlichen Vorrat an Ressourcen, der lastabhängig hinzugefügt werden kann und einer entsprechenden Signalisierung unterliegt.

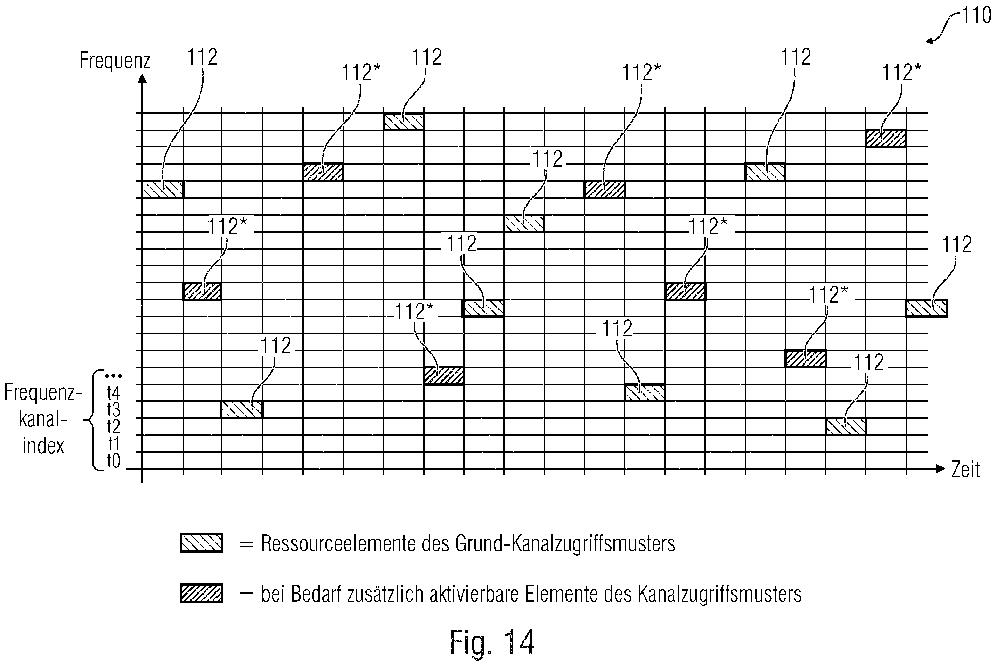

Im obigen Sinne dem Kanalzugriffsmuster zusätzlich hinzugefügte Ressourcen können z.B. zeitlich nach den Grundressourcen angeordnet sein oder auch mit diesen verschränkt im Zeit-/Frequenzraster angeordnet sein, wie dies in Fig. 14 gezeigt ist.

Im Detail zeigt Fig. 14 in einem Diagramm eine durch ein Kanalzugriffsmuster 110 definierte frequenz- und zeitsprungbasierte Belegungen der Ressourcen 112 des Frequenzbands, wobei das Kanalzugriffsmuster 110 zusätzlich bei Bedarf aktivierbare Ressourcen 112* aufweist, gemäß einem Beispiel. Dabei beschreibt die Ordinate die Frequenzkanalindizes und die Abszisse die Zeitschlitzindizes.

Mit anderen Worten, Fig. 14 zeigt ein Beispiel für verschränkte Grund- und Zusatzressourcen.

### A.6. Adaptive Frequenzbereichsbelegung

In bestimmten unlizenzierten Frequenzbändern können Nutzer ohne regulatorische Einschränkungen ggf. selbst entscheiden, welche Frequenzbereiche sie innerhalb des Frequenzbands nutzen. Dies kann dazu führen, dass bestimmte Bereiche des zur Verfügung stehenden Frequenzbands stärker durch externe Nutzer belegt werden als andere und somit stärkeren Störungen ausgesetzt sind.

Wenn eine Basisstation 104 eine solche mittel- oder langfristige asymmetrische Auslastung des Frequenzbands feststellt (z.B. durch frequenzkanalweise Signal-zu-Störleistungs-Schätzungen auf Basis empfangener Signale), kann der überdurchschnittlich stark belegte Bereich des Frequenzbands für die Nutzung durch das eigene Netzwerk gemieden werden, indem die zugehörigen Frequenzkanäle nicht in das Kanalzugriffsmuster mit aufgenommen werden. Dies ist im Frequenz-/Zeitpunkt-Zuordner (siehe Fig. 5 oder 6) zu berücksichtigen und wird allen Netzwerkteilnehmern in geeigneter Weise signalisiert.

Die Gruppe der ausgeklammerten Frequenzkanäle kann z.B. durch einen entsprechenden Start- und Endfrequenzkanalindex oder durch einen Startfrequenzkanalindex und eine folgende Kanalanzahl beschrieben werden.

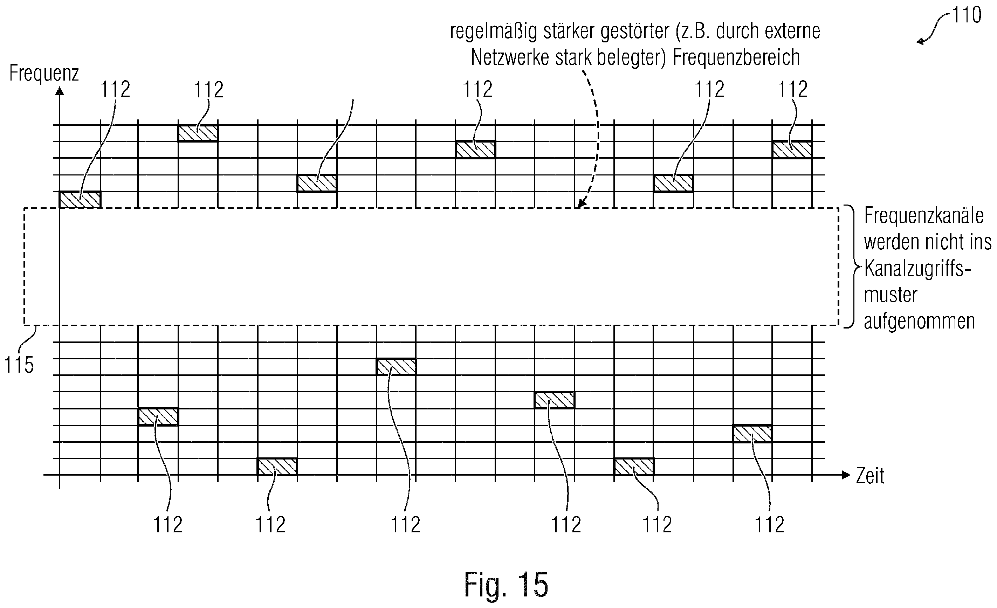

Fig. 15 zeigt in einem Diagramm eine durch ein Kanalzugriffsmuster 110 definierte frequenz- und zeitsprungbasierte Belegungen der Ressourcen 112 des Frequenzbands, wobei ein regelmäßig stärker gestörter Frequenzbereich 115 des Frequenzbands nicht durch das Kanalzugriffsmuster 110 belegt wird, gemäß einem Beispiel. Dabei beschreibt die Ordinate die Frequenzkanalindizes und die Abszisse die Zeitschlitzindizes.

Wie in Fig. 15 zu erkennen ist, wird bei der Erzeugung des Kanalzugriffsmusters 110 ein regelmäßig stärker gestörter (z.B. durch externe Netzwerke stark belegter) Frequenzbereich 115 berücksichtigt. Frequenzkanäle dieses Frequenzbereichs 115 werden somit nicht ins Kanalzugriffsmuster 110 aufgenommen.

Mit anderen Worten, Fig. 15 zeigt ein Beispiel für Ausklammerung stark gestörter Frequenzkanäle aus dem Kanalzugriffsmuster.

Mit der Meidung von störanfälligen Frequenzbereichen für die Datenübertragung im eigenen Netzwerk erfolgt gleichzeitig ein gewisser Lastausgleich über das Frequenzband, indem andere Netzwerke in den bereits stark ausgelasteten Frequenzbereichen keine zusätzlichen Störungen erfahren.

### A.7. Bündelung von Ressourcenelementen im Frequenzbereich (Frequenzkanalbündelung)

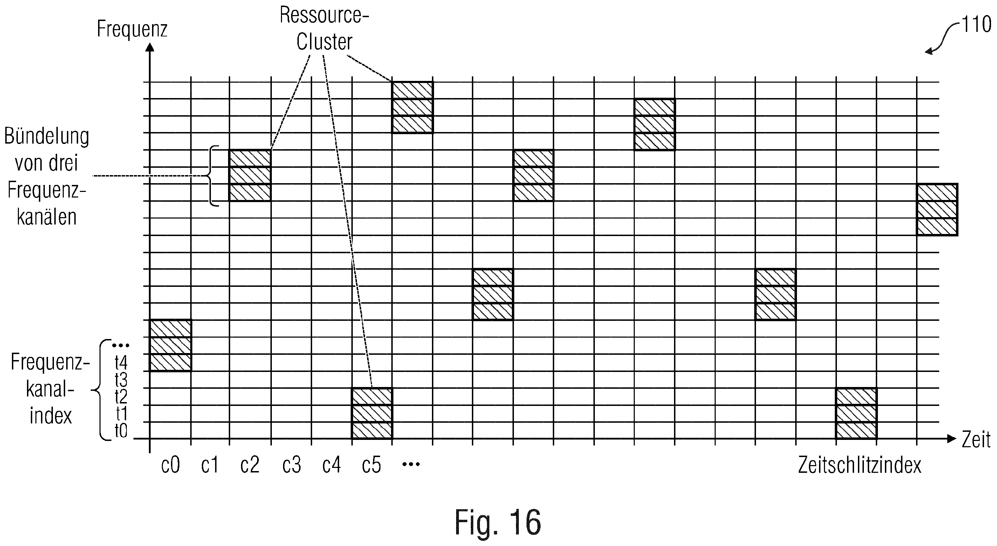

Je nach eingesetzter Hard- und Software ist es möglich, dass eine Basisstation 104 auf mehreren Frequenzkanälen gleichzeitig empfangen kann (Frequenzkanalbündelung). In diesem Fall ist es gerade bei höher ausgelasteten Systemen vorteilhaft, die Anzahl der innerhalb des Netzwerks angebotenen Ressourceelemente in der Frequenzdimension entsprechend zu erhöhen und mehrere Frequenzkanäle innerhalb eines Zeitschlitzes in das Kanalzugriffsmuster aufzunehmen, wie dies in Fig. 16 gezeigt ist.

Im Detail zeigt Fig. 16 in einem Diagramm eine durch ein Kanalzugriffsmuster 110 definierte frequenz- und zeitsprungbasierte Belegungen der Ressourcen 112 des Frequenzbands, wobei Ressourcen 112 im Frequenzbereich gebündelt werden, gemäß einem Beispiel. Dabei beschreibt die Ordinate die Frequenzkanalindizes und die Abszisse die Zeitschlitzindizes.

Mit anderen Worten, Fig. 16 zeigt eine beispielhafte Darstellung des Kanalzugriffsmusters 110 bei Bündelung von je drei benachbarten Frequenzkanälen zu Ressourcen-Clustern. Dabei wird in Fig. 16 beispielhaft die Bündelung von jeweils drei Frequenzkanälen dargestellt. Jede Gruppe von Ressource-Elementen eines Zeitschlitzes kann dabei als "Ressource-Cluster" bezeichnet werden. Das Kanalzugriffsmuster 110 kann hierbei ergänzt werden um die Information über die Anzahl der Frequenzkanäle, die ein Ressource-Cluster konstituieren.

Als weiteres Beispiel sei erwähnt, dass die zu Ressource-Clustern gruppierten Frequenzkanäle nicht notwendigerweise unmittelbar benachbart sein müssen.

Im Folgenden wird aufgezeigt, wie ein oder mehrere Teilnehmer eines Kommunikationssystems 102 unter Verwendung eines relativen Kanalzugriffsmusters auf eine Auswahl der durch das netzwerkspezifische Kanalzugriffsmuster 110 für das Kommunikationssystem 102 freigegebene Ressourcen zugreifen können.

## B. Kanalzugriff über relative Kanalzugriffsmuster

Die in diesem Abschnitt B und dessen Unterabschnitte folgenden Beispiele sind nicht erfindungsgemäß und dienen lediglich der Veranschaulichung.

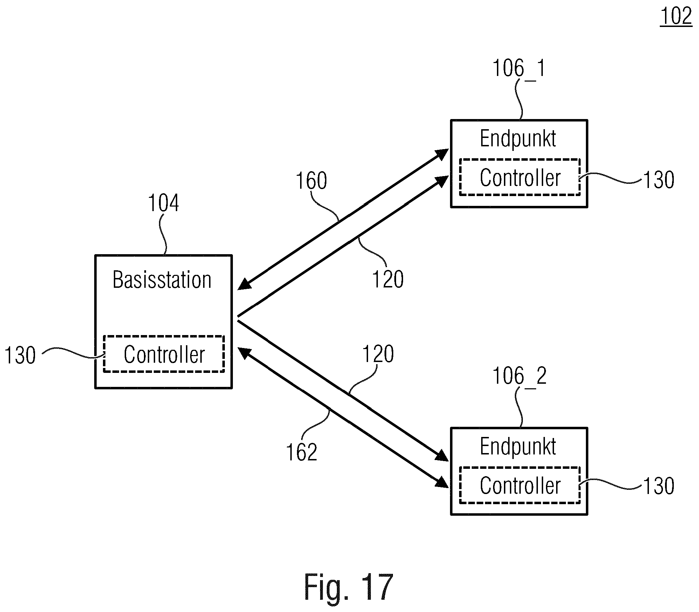

Fig. 17 zeigt ein schematisches Blockschaltbild eines Kommunikationssystems 102 mit einer Basisstation 104 und zwei Endpunkten 106_1-106_2, gemäß einem Beispiel.

Das in Fig. 17 gezeigte Kommunikationssystem 102 weist beispielhaft eine Basisstation 104 und zwei Endpunkte 106_1-106_2 auf. Das Kommunikationssystem ist jedoch nicht auf solche Beispiele beschränkt, vielmehr kann das Kommunikationssystem 102 ein oder mehrere Endpunkte 106_1-106_n aufweisen, wobei n eine natürliche Zahl größer gleich eins ist. Beispielsweise kann das Kommunikationssystem 1, 10, 100, 1.000, 10.000 oder sogar 100.000 Endpunkte aufweisen.

Wie dies oben bereits ausführlich erläutert wurde (vgl. z.B. Fig. 4) nutzen die Teilnehmer (= Basisstation 104 und Endpunkte 106_1-106_2) des Kommunikationssystems zur gegenseitigen Kommunikation ein Frequenzband (z.B. ein lizenzfreies und/oder genehmigungsfreies Frequenzband, z.B. ISM Band), welches von einer Mehrzahl von Kommunikationssystemen ebenfalls zur Kommunikation genutzt wird. Das Kommunikationssystem 102 arbeitet dabei unkoordiniert in Bezug auf die anderen Kommunikationssysteme, die das gleiche Frequenzband nutzen.

Wie dies ebenfalls oben detailliert dargelegt wurde, ist die Basistation 104 ausgebildet, um ein Signal 120 zu senden, wobei das Signal 120 eine Information über ein netzwerkspezifisches Kanalzugriffsmuster 110 aufweist, wobei das netzwerkspezifische Kanalzugriffsmuster 110 eine für die Kommunikation des Kommunikationssystems 102 verwendbare frequenz- und/oder zeitsprungbasierte Belegung von Ressourcen des Frequenzbands angibt, während die Endpunkte 106_1-106_2 ausgebildet sind, um das Signal 120 zu empfangen und um basierend auf der Information über das netzwerkspezifische Kanalzugriffsmuster das netzwerkspezifische Kanalzugriffsmuster 110 zu ermitteln (siehe z.B. Fig. 5 und 6).

Zur gegenseitigen Kommunikation, d.h. zur gegenseitigen Übertragung von Daten, können die Teilnehmer (z.B. Basisstation 104 und Endpunkt 106_1) des Kommunikationssystems 102 ein relatives Kanalzugriffsmuster verwenden, welches angibt, welche der durch das netzwerkspezifische Kanalzugriffsmuster 110 für die Kommunikation des Kommunikationssystems 102 freigegebenen oder verwendbaren Ressourcen tatsächlich für die Übertragung der Daten zu verwenden sind.

Im Detail kann die Basisstation 104 ausgebildet sein, um Daten 160 (z.B. ein Signal mit den Daten 160) unter Verwendung von einem relativen Kanalzugriffsmuster zu übertragen (z.B. zu dem Endpunkt 106_1 zu senden und/oder von dem Endpunkt 106_1 zu empfangen), wobei das relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters 110 angibt.

Der Endpunkt 106_1 kann ausgebildet sein, um Daten 160 (z.B. ein Signal mit den Daten 160) unter Verwendung von dem relativen Kanalzugriffsmuster zu übertragen (z.B. von der Basisstation zu empfangen und/oder zu der Basisstation 104 zu senden), wobei das relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angibt.

Zur gegenseitigen Kommunikation zwischen anderen Teilnehmern (z.B. Basisstation 104 und Endpunkt 106_2) des Kommunikationssystems 102 kann ein anderes relatives Kanalzugriffsmuster verwendet werden, welches angibt, welche der durch das netzwerkspezifische Kanalzugriffsmuster 110 für die Kommunikation des Kommunikationssystems 102 freigegebenen oder verwendbaren Ressourcen tatsächlich für die Übertragung der Daten zu verwenden sind, wobei das relative Kanalzugriffsmuster (z.B. von Endpunkt 106_1) und das andere relative Kanalzugriffsmuster (z.B. von Endpunkt 106_2) unterschiedlich sind.

Beispielsweise kann die die Basisstation 104 ferner ausgebildet sein, um Daten 162 (z.B. ein Signal mit den Daten 162) unter Verwendung von einem anderen relativen Kanalzugriffsmuster zu übertragen (z.B. zu dem anderen Endpunkt 106_2 zu senden und/oder von dem anderen Endpunkt 106_2 zu empfangen), wobei das andere relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angibt, wobei das relative Kanalzugriffsmuster und das andere relative Kanalzugriffsmuster unterschiedlich sind.

Der andere Endpunkt 106_2 kann ausgebildet sein, um Daten 162 (z.B. ein Signal mit den Daten 162) unter Verwendung von dem anderen relativen Kanalzugriffsmuster zu übertragen (z.B. von der Basisstation 104 zu empfangen und/oder zu der Basisstation 104 zu senden), wobei das andere relative Kanalzugriffsmuster eine für die Übertragung zu verwendende Belegung von Ressourcen aus der verwendbaren frequenz- und/oder zeitsprungbasierten Belegung von Ressourcen des netzwerkspezifischen Kanalzugriffsmusters angibt, wobei das relative Kanalzugriffsmuster und das andere relative Kanalzugriffsmuster unterschiedlich sind.

Im Folgenden werden Beispiele der Anwendung und Erzeugung von relativen Kanalzugriffsmustern beschrieben. Die relativen Kanalzugriffsmuster können hierbei von den Teilnehmern (z.B. der Basisstation 104 und zumindest einem der Endpunkte 106_1-106_2) ermittelt werden, beispielsweise durch den Controller 130, der in den Teilnehmern implementiert ist.

Die folgenden Beispiele nehmen dabei Bezug auf die in Abschnitt A beschriebenen Beispiele, welche bei Koexistenz mehrerer untereinander unkoordinierter Funknetzwerke (z.B. LPWAN, PAN) in wechselseitiger Empfangsreichweite der Zugriff auf ein gemeinsam genutztes Frequenzband so gestalten, dass die netzwerkübergreifenden, wechselseitigen Störungen der Teilnehmer bzw. deren nachteilige Auswirkungen auf die Übertragungssicherheit reduziert oder sogar minimiert werden.

Dabei wird in der folgenden Beschreibung von einer Kommunikationsanordnung von untereinander unkoordinierten Funknetzwerken zur Datenübertragung ausgegangen, die auf ein gemeinsam genutztes Frequenzband zugreifen. Bei manchen Beispielen wird vorausgesetzt, dass bei der Datenübertragung das sog. Telegram Splitting Multiple Access (TSMA) Verfahren zum Einsatz kommt, wie es z.B. in [1] beschrieben ist. Hierbei wird ein mittels Kanalkodierung geschütztes Datenpaket in mehrere Teil-Datenpakete aufgeteilt, welche in mehreren unterschiedlichen Zeit-und/oder Frequenzressourcen übertragen werden.

Ferner wird bei manchen Beispielen vorausgesetzt, dass es innerhalb jedes Netzwerks eine koordinierende Instanz gibt (im Folgenden "Basisstation" genannt, im Rahmen des IEEE Standards [2] "PAN coordinator" genannt), welche den nicht-koordinierenden Teilnehmern des Netzwerks (im Folgenden "Endgeräte" oder "Endpunkte" genannt) Information über das innerhalb des Netzwerks angewandte Kanalzugriffsmuster übermitteln kann. Die oben beschriebenen Kanalzugriffsmuster (siehe Abschnitt A) definieren einen Satz von Funkressourcen (Ressourceelementen), die für eine Übertragung innerhalb eines Netzwerks für einen bestimmten Zeitraum grundsätzlich zur Verfügung stehen. Sie definieren somit das (für den betrachteten Zeitraum gültige) von der Basisstation festgelegte Angebot an Ressourcen, auf welches die Endgeräte zugreifen können.

Bei Kanalzugriffsverfahren wird grundsätzlich zwischen einem "konkurrenzfreien Zugriff" (engl. contention free access) und einem "konkurrenzbasierten Zugriff" (engl. contention based access) unterschieden. Im konkurrenzfreien Zugriff werden einem Endgerät von der koordinierenden Instanz (Basisstation) eindeutig spezifizierte Funkressourcen zur exklusiven Verwendung zugewiesen. Beim konkurrenzbasierten Zugriff - auf welchen sich Beispiele beziehen - steht dem Endgerät ein Angebot an Funkressourcen zur Verfügung, aus welchem sich das Endgerät bei Bedarf eigeninitiativ, d.h. ohne individuelle Ressourcenzuteilung, bedient. Kennzeichnend ist hierbei, dass auch andere Endgeräte auf dasselbe Angebot zurückgreifen können, sodass es zu Konflikten im Zugriff auf die gemeinsam genutzten Funkressourcen kommen kann. Ziel ist es, diese Konflikte möglichst zu reduzieren oder sogar vermeiden.

Beispiele befassen sich somit mit Techniken, die die Verteilung der vorhandenen Ressourcen (welche von der Basisstation festgelegt worden) möglichst effektiv gestaltet, so dass die Störungen zwischen den Teilnehmern innerhalb des Netzwerks reduziert oder sogar minimiert werden.

Beispiele beziehen sich auf eine hierarchische Aufteilung des Kanalzugriffs bei Anwendung des TSMA-Verfahrens:

- Die Vorgabe eines Angebots an verfügbaren Funkressourcen durch die Basisstation in Form des netzwerkspezifischen Kanalzugriffsmusters (siehe Abschnitt A). Den Kanalzugriffsmustern kommt dabei die Aufgabe zu, den Zugriff mehrerer untereinander unkoordinierter Netzwerke auf ein gemeinsam genutztes Frequenzband so zu gestalten, dass die Teilnehmer unterschiedlicher Netzwerke sich möglichst wenig beeinträchtigen (Ziel: Trennung der Netzwerke untereinander).
- Die Auswahl und Nutzung von Funkressourcen aus dem o. g. netzwerkspezifischen Kanalzugriffsmuster ("Angebot") durch Endgeräte in Form eines relativen Kanalzugriffsmusters. Das relative Kanalzugriffsmuster steht hierarchisch unterhalb des netzwerkspezifischen Kanalzugriffsmusters und kann sich keiner Ressourcen bedienen, die außerhalb des netzwerkspezifischen Kanalzugriffsmusters liegen. Die Indizierung der Ressourcen kann daher vorteilhafterweise relativ zum netzwerkspezifischen Kanalzugriffsmuster erfolgen. Die verschiedenen relativen Kanalzugriffsmuster haben die Aufgabe, im Rahmen eines konkurrenzbasierten Zugriffs mehreren Teilnehmern innerhalb eines Netzwerks (ggf. im gleichen Zeitraum) Zugriff auf das gemeinsame Ressourcenangebot zu verschaffen, wobei sich die Teilnehmer innerhalb des Netzwerks dabei gegenseitig möglichst wenig beeinträchtigen sollen (Ziel: Trennung der Teilnehmer innerhalb eines Netzwerks).

Beispiele sehen vor, dass es einen sowohl der Basisstation als auch den Endgeräten des Netzwerks bekannten Vorrat an relativen Kanalzugriffsmustern gibt, aus welchem das Endgerät z.B. für jede Übertragung eines nutzt. Die Auswahl eines relativen Kanalzugriffsmusters aus dem verfügbaren Vorrat kann nach unterschiedlichen Kriterien erfolgen und wird weiter unten detaillierter beschrieben.

## B.1. Kanalzugriff über hierarchisch organisierte Kanalzugriffsmuster

Wie oben ausgeführt wurde, beziehen sich Beispiele auf die hierarchische Struktur des Kanalzugriffsmusters von Netzwerk-Teilnehmern aus zwei Komponenten:

- einem netzwerkspezifischen Kanalzugriffsmuster, welches das Angebot an Funkressourcen im jeweiligen Netzwerk zum betreffenden Zeitpunkt festlegt (siehe Abschnitt A), sowie
- einem dazu relativen Kanalzugriffsmuster. Dieses legt fest, welche von den verfügbaren Ressourcen tatsächlich bei einer Datenübertragung belegt/genutzt werden.

Das aktiv genutzte relative Kanalzugriffmuster eines Netzwerkteilnehmers besteht somit aus einer Untermenge des netzwerkspezifischen Kanalzugriffsmusters.

Die Anwendung der hierin beschriebenen Beispiele ist besonders vorteilhaft bei Datenübertragung nach dem TSMA-Verfahren, bei welchem ein Datenpaket auf eine Anzahl von Teil-Datenpaketen aufgeteilt übertragen wird. Die folgende Darstellung geht aus Gründen der Veranschaulichung und ohne Beschränkung der Allgemeingültigkeit davon aus, dass das Frequenzband in eine Anzahl von diskreten Frequenzkanälen aufgeteilt ist sowie auch eine zeitliche Diskretisierung der Zugriffe innerhalb eines Netzwerks in Form von Zeitschlitzen (engl. (time)slots) erfolgt.

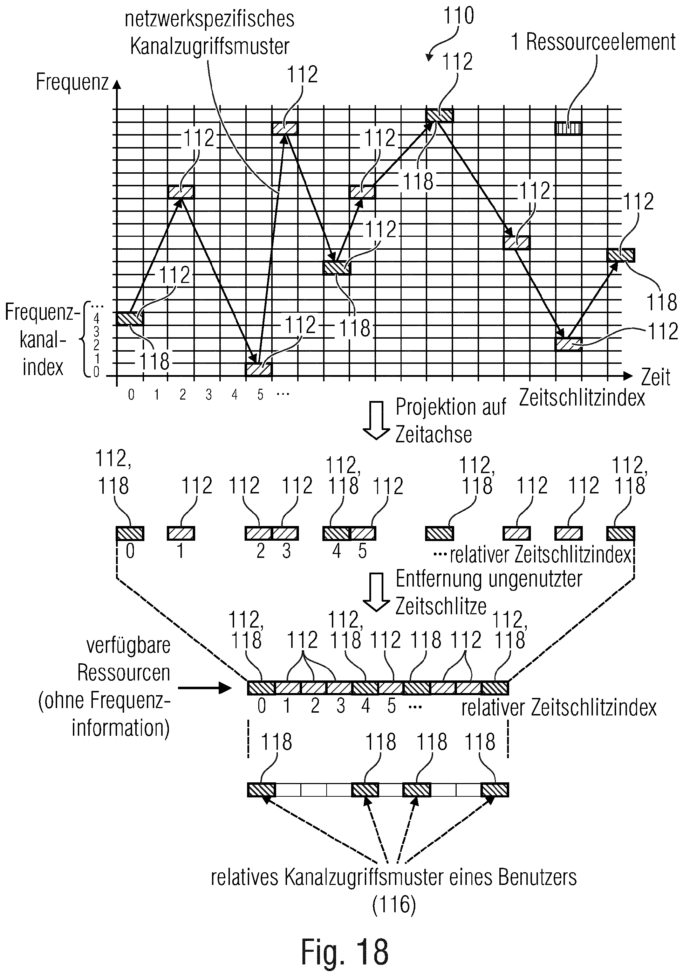

Fig. 18 zeigt in einem Diagramm eine durch ein netzwerkspezifisches Kanalzugriffsmuster 110 angegebene frequenz- und zeitsprungbasierte verwendbare Belegung von Ressourcen 112 des Frequenzbands, eine durch ein relatives Kanalzugriffsmuster 116 angegebene für die Übertragung zu verwendende Belegung von Ressourcen 118 aus der verwendbaren Belegung von Ressourcen 112 des netzwerkspezifischen Kanalzugriffsmusters 110, sowie Projektionen der Kanalzugriffsmuster 110, 116 auf Zeitachsen vor und nach Entfernung ungenutzter Ressourcen (z.B. Zeitschlitze), gemäß einem Beispiel. Dabei beschreibt die Ordinate die Frequenzkanalindizes und die Abszisse die Zeitschlitzindizes.

Wie in Fig. 18 zu erkennen ist, definiert das netzwerkspezifische Kanalzugriffsmuster 110 die Verteilung der Ressourcen 112 des Frequenzbands (z.B. jeweils definiert durch Zeitschlitz und Frequenzkanal, oder Zeitschlitzindex und Frequenzkanalindex), die von dem Kommunikationssystem 102 und damit von den Teilnehmern (Basisstation 104 und Endpunkte 106_1-106_2) des Kommunikationssystems 102 für die gegenseitige Kommunikation verwendet werden können, während das relative Kanalzugriffsmuster 116 diejenigen Ressourcen 118 aus den verwendbaren Ressourcen 112 angibt, die von einer Teilmenge der Teilnehmer (z.B. einer begrenzten Gruppen von Teilnehmern, z.B. von zwei Teilnehmern, wie z.B. Basisstation 104 und Endpunkt 106_1) des Kommunikationssystems 102 für die gegenseitige Kommunikation tatsächlich verwendet werden.

Mit anderen Worten, Fig. 18 zeigt eine schematische beispielhafte Darstellung des netzwerkspezifischen und relativen Kanalzugriffsmusters (hierarchische Struktur des Kanalzugriffs). Dabei zeigt Fig. 18 im oberen Teil beispielhaft die Aufteilung der Funkressourcen in einem diskreten Zeit-/Frequenzraster in eine Vielzahl von Ressourcenelementen. Ein Ressourcenelement ist dabei durch einen Frequenzkanalindex sowie einen Zeitschlitzindex beschrieben. Im oberen Teil der Fig. 18 ist ein netzwerkspezifisches Kanalzugriffsmuster 110 dargestellt, welches durch Ressourcenelemente 112 hervorgehoben ist, die durch Pfeile symbolisch miteinander verbunden sind. Dieses netzwerkspezifische Kanalzugriffsmuster 110 stellt das Angebot an Ressourcenelementen 122 dar, welches von einem Netzwerk (oder Kommunikationssystem) 102 zur Verfügung gestellt wird. Eine Signalaussendung ist in diesem Beispiel in einem Zeitschlitz jeweils nur auf einem Frequenzkanal möglich.

Wird die zweidimensionale Darstellung auf die Zeitachse projiziert und werden alle im netzwerkspezifischen Kanalzugriffsmuster 110 nicht belegte Zeitschlitze entfernt, so resultieren gemäß der obigen Darstellung die "verfügbaren Ressourcen" 112. Die Zeitindizierung kann hier vorteilhafterweise durch einen relativen Zeitschlitzindex erfolgen, welcher relativ zum netzwerkspezifischen Kanalzugriffsmuster ist.

Im untersten Teil der Fig. 18 ist beispielhaft ein relatives Kanalzugriffsmuster 116 dargestellt, welches eine Teilmenge aus den verfügbaren Ressourcen (ggf. auch alle) festlegt. Das im gewählten Beispiel effektiv resultierende Kanalzugriffsmuster (d.h. die hierarchische Kombination aus netzwerkspezifischem und relativem Kanalzugriffsmuster) ist in allen Bereichen der Fig. 18 durch Ressourcenelemente 118 gekennzeichnet. Dabei lässt sich das relative Kanalzugriffsmuster mit seinem relativen Zeitschlitzindex mittels der in Abschnitt A definierten mittleren Aktivitätsrate A auf das ursprüngliche diskrete Zeitraster zurückrechnen. Diese mittlere Aktivitätsrate sei definiert als mittleres Verhältnis von für den Kanalzugriff genutzten Zeitschlitzen zu insgesamt maximal verfügbaren Zeitschlitzen. Bei Nutzung jedes Zeitschlitzes beträgt die Aktivitätsrate A somit 1 (100%). Wird hingegen, wie in Fig. 18 im oberen Teil gezeigt, im Mittel nur jeder zweite Zeitschlitz ins Kanalzugriffsmuster aufgenommen (also 10 von 20), so beträgt die mittlere Aktivitätsrate A=1/2.

**B.2. Bündelung von Ressourcenelementen im Frequenzbereich (Frequenzkanalbündelung)**

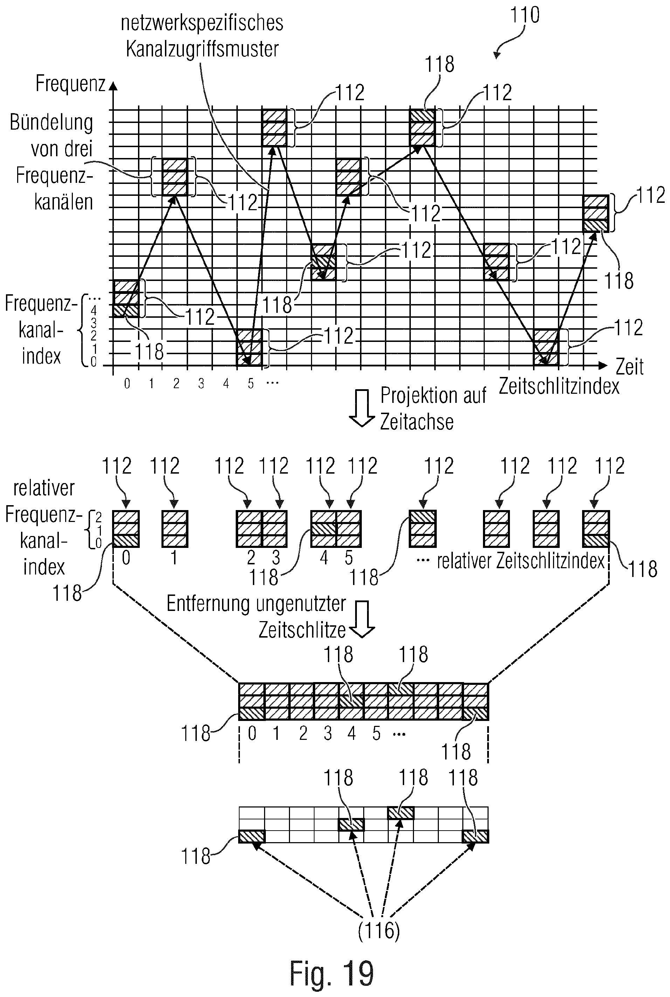

Je nach eingesetzter Hard- und Software ist es möglich, dass eine Basisstation 102 auf mehreren Frequenzkanälen gleichzeitig empfangen kann (Frequenzkanalbündelung). In diesem Fall ist es gerade bei höher ausgelasteten Systemen vorteilhaft, die Anzahl der innerhalb des Netzwerks angebotenen Ressourcenelemente in der Frequenzdimension entsprechend zu erhöhen und mehrere Frequenzkanäle innerhalb eines Zeitschlitzes in das netzwerkspezifische Kanalzugriffsmuster 110 aufzunehmen. Dies ist in Fig. 19 dargestellt.

Im Detail zeigt Fig. 19 in einem Diagramm eine durch ein netzwerkspezifisches Kanalzugriffsmuster 110 angegebene frequenz- und zeitsprungbasierte verwendbare Belegung von im Frequenzbereich gebündelten Ressourcen 112 des Frequenzbands, eine durch ein relatives Kanalzugriffsmuster 116 angegebene für die Übertragung zu verwendende Belegung von Ressourcen 118 aus der verwendbaren Belegung von Ressourcen 112 des netzwerkspezifischen Kanalzugriffsmusters 110, sowie Projektionen der Kanalzugriffsmuster 110, 116 auf Zeitachsen vor und nach Entfernung ungenutzter Ressourcen (z.B. Zeitschlitze). Dabei beschreibt die Ordinate die Frequenzkanalindizes und die Abszisse die Zeitschlitzindizes.

Wie in Fig. 19 zu erkennen ist, gibt das netzwerkspezifische Kanalzugriffsmuster 110 in Frequenzrichtung (z.B. pro Zeitschlitz oder Zeitschlitzindex) eine Bündelung von Ressourcen 112, d.h. eine Mehrzahl von benachbarten Ressourcen 112 (z.B. Frequenzkanälen oder Frequenzkanalindizes) des Frequenzbands an, wobei das relative Kanalzugriffmuster 116 in Frequenzrichtung höchstens eine Teilmenge (z.B. höchstens eine Ressource, d.h. eine oder keine Ressource) der Mehrzahl von benachbarten Ressourcen 112 des netzwerkspezifischen Kanalzugriffsmusters 110 angibt.

Mit anderen Worten, Fig. 19 zeigt eine schematische beispielhafte Darstellung des netzwerkspezifischen Kanalzugriffmusters 110 und des relativen Kanalzugriffsmusters 116 bei lückenloser Frequenzkanalbündelung.

Dabei zeigt Fig. 19 exemplarisch eine Bündelung von drei jeweils zusammenhängenden Frequenzkanälen pro belegtem Zeitschlitz. Entsprechend steht beim relativen Kanalzugriffsmuster 116 neben der zeitlichen Dimension auch die Belegung der (im Beispiel: drei) Frequenzkanäle als Freiheitsgrad zur Verfügung.

In entsprechender, wie oben beschriebener Weise kann auch verfahren werden, wenn die innerhalb eines Zeitschlitzes verfügbaren, mehreren Frequenzkanälen nicht als (lückenlos) zusammenhängender Bereich vorliegen, sondern in anderer Weise über die verfügbaren Frequenzkanäle verteilt sind, wie dies in Fig. 20 gezeigt ist.

Fig. 20 zeigt in einem Diagramm eine durch ein netzwerkspezifisches Kanalzugriffsmuster 110 angegebene frequenz- und zeitsprungbasierte verwendbare Belegung von im Frequenzbereich voneinander beabstandeten Ressourcen 112 des Frequenzbands, eine durch ein relatives Kanalzugriffsmuster 116 angegebene für die Übertragung zu verwendende Belegung von Ressourcen 118 aus der verwendbaren Belegung von Ressourcen 112 des netzwerkspezifischen Kanalzugriffsmusters 110, eine durch ein anderes relatives Kanalzugriffsmuster 117 angegebene für die Übertragung zu verwendende Belegung von Ressourcen 119 aus der verwendbaren Belegung von Ressourcen 112 des netzwerkspezifischen Kanalzugriffsmusters 110, sowie Projektionen der Kanalzugriffsmuster 110, 116, 117 auf Zeitachsen vor und nach Entfernung ungenutzter Zeitschlitze bzw. Frequenzkanäle, gemäß einem Beispiel. Dabei beschreibt die Ordinate die Frequenzkanalindizes und die Abszisse die Zeitschlitzindizes.

Wie in Fig. 20 zu erkennen ist, gibt das netzwerkspezifische Kanalzugriffsmuster 110 in Frequenzrichtung (z.B. pro Zeitschlitz oder Zeitschlitzindex) eine Bündelung von Ressourcen 112, d.h. eine Mehrzahl von voneinander beabstandeten Ressourcen 112 (z.B. Frequenzkanälen oder Frequenzkanalindizes) des Frequenzbands an, wobei das relative Kanalzugriffmuster 116 in Frequenzrichtung höchstens eine Teilmenge (z.B. höchstens eine Ressource, d.h. eine oder keine Ressource) der Mehrzahl von voneinander beabstandeten Ressourcen 112 des netzwerkspezifischen Kanalzugriffsmusters 110 angibt, und wobei das andere relative Kanalzugriffmuster 117 in Frequenzrichtung höchstens eine Teilmenge (z.B. höchstens eine Ressource, d.h. eine oder keine Ressource) der Mehrzahl von voneinander beabstandeten Ressourcen 112 des netzwerkspezifischen Kanalzugriffsmusters 110 angibt, wobei das relative Kanalzugriffsmuster 116 und das andere relative Kanalzugriffsmuster 117 unterschiedlich sind.

Mit anderen Worten, Fig. 20 zeigt eine schematische beispielhafte Darstellung des netzwerkspezifischen Kanalzugriffsmusters 110 und des relativen Kanalzugriffsmusters 116 bei lückenbehafteter Frequenzkanalbündelung.

Vorteilhaft bei dieser Frequenzkanalbündelung ist, dass wie anhand des in Fig. 20 zusätzlich gezeigten relativen Kanalzugriffsmusters 117 eines zweiten Teilnehmers (z.B. Benutzers) deutlich weniger Nachbarkanalstörung (die Kanaltrennung zweier direkt benachbarter Kanäle ist aufgrund der begrenzten Filterwirkung immer problematisch, insbesondere dann wenn der eine Kanal mit einer deutlich stärkeren Empfangsleistung wie der benachbarte Kanal empfangen wird) wie in Fig. 19 auftritt.

Der Vorteil der in den Fig. 19 und 20 beschriebenen Bündelung besteht darin, mehr Endgeräten innerhalb des Netzwerks und innerhalb eines gegebenen Zeitraums Zugriff auf die Funkressourcen zu gewähren (höhere Last). Alternativ kann bei gegebener Last durch Kanalbündelung die Wahrscheinlichkeit für Kanalzugriffskollisionen verringert werden, da ein gegebenes Zugriffsaufkommen auf mehr potentielle Ressourcenelemente verteilt wird (reduzierte wechselseitige Störungen der Teilnehmer innerhalb des Netzwerks). Vorteil der Frequenzkanalbündelung gegenüber einer Benutzung von mehr Zeitschlitzen besteht auch in mehr Energieeffizienz, da der Empfänger bei gleichem Angebot an Ressourcenelementen den Empfänger für weniger Zeitschlitze einschaltet.

Wenn ein Endgerät die Fähigkeit hat, auf mehreren Frequenzkanälen gleichzeitig zu senden, so kann dies im relativen Kanalzugriffsmuster vorgesehen werden. Dies ist in der folgenden Abbildung veranschaulicht, die sich nur auf das relative Kanalzugriffsmuster beschränkt (entsprechend dem unteren Teilen von Fig. 19 und 20).

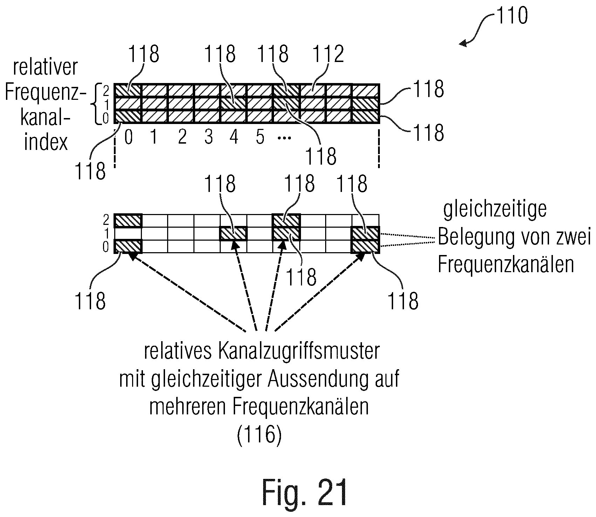

Fig. 21 zeigt in einem Diagramm eine Projektion eines netzwerkspezifischen Kanalzugriffsmusters 110 und eines relativen Kanalzugriffsmusters 116 auf die Zeitachse nach dem Entfernen ungenutzter Frequenzkanäle und Zeitschlitze, wobei das relative Kanalzugriffsmuster 116 in Frequenzrichtung für zumindest einen Teil der Zeitsprünge mehrere der in Frequenzrichtung verfügbare Ressourcen 112 belegt. Dabei beschreibt die Ordinate die relativen Frequenzkanalindizes, und die Abszisse die relativen Zeitschlitzindizes.

Mit anderen Worten, Fig. 21 zeigt in einem Diagramm ein relatives Kanalzugriffsmuster 116 bei Frequenzkanalbündelung mit gleichzeitiger Übertragung (z.B. Aussendung) auf mehreren Frequenzkanälen.

### B.3. Belegung der Ressourcen mit Kanalzugriffen in unterschiedlichen Symbolraten

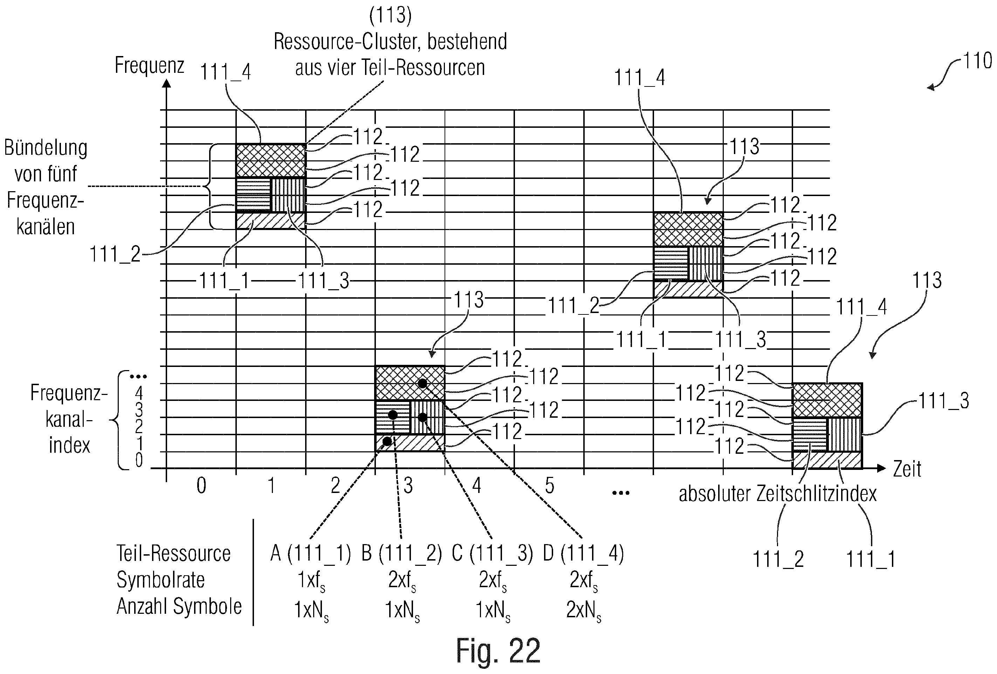

In den obigen Ausführungen wurde beispielhaft davon ausgegangen, dass das Signal auf jedem Frequenzkanal mit einer identischen Symbolrate erzeugt wird. Sollte jedoch, wie oben beschrieben, ein Bereich aus mehreren, unmittelbar benachbarten Frequenzkanälen verfügbar sein, so kann dieser im Folgenden als "Ressource-Cluster" bezeichnete Bereich in mehrere Teil-Ressourcen aufgeteilt werden. Diesen Teil-Ressourcen können unterschiedliche Symbolraten und/oder eine unterschiedliche Anzahl von Symbolen zugeordnet werden, wie dies in Fig. 22 veranschaulicht ist.

Fig. 22 zeigt in einem Diagramm eine durch ein netzwerkspezifisches Kanalzugriffsmuster 110 angegebene frequenz- und zeitsprungbasierte verwendbare Belegung von im Frequenzbereich zu Blöcken (oder Clustern) 113 gebündelten Ressourcen 112 des Frequenzbands, wobei unterschiedlichen Teilen 111_1-111_4 des Blocks 113 von zusammenhängenden Ressourcen 112 unterschiedliche Symbolraten und/oder unterschiedliche Anzahlen von Symbolen zugeordnet sind, gemäß einem Beispiel. Dabei beschreibt die Ordinate die Frequenzkanalindizes und die Abszisse die Zeitschlitzindizes.

Mit anderen Worten, Fig. 22 zeigt eine Bildung von Ressource-Clustern 113 mit Teil-Ressourcen 111_1-111_4 von unterschiedlicher Symbolrate und Symbolanzahl pro Zeitschlitz (Beispiel).

Dabei zeigt Fig. 22 exemplarisch einen Ausschnitt aus einem Kanalzugriffsmuster mit einer Abfolge von Ressource-Clustern 113, die durch Bündelung von je fünf Frequenzkanälen konstituiert werden. Jedes Ressource-Cluster 113 ist dabei im Beispiel in vier unabhängige Teil-Ressourcen "A" (111_1), "B" (111_2), "C" (111_3), "D" (111_4) aufgeteilt, in welchen unterschiedliche Vielfache der Symbolrate $f_s$ und der Anzahl der Symbole $N_s$ zur Anwendung kommen. Bei einer doppelten Symbolrate und gegebener Anzahl von Symbolen können z.B. aufgrund der verkürzten Symboldauer in einem Zeitschlitz zwei aufeinanderfolgende Zugriffe durch zwei unterschiedliche Teilnehmer erfolgen. Dies ist in Fig. 22 für die zeitlich aufeinanderfolgenden Teil-Ressourcen "B" (111_2) und "C" (111_3) der Fall.

Der Vorteil dieser Vorgehensweise besteht darin, dass innerhalb des netzwerkspezifischen Kanalzugriffsmusters 110 Ressourcen je nach Bedarf mit unterschiedlichen Symbolraten und damit Übertragungsbandbreiten belegt werden können.

Es ist für den Fachmann leicht ersichtlich, dass die Aufteilung von durch Frequenzkanalbündelung gebildeten Ressource-Clustern 113 in einzelne Teil-Ressourcen in vielfältiger Weise vorgenommen werden kann. Die dabei eingesetzten Symbolraten müssen dabei nicht notwendigerweise (wie im gewählten Beispiel) ganzzahlige Vielfache einer Grundsymbolrate sein. Entsprechendes gilt für die Anzahl der Symbole in den Teil-Ressourcen.

### B.4 Kriterien zur Erzeugung relativer Kanalzugriffsmuster

Aus unterschiedlichen Übertragungsszenarien können unterschiedliche Anforderungen an das relative Kanalzugriffsmuster 116 resultieren.

Datenpakete, die den Empfänger möglichst schnell erreichen sollen (kurze Latenzzeit), benötigen bei der Übertragung möglichst dicht aufeinanderfolgende Kanalzugriffe, d.h. eine vergleichsweise hohe Aktivitätsrate A im netzwerkspezifischen Kanalzugriffsmuster, wie in Abschnitt A beschrieben. Bei Datenpaketen, bei denen hingegen die Übertragungssicherheit (z.B. hohe Robustheit gegen externe Störer) im Vordergrund steht, kann eine Verteilung der Aussendung über einen längeren Zeitraum vorteilhaft sein, mithin also eine vergleichsweise niedrige Aktivitätsrate A im netzwerkspezifischen Kanalzugriffsmuster günstig sein. Dasselbe gilt für Geräte, bei denen eine zeitlich entzerrte Energieentnahme aus der Batterie (zeitlich gestreckte Sendeaktivität) gewünscht wird.

Es ist daher vorteilhaft, den Satz von verfügbaren relativen Kanalzugriffsmustern so zu gestalten, dass für unterschiedliche Szenarien bedarfsgerechte Kanalzugriffsmuster mit gewünschten Eigenschaften zur Verfügung stehen.

Die entscheidenden Designparameter für einen Satz von $K$ relativen Kanalzugriffsmustern sind

- in Frequenzrichtung die Anzahl der $F$ vorgegebenen Frequenzkanäle innerhalb eines Zeitschlitzes,
- in Zeitrichtung die Anzahl der $Z$ verfügbaren Zeitschlitze mit vorgegebener Zeitdauer $T_{RE}$, wobei pro Zeitindexelement nur ein Ressourcenelement in $Z$ eingeht,
- die aus Abschnitt A vorgegebene mittlere Aktivitätsrate $A$, mit deren Hilfe sich aus der relativen Zeitschlitzlänge eine absolute Zeitschlitzlänge $Z/A$ ergibt. Daraus kann dann bei vorgegebener Zeitdauer $T_{RE}$ eines Ressourcenelements die Gesamtframedauer $T_{Frame} = T_{RE} \cdot (Z / A)$ in Sekunden angeben werden,

- die Anzahl der $D$ Teil-Datenpakete, in die ein Datenpaket zerlegt wird, sowie der beim Datenpaket verwendete Fehlerkorrekturcode, was beispielsweise ein Block- oder Faltungscode mit vorgegebener Coderate $R$ sein kann. Üblicherweise ist die Anzahl der Teil-Datenpakete deutlich kleiner als die Anzahl der in Zeitrichtung zur Verfügung stehenden Ressourcelemente, also $D \ll Z$.

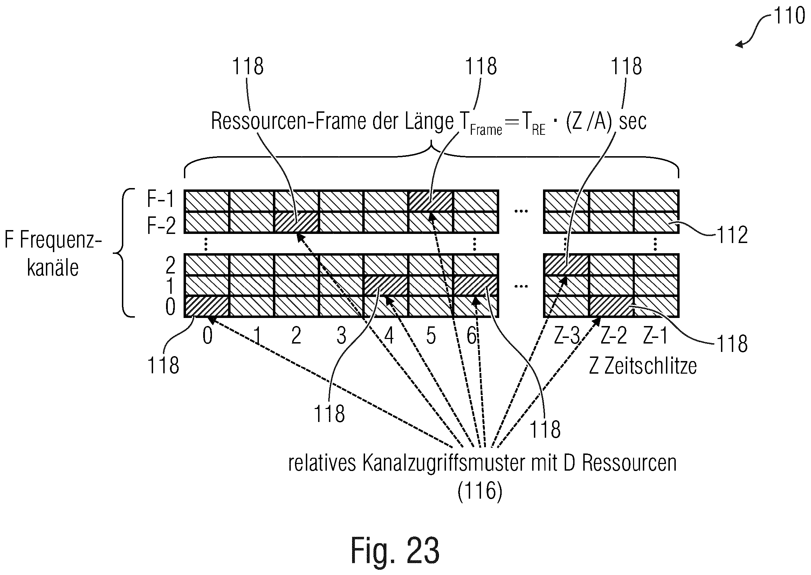

Fig. 23 zeigt in einem Diagramm eine Projektion eines netzwerkspezifischen Kanalzugriffsmusters 110 und eines relativen Kanalzugriffsmusters 116 mit D Ressourcen 112 auf die Zeitachse nach dem Entfernen ungenutzter Ressourcen (Frequenzkanäle und Zeitschlitze), gemäß einem Beispiel. Dabei beschreibt die Ordinate die relativen Frequenzkanalindizes, und die Abszisse die relativen Zeitschlitzindizes.

Fig. 23 zeigt dabei eine Darstellung eines Ressourcen-Frames mit $F \times Z$ Ressourcen und einer absoluten Gesamtlänge von $T_{RE} \cdot (Z / A)$ Sekunden.

In einem ersten Designschritt gilt es ausgehend von der Gesamtframedauer $T_{Frame}$ und der netzwerkspezifischen Aktivitätsrate A aus Abschnitt A sowie der Zeitdauer $T_{RE}$ für ein Ressourcelement die Anzahl der verfügbaren Ressourcelemente zu bestimmen.

Bei der Festlegung der Gesamtframedauer $T_{Frame} = T_{RE} \cdot (Z / A)$ kommt es auf den Anwendungsfall an. Bei einer Anwendung mit der Anforderung einer kurzen Latenzzeit wie beispielsweise einem drahtlosen Lichtschalter, einer Türklingel oder einem Türöffner, sollte $T_{Frame}$ nicht größer als 500 ms sein. Bei latenzunkritischen Anwendungen, bei denen mehr die Robustheit gegen externe Störer im Vordergrund steht, kann die Zeitdauer eines Ressourcen-Frames durchaus Werte von 5 bis 10 sec annehmen.

Auch die netzwerkspezifische Aktivitätsrate $A$ aus Abschnitt A wird vom Anwendungsfall beeinflusst. Bei latenzkritischen Anwendungen sollte die Aktivitätsrate relativ hoch sein, also zwischen $A=0.33$ und 1 liegen. Bei einem Wert von 0.33 wird im Mittel nur jeder dritte Zeitschlitz ins netzwerk-spezifische Kanalzugriffsmuster 110 aufgenommen, während die 2 anderen Zeitschlitze in diesem Netzwerk nicht genutzt werden. Bei latenzunkritischen Anwendungsfällen, insbesondere bei batteriebetriebenen Endgeräten, können die Werte für die Aktivitätsrate durchaus bis auf $A=0.1$ absinken.

Schlussendlich gilt es noch die Zeitdauer $T_{RE}$ eines Teil-Datenpakets bzw. Ressourcelements festzulegen. Bei einer Symbolrate $f_S$ von beispielsweise rund 2500 Sym/s und einer Anzahl von 30 bis 80 Symbolen pro Teil-Datenpaket ergeben sich Werte von 12 bis 32 ms für $T_{RE}$.

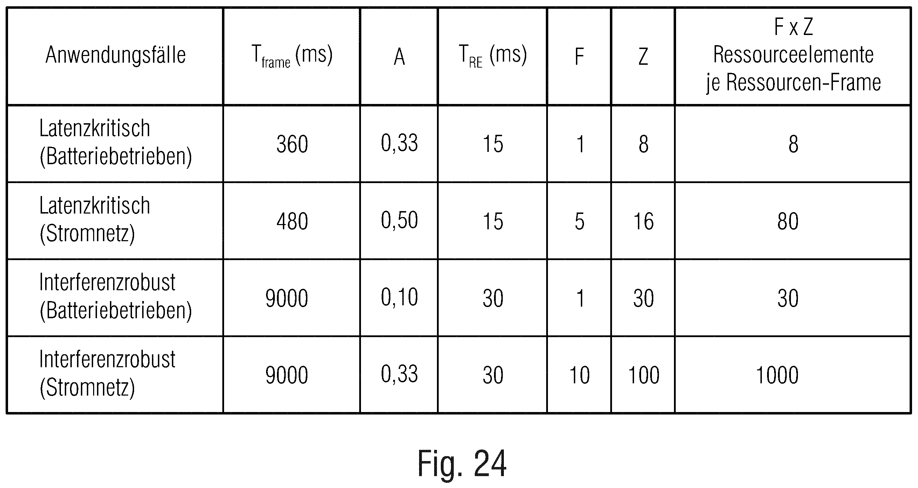

Aus den anwendungsspezifischen Vorgaben für $T_{Frame}$, $T_{RE}$ und $A$ lässt sich die Anzahl Z der in Zeitrichtung zur Verfügung stehenden Ressourcen bestimmen. Zusammen mit den $F$ vorgegebenen Frequenzkanälen ergeben sich dann die insgesamt zur Verfügung stehenden Ressourcen je Ressourcen-Frame. Wie in der in Fig. 24 gezeigten Tabelle dargestellt, können sich diese Werte je nach Anwendungsfall deutlich unterscheiden.

Im Detail zeigt Fig. 24 in einer Tabelle eine Ressourcenberechnung für verschiedene exemplarische Anwendungsfälle.

Wurden anhand des ersten Design-Schrittes die Anzahl der im Ressourcen-Frame zur Verfügung stehenden $FxZ$ Ressourcelemente ermittelt, so gilt es im zweiten Design-Schritt ausgehend von der Länge D eines jeden Kanalzugriffmusters sowie den zur Verfügung stehenden $F \times Z$ Ressourcelementen, die Anzahl $M$ der verschiedenen Kanalzugriffsmuster zu bestimmen.

In Abhängigkeit von den $F \times Z$ zur Verfügung stehenden Ressourcelementen gibt es

$$M_{max} = (Z! \cdot F^D) / ( (Z - D)! \cdot D! ) \qquad (1)$$

verschiedene Kanalzugriffsmuster der Länge $D$, die sich in mindestens einem Ressourcelement unterscheiden. In Gl. (1) wurde unterstellt, dass ein Muster je Zeitschlitzindex nur ein Ressourcelement aus allen $F$ Frequenzkanälen nutzen darf, siehe Fig. 20. Für das erste Beispiel aus der in Fig. 24 gezeigten Tabelle und einem $D=4$ ergibt sich nach Gleichung (1) ein $M_{max} = 70$ und für den letzten Fall ein $M_{max} = 8x10^{46}$ bei einem unterstellten $D = 24$. Wäre eine gleichzeitige Aussendung mehrerer Teil-Datenpakete auf mehreren Frequenzkanälen erlaubt, so wie Fig. 21 zeigt, dann würde $M_{max}$ nochmals massiv zunehmen.

Vorteilhafterweise sollte die Anzahl $D$ der Teilpakete möglichst groß gewählt werden, da dann die Robustheit gegenüber Störungen durch andere Teilnehmer, unabhängig davon, ob sie aus dem eigenen oder aus fremden Netzwerken stammen, am größten ist. Üblicherweise erfolgt bei IOT-basierter TSMA-Übertragung die Zerlegung eines Datenpakets in 10 bis 30 Teil-Datenpakete. Steht eine dieser Zahl von Teil-Datenpaketen entsprechende Übertragungszeit, wie beispielweise bei manchen latenzkritischen Anwendungen, nicht zur Verfügung, kann der Wert von $D$ auch kleiner ausfallen.

Generell gilt, dass je größer die Anzahl $M$ der zur Verfügung stehenden Kanalzugriffmuster gewählt wird, umso geringer die Wahrscheinlichkeit einer Vollkollision ausfällt. Von einer Vollkollision wird gesprochen, wenn zwei Endgeräte zufällig beide das gleiche Kanalzugriffmuster für ihre Übertragung wählen. Stehen beispielsweise $M = 128$ verschiedene Muster zur Verfügung, so liegt die Wahrscheinlichkeit einer Vollkollision bei *0.78125% (1/128),* wenn davon ausgegangen wird, dass jedes Endgerät sein Kanalzugriffmuster zufällig aus den *M* zur Verfügung stehenden Mustern auswählt. Bei einem *M = 1024* sinkt diese Kollisionswahrscheinlichkeit auf 0.0977%. Im Falle einer Vollkollision kann davon ausgegangen werden, dass je nach Empfangspegelverhältnis mindestens der Datenpaketinhalt des schwächer empfangenen Endgeräts nicht mehr fehlerfrei dekodiert werden kann, bei ähnlichen bzw. gleichen Empfangspegeln können sogar die Datenpakete beider Nutzer verlustig gehen. Der Vorteil des in [1] beschriebenen Telegrammaufteilungsverfahrens besteht darin, dass durch die verschiedenen Kanalzugriffmuster immer nur einige wenige Teil-Datenpakete kollidieren, welche sich durch den verwendeten Fehlerkorrekturcode jedoch wieder rekonstruieren lassen.

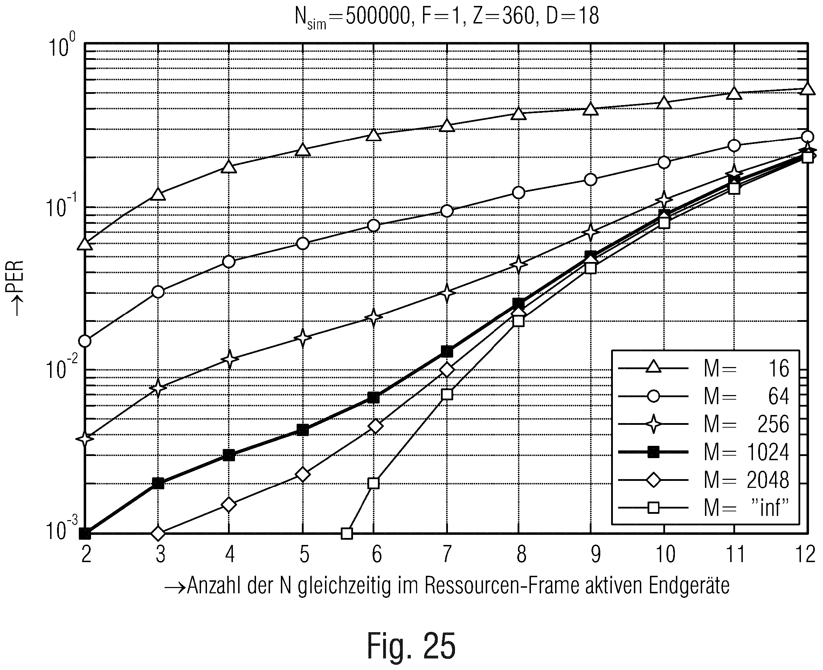

Fig. 25 zeigt in einem Diagramm Simulationsergebnisse der Paketfehlerrate für verschiedene Kanalzugriffmusterlängen *M* in Abhängigkeit von der Anzahl gleichzeitig aktiver Endgeräte bei 360 Ressourcenelementen. Dabei beschreibt die Ordinate die Paketfehlerrate PER und die Abszisse die Anzahl der *N* gleichzeitig im Ressourcen-Frame aktiven Endgeräte (z.B. Endpunkte).

Im Detail zeigen die Simulationsergebnisse aus Fig. 25 den Verlauf der Paketfehlerrate PER für verschiedene Längen M von Kanalzugriffmustern über die Anzahl *N* der gleichzeitig im Ressourcen-Frame aktiven Endgeräte, wobei als Fehlerschutz ein Faltungscode mit Rate *R=1/3* verwendet wurde. Weiterhin wurden ein *F = 1* und *Z = 360* vorausgesetzt und die Kanalzugriffmusterlänge belief sich auf *D = 18.*

Bei *N = 2* Endgeräten können die verschiedenen Vollkollisions-Wahrscheinlichkeiten in Abhängigkeit von *M* erkannt werden. Je größer das vorgegebene *M*, desto niedriger liegen die Ausfallwahrscheinlichkeiten der PER-Kurven der verschiedenen Kanalzugriffmusterlängen. Bei einem *M = 1024* werden *1024* verschiedene Kanalzugriffmuster zufällig aus den $M_{max}$ möglichen ausgewählt und die *N* Endgeräte (z.B. Endpunkte) wählen ihr verwendetes (relatives) Kanalzugriffmuster für die 500.000 Übertragungsversuche ebenfalls immer nach dem Zufallsprinzip aus. Bei *M = 'inf'* werden für jeden Übertragungsversuch immer neue Kanalzugriffmuster für jedes einzelne Endgerät (z.B. Endpunkt) heraus gewürfelt. Die Vollkollisions-Wahrscheinlichkeiten bei *N = 2* ist in diesem Fall dann 0%, da nach Gl. (1) nahezu unendlich viele Kanalzugriffmuster möglich sind. Wächst die Anzahl *N* der gleichzeitig aktiven Endgeräte, so steigt die Kollisionswahrscheinlichkeit der einzelnen Teil-Datenpakete und die Paketfehlerrate wächst dadurch an. Bei *N = 10* Endgeraten beträgt die Paketfehlerrate für alle Kurven von *M = 256* bis *M = 'inf'* ungefähr 10%.

Wie aus Fig. 25 ersichtlich, liefert die Wahl von *M = 'inf'* die beste Performance. Allerdings ist auf Seiten der Basisstation das Erkennen der verschiedenen Kanalzugriffmuster bei *M = 'inf'* nahezu unmöglich. Insofern muss M auf ein realistisches Maß reduziert werden. Für ein $M_{max} > 10^{14}$ dürfte eine Vorgabe von *M = 1024* sinnvoll sein. Beeinflusst wird diese Wahl auch von der auf Empfängerseite zur Verfügung stehenden Rechenleistung. Es ist erkennbar, dass der Performanceverlust gegenüber der Version mit *M = 'inf'* bei der Wahl von *M = 1024* nicht besonders groß ist.

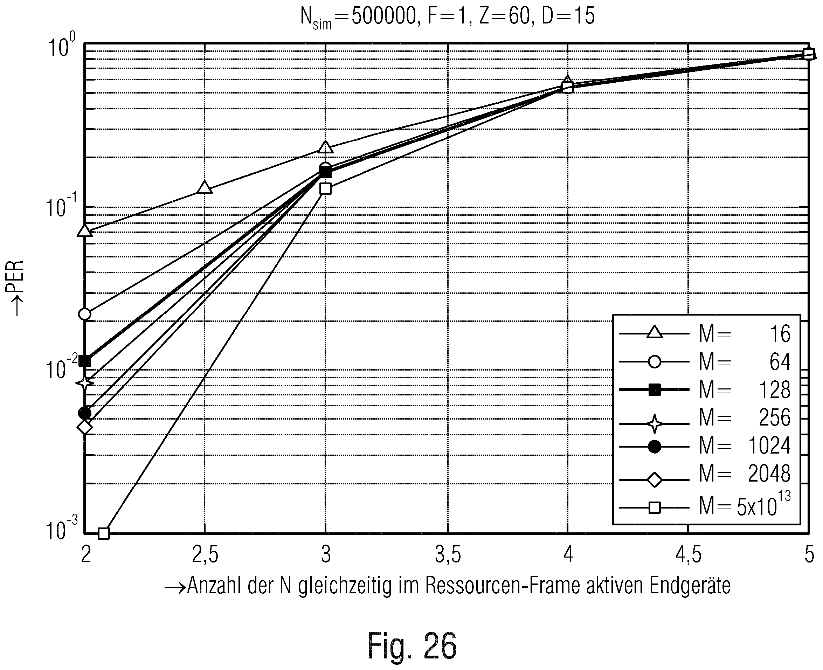

Bei kleineren Werten von $M_{max}$ können auch die Längen der Kanalzugriffmuster abnehmen, ohne dass deutliche Performanceverluste bei der PER in Kauf genommen werden müssen. Dies ist in Fig. 26 für ein *Z = 60* und *D* = 15 veranschaulicht. Die Performancekurven für die Längen *M = 128* bis *M = 2048* unterscheiden sich lediglich bei *N = 2* geringfügig.

Fig. 26 zeigt in einem Diagramm Simulationsergebnisse der Paketfehlerrate für verschiedene Kanalzugriffmusterlängen M in Abhängigkeit von der Anzahl gleichzeitig aktiver Endgeräte bei 60 Ressourcenelementen. Dabei beschreibt die Ordinate die Paketfehlerrate PER und die Abszisse die Anzahl der N gleichzeitig im Ressourcen-Frame aktiven Endgeräte (z.B. Endpunkte).

Zusammenfassend gilt festzuhalten, dass die Bestimmung der Anzahl M verschiedener Kanalzugriffsmuster abhängig von $M_{max}$ und damit eine Funktion von F, Z und D ist. Für $M_{max} > 10^{14}$ erweist sich beispielsweise ein M = 1024 als sinnvoll. Sinkt der Wert von $M_{max}$ unter die Schwelle von $10^{14}$, so kann M entsprechend verkleinert werden, wobei mit Simulationen zu überprüfen ist, inwieweit die PER-Performance noch den Anforderungen genügt. Für sehr große Werte von $M_{max}$ kann M durchaus Werte annehmen die noch größer wie 1024 sind. Dies kann durch entsprechende Simulationen bestimmt werden.

Im zweiten Design-Schritt wurde die Anzahl M der verschiedenen Kanalzugriffsmuster und deren Länge D festgelegt. Idealerweise werden die einzelnen Kanalzugriffsmuster mittels Zufallsgenerator bestimmt, wodurch zwischen den M einzelnen Mustern möglichst wenig Zusammenhang oder Ähnlichkeit besteht. Auf Empfängerseite bedeutet dies in der Regel einen sehr großen Detektionsaufwand. Um diesen Detektionsaufwand zu reduzieren, wird im dritten Design-Schritt versucht, den Kanalzugriffsmustern strukturelle Eigenschaften, wie Clusterung oder wiederholende Muster zu geben, um die Rechenkomplexität auf Empfängerseite deutlich zu reduzieren. Die PER-Performance, wie beispielsweise in den Fig. 25 und 26 gezeigt, soll sich dadurch möglichst nicht verschlechtern.

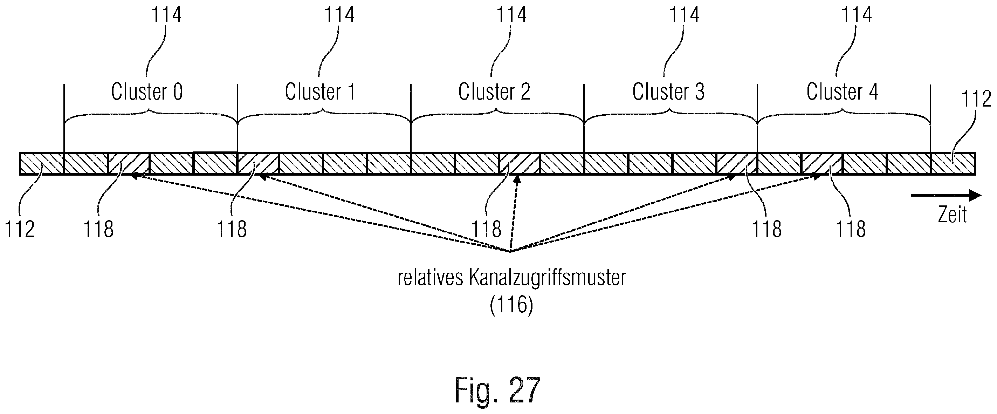

Eine Möglichkeit ist die Unterteilung des Ressourcen-Frames in Cluster 114 gleicher Länge L, wie dies in Fig. 27 gezeigt ist.

Im Detail zeigt Fig. 27 in einem Diagramm auf eine Zeitachse projizierte Ressourcen 112 eines Kanalzugriffsmusters 110, wobei Ressourcen 112 des Kanalzugriffsmusters 110 zu Clustern 114 gleicher Länge L (z.B. L=4) gruppiert werden, wobei das relative Kanalzugriffsmuster eine Belegung von einer Ressource 118 pro Cluster 114 angibt, gemäß einem Beispiel. Mit anderen Worten, Fig. 27 zeigt ein Kanalzugriffsmuster mit jeweils einem Element je Cluster der Länge L = 4

Eine Clustervariante wäre, die Länge *Z* des Ressourcen-Frames durch die Anzahl der *D* Teil-Datenpakete zu teilen. Dadurch ergibt sich eine maximale Clusterlänge von *L = floor(R/D)*. In dem Beispiel von Fig. 25 ergäbe sich dann eine Clusterlänge von *L = 20 (360/18)* Ressourcenelementen.

Die Clusterlänge kann auch kleiner als *L = floor(R/D)* gewählt werden und die dann noch verbleibenden Ressourcenelemente dazu genutzt werden, das aus den kleineren Cluster generierte Grundmuster anschließend um jeweils einen Zeitindexschritt, also um ein Ressourcenelement weiterzuschieben, um dadurch weitere Muster zu generieren, die alle die gleiche Grundform haben.

Im Beispiel Fig. 26 kann beispielsweise *L = 10* vorgegeben werden. Aus den *L x D (= 180)* Ressourcenelementen wird dann ein einziges Kanalzugriffsmuster ausgewürfelt, welches anschließend *R - L x D* mal, also 180-mal, jeweils um einen Zeitindexschritt verschoben, weiterverwendet werden kann. Dadurch werden 181 verschiedene Kanalzugriffsmuster erhalten, die aber alle das gleiche Grundmuster aufweisen. Beispielsweise lässt sich die Kanalzugriffsmusterlänge *M = 1024* aus Fig. 25 mit lediglich 7 verschiedenen Grundmustern erzeugen, wobei jede dieser Grundmuster im Mittel 145 in der Zeitachse verschoben wird. Die Performance wird dabei nur unwesentlich schlechter.

Insgesamt wird durch die obige Vorgehensweise der empfängerseitige Detektionsaufwand deutlich reduziert. Es gilt aber immer wieder zu überprüfen, dass die Performance gegenüber der mit reinen Zufallsfolgen gewonnen Performance nicht leidet.

## C. Synchronisations-Bake (engl. sync beacon)

Es wird im Folgenden vorausgesetzt, dass es innerhalb jedes Netzwerks eine koordinierende Instanz (im Folgenden "Basisstation" genannt) sowie nicht-koordinierende Teilnehmer (im Folgenden "Endgeräte" oder "Endpunkt" genannt) gibt.

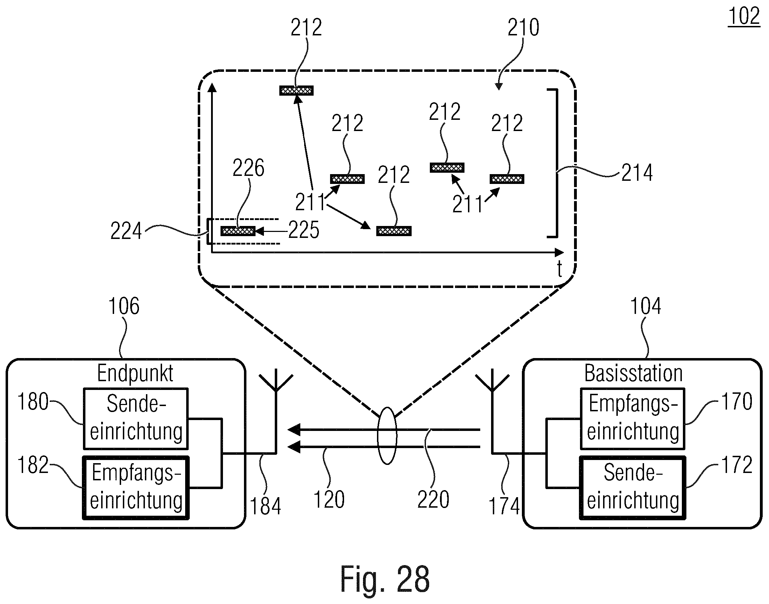

Fig. 28 zeigt ein schematisches Blockschaltbild eines Kommunikationssystems 102 mit einer Basisstation 104 und einem Endpunkt 106, gemäß einem Ausführungsbeispiel der vorliegenden Erfindung.

Wie in Fig. 28 beispielhaft gezeigt ist, kann die Basisstation 104 eine Sendeeinrichtung (oder Sender, oder Sendemodul, oder Transmitter) 172 aufweisen, die ausgebildet ist, um Signale, wie z.B. das Steuersignal 120, zu senden. Die Sendeeinrichtung 172 kann mit einer Antenne 174 der Basisstation 104 verbunden sein. Die Basisstation 104 kann ferner eine Empfangseinrichtung (oder Empfänger, oder Empfangsmodul, oder Receiver) 170 aufweisen, die ausgebildet ist, um Signale, wie z.B. das Aktivierungssignal 122 und das Datensignal 124, zu empfangen. Die Empfangseinrichtung 170 kann mit der Antenne 174 oder einer weiteren (separaten) Antenne der Basisstation 104 verbunden sein. Die Basisstation 104 kann auch eine kombinierte Sendeempfangseinrichtung (Transceiver) aufweisen.

Der Endpunkt 106 kann eine Empfangseinrichtung (oder Empfänger, oder Empfangsmodul, oder Receiver) 182 aufweisen, die ausgebildet ist, um Signale, wie z.B. das Steuersignal 120, zu empfangen. Die Empfangseinrichtung 182 kann mit einer Antenne 184 des Endpunkts 106 verbunden sein. Ferner kann der Endpunkt 106 eine Sendeeinrichtung (oder Sender, oder Sendemodul, oder Transmitter) 180 aufweisen, die ausgebildet ist, um Signale, wie z.B. das Aktivierungssignal 122 und das Datensignal 124, zu senden. Die Sendeeinrichtung 180 kann mit der Antenne 184 oder einer weiteren (separaten) Antenne des Endpunkts 106 verbunden sein. Der Endpunkt 106 kann auch eine kombinierte Sendeempfangseinrichtung (Transceiver) aufweisen.

Wie in den Abschnitten A und B erläutert wurde, ist das Kommunikationssystem 102 ausgebildet, um in einem Frequenzband, welches von einer Mehrzahl von untereinander unkoordinierten Kommunikationssystemen zur Kommunikation genutzt wird, drahtlos zu kommunizieren.

Zur Koordinierung der Teilnehmer des Kommunikationssystems 102 wird ein Signal bzw. Baken-Signal 120, auch Steuersignal genannt, ausgesendet, wobei das Steuersignal 120 eine Information über ein netzwerkspezifisches Kanalzugriffsmuster 110 aufweist, wobei das netzwerkspezifische Kanalzugriffsmuster 110 eine für die Kommunikation des Kommunikationssystems 120 verwendbare frequenz- und/oder zeitsprungbasierte Belegung von Ressourcen 112 des Frequenzbands angibt.

Dieses Steuersignal 120 wird entsprechend einer durch ein Steuersignalsprungmuster 210 angegebenen frequenz- und zeitsprungbasierten Belegung von Ressourcen 211 des Frequenzbands verteilt übertragen. Der Frequenzbereich 214 des Frequenzbands, über den das Steuersignal 120 entsprechend des Steuersignalsprungmusters 210 verteilt übertragen wird, ist dabei wesentlich größer (z.B. um den Faktor 5, 10, 15, 20, 30, 40 oder 50 größer) als ein Empfangsbandbreite eines Empfängers 182 des Endpunkts 106. Beispielsweise kann das Steuersignal 120 eine Mehrzahl von Teil-Steuerdatenpaketen 212 aufweisen, wobei die Mehrzahl von Teil-Steuerdatenpaketen 212 in den durch das Steuersignalsprungmuster 210 definierten Ressourcen 211 verteilt übertragen werden.

Bei Ausführungsbeispielen der vorliegenden Erfindung wird daher von der Basisstation 104 ein Referenzsignal 220 (oder Synchronisationssignal) in einem vorgegebenen Frequenzbereich 224 (z.B. einem oder mehreren Frequenzkanälen) des Frequenzbands gesendet, wobei das Referenzsignal 220 eine Information über das Steuersignal 120 aufweist.

Wie in Fig. 28 angedeutet ist, kann das Referenzsignal 220 in zumindest einer Ressource 225 (z.B. definiert durch Frequenzkanal und Zeitschlitz) des vorgegebenen Frequenzbereichs 224 übertragen werden.

Der vorgegeben Frequenzbereich 224 ist dabei dem Endpunkt 106 bekannt. Der Endpunkt 106 kann daher ausgebildet sein, um in einer Anmeldephase eine Empfangsfrequenz des Empfängers 182 auf den vorgegebenen Frequenzbereich 224 zu legen, um das Referenzsignal 220 zu empfangen.

Bei Ausführungsbeispielen kann der vorgegebene Frequenzbereich 224 an eine Empfangsbandbreite des Empfängers 182 des Endpunkts 106 angepasst sein.

Beispielsweise kann der vorgegebene Frequenzbereich 224 einen Frequenzkanal oder mehrere benachbarte Frequenzkanäle umfassen, wie z.B. zwei bis sechs (oder drei bis vier) benachbarte Frequenzkanäle. Typischerweise weist der Empfänger 182 des Endpunkts 106 eine Empfangsbandbreite von wenigen 100 kHz auf (z.B. 100 kHz, 200kHz oder 300 kHz), wobei die Frequenzkanäle, in die das Frequenzband zum Zugriff durch das Kommunikationssystem unterteilt ist, eine Bandbreite von ca. 50 kHz (z.B. zwischen 30 kHz und 70 kHz) aufweisen kann.

Nach dem Empfangen des Referenzsignals 220 kann der Endpunkt 106 die Information über das Steuersignal 120 aus dem empfangenen Referenzsignal ermitteln / extrahieren, um das Steuersignal 120 basierend auf der Information über das Steuersignal 120 zu empfangen.

Die Information über das Steuersignal 120 kann beispielsweise eine Information über das Steuersignalsprungmuster 210 aufweisen, wie z.B. das Steuersignalsprungmuster 210 selbst oder eine Information von der das Steuersignalsprungmuster 210 ableitbar ist, wie zum Beispiel ein Steuersignalsprungmusterindex, der das Steuersignalsprungmuster 210 aus einem Satz von Steuersignalsprungmustern, denen unterschiedliche Steuersignalsprungmusterindizes zugeordnet sind, eindeutig identifiziert.

Ferner kann die Information über das Steuersignal 120 eine Information über eine Zeit- und Frequenzlage des Steuersignals 120 in Bezug auf das Referenzsignal 220 aufweisen.

Basierend auf dieser Information kann der Endpunkt 106 anschließend das Steuersignal 120 empfangen, beispielsweise durch Umschalten der Empfangsfrequenz des Empfängers 182 des Endpunkts auf die jeweiligen durch das Steuersignalsprungmuster 210 angegebenen Ressourcen des Frequenzbands (z.B. definiert durch Zeitschlitze und Frequenzkanäle, in die das Frequenzband unterteilt ist).

Ausführungsbeispiele der vorliegenden Erfindung ermöglichen es also Teilnehmern (z.B. dem Endpunkt 106), welche nicht in der Lage sind eine breitbandige Übertragung in voller Bandbreite zu empfangen und in Echtzeit zu verarbeiten, sich trotzdem in das Kommunikationsnetzwerk 102 initial zu synchronisieren und nachfolgend anzumelden.

Im folgenden Unterabschnitt werden detaillierte Ausführungsbeispiele des Detektionsvorgangs des Steuersignals 120, nachfolgend auch Bake genannt, in dem sich die eindeutige Information über das verwendete Kanalzugriffsmuster 110 befindet, beschrieben.

### C.1 Aussendung von Sync-(Teil-)Datenpaketen vor der Bake

Die in typischen Netzwerken eingesetzten Signale mit Bandbreiten von mehreren MHz können von Teilnehmern, die sehr günstige Hardware verwenden und/oder batteriebetrieben sind in der Regel nicht gleichzeitig in voller Bandbreite empfangen und/oder verarbeitet werden.

Typischerweise können die auf solchen Teilnehmern verbauten Funkchips eine Bandbreite von wenigen 100kHz zur Verfügung stellen. Die Rechenleistung solcher Teilnehmer ist zudem so ausgelegt, dass eine rechtzeitige Verarbeitung dieser Bandbreiten möglich sein sollte.

Bei Ausführungsbeispielen wird vor dem Steuersignal 120 daher ein Referenzsignal 220 ausgesendet, wobei das Referenzsignal eine Information über das Steuersignal aufweist, wobei die Information über das Steuersignal, die das Referenzsignal aufweist, eine Information über das Steuersignalsprungmuster oder eine Information über die vom Kommunikationssystem zur Übertragung des Steuersignals verwendbaren Ressourcen des Frequenzbands aufweist, wobei das Referenzsignal in einem vorgegebenen Frequenzbereich des Frequenzbands übertragen wird, wobei das Referenzsignal eine Mehrzahl von Teil-Referenzdatenpaketen aufweist, die die Information über das Steuersignal enthalten, wobei das Referenzsignal entsprechend eines Referenzsprungmusters übertragen wird, wobei das Referenzsprungmuster eine frequenz- und/oder zeitsprungbasierte Belegung von Ressourcen des vorgegebenen Frequenzbereichs angibt, wobei der Endpunkt ausgebildet ist, um das Referenzsignal entsprechend des Referenzsprungmusters zu empfangen, um zumindest einen zur Dekodierung ausreichenden Teil der Mehrzahl von Teil-Referenzdatenpaketen zu.

Im Folgenden werden weitere Ausführungsbeispiele beschrieben.

Damit diese Geräte trotzdem die Möglichkeit haben, sich auf ein solches Netzwerk zu synchronisieren und anschließend die Bake (oder das Steuersignal 120) empfangen zu können, wird gemäß Ausführungsbeispielen also innerhalb einer Bandbreite von ca. 100 kHz die notwendige Information für das (relative) Kanalzugriffsmuster (oder Steuersignalsprungmuster 210), sowie die Frequenz- und Zeitlage der Bake (des Steuersignals 120) übertragen.

Nach der Extraktion der notwendigen Daten kann der Teilnehmer die zeitliche(n) Position(en) und den Frequenzkanal / die Frequenzkanäle der Bake (oder des Steuersignals 120) ermitteln und entsprechend durch umschalten der Trägerfrequenz die (Teil-)Pakete (oder Teil-Steuerdatenpakete 212) der Bake (oder des Steuersignals 120) empfangen.

Um dies zu erreichen, kann in einem zeitlich definierten Abstand vor der Bake (oder dem Steuersignal 120) ein sog. Sync-(Teil-)Datenpaket (oder Referenzsignal 220 mit einem Referenzdatenpaket 226) auf einer fest definierten Frequenz ausgesendet werden. Dieses Sync-(Teil-)Datenpaket (oder Referenzdatenpaket 226) kann von neuen Teilnehmern verwendet werden, um den Beginn der Bake (des Steuersignals 120) zu bestimmen.

Wird die Bake (oder das Steuersignal 120) mittels eines Kanalzugriffsmusters (oder Steuersignalsprungmusters 210) ausgesendet, muss in diesem Sync-(Teil-)Datenpaket (ode Referenzdatenpaket 120) eine Information enthalten sein, über welche auf das Kanalzugriffsmuster (oder Steuersignalsprungmuster 210), sowie Zeit- und Frequenzlage der Bake (oder Steuersignals 120) geschlossen werden kann.

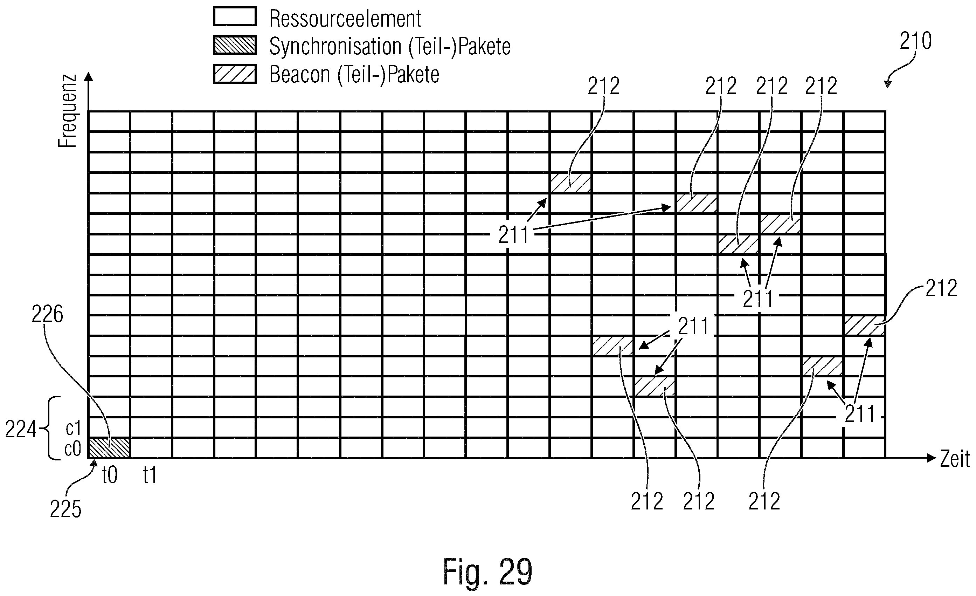

Eine solche Aussendung eines Sync-(Teil-)Datenpakets (oder Referenzdatenpaket 226) vor der eigentlichen Aussendung ist in Fig. 29 zu sehen.

Im Detail zeigt Fig. 29 in einem Diagramm eine Belegung von Ressourcen 225 des Frequenzbands bei der Übertragung des Referenzsignals 220 mit einem Referenzdatenpaket 226 sowie eine durch das Steuersignalsprungmuster 210 angegebenen Belegung von Ressourcen 211 des Frequenzbands bei der Übertragung des Steuersignals 120 mit der Mehrzahl von Teil-Steuerdatenpaketen 212, gemäß einem Ausführungsbeispiel der vorliegenden Erfindung. Dabei beschreibt die Ordinate die Frequenz in Frequenzkanälen und die Abszisse die Zeit in Zeitschlitzen. Mit anderen Worten, Fig. 29 zeigt eine Aussendung eines Sync-(Teil-)Datenpakets (oder Referenzdatenpakets 226) vor der eigentlichen Aussendung vor der Bake (oder dem Steuersignal mit der Mehrzahl von Teil-Steuerdatenpaketen 212).

In Fig. 29 enthält das Sync-(Teil-)Datenpaket (oder Referenzdatenpaket 226) die Information über das in der Bake (oder dem Steuersignal 120) verwendete Kanalzugriffsmuster (oder Steuersignalsprungmuster 210). Der Abstand zwischen dem Sync-(Teil-)Datenpaket (oder Referenzsignal 220 mit dem Referenzdatenpaket 226) und der Bake (oder dem Steuersignal 120) ist fest definiert.

Bei der nächsten Aussendung einer Bake (oder des Steuersignals 120) kann das Kanalzugriffsmuster (oder Steuersignalsprungmuster 210), ein anderes sein. Das heißt das Kanalzugriffsmuster (oder Steuersignalsprungmuster 210) ist zeitvariant. Die Aussendung des Sync-(Teil-)Datenpakets (oder Referenzdatenpakets 226) muss nur immer auf dem gleichen Frequenzkanal (oder innerhalb des gleichen Frequenzbereichs (=vorgegebener Frequenzbereich 224)) erfolgen, welcher dem Empfänger vorher bekannt ist, damit einfache Empfänger dies mit geringer Bandbreite empfangen können.

Bei Ausführungsbeispielen wird vor der Aussendung der Bake (oder des Steuersignals 120) zeitlich referenziert ein Sync-(Teil-)Datenpaket (oder Referenzdatenpaket 226) ausgesendet, welches die notwendige Information über das in der Bake (oder dem Steuersignal 210) verwendete Kanalzugriffsmuster (oder Steuersignalsprungmuster 210) enthält.

**C.2 Aufteilung von Sync-(Teil-)Datenpaketen in mehrere Teildatenpakete**

Bei Ausführungsbeispielen ist das Referenzdatenpaket 226 (z.B. Synchronisationsdatenpaket), das die Information über das Steuersignal 120 aufweist, auf eine Mehrzahl von Teil-Referenzdatenpaketen 227 aufgeteilt werden, so dass jedes der Teil-Referenzdatenpakete 227 nur einen Teil des Referenzdatenpakets 226 aufweist.

Bei Ausführungsbeispielen wird das Referenzsignal 220 mit der Mehrzahl von Teil-Referenzdatenpaketen 227 entsprechend eines Referenzsprungmusters 228 übertragen, wobei das Referenzsprungmuster 228 eine frequenz-und/oder zeitsprungbasierte Belegung von Ressourcen des vorgegebenen Frequenzbereichs 224 angibt.

Bei Ausführungsbeispielen sind die Mehrzahl von Teil-Referenzdatenpaketen 227 kanalcodiert, so dass nur eine Teilmenge der Mehrzahl von Teil-Referenzdatenpaketen 227 zur erfolgreichen Decodierung des Referenzdatenpakets 226 erforderlich ist.

Bei Ausführungsbeispielen ist der vorgegebene Frequenzbereich 224 breiter als die Empfangsbandbreite des Empfängers 182 des Endpunkts 106, wobei entsprechend des Referenzsprungmusters 228 pro Teilbandbreite des vorgegebenen Frequenzbereichs 224, die der Empfangsbandbreite des Empfängers 182 des Endpunkts 106 entspricht, mindestens so viele der Mehrzahl von Teil-Referenzdatenpaketen 227 übertragen werden, wie für die erfolgreiche Decodierung des Referenzdatenpakets 226 erforderlich sind.

Im Folgenden werden weitere Ausführungsbeispiele beschrieben.

In Unterabschnitt C.1 wurde ein Sync-(Teil-)Datenpaket (oder Referenzsignal 220 mit einem Referenzdatenpaket 226) eingeführt welches zeitlich referenziert zu einer folgenden Bake (oder einem folgenden Steuersignal 120) ausgesendet wird. Diese Bake enthält ebenfalls die Information, wie sich das Kanalzugriffsmuster der Bake zusammensetzt.

Im Vergleich zur Bake (oder zum Steuersignal 120), welche typischerweise in mehrere Teildatenpakete unterteilt ist, handelt es sich bei dem Sync-(Teil-)Datenpaket (oder Referenzdatenpaket 226) gemäß den bisherigen Ausführungen nur um ein einzelnes Ressource-Element (oder um ein einzelnes Datenpaket welches in einer Ressource 225 (z.B. definiert durch Frequenzkanal und Zeitschlitz) übertragen wird).

Liegt eine Störung während dieser Übertragung vor, ist es neuen Teilnehmern in der Regel nicht mehr möglich die Daten aus diesem Sync-(Teil-)Datenpaket (oder Referenzdatenpaket 226) zu extrahieren.

Die typische Bandbreite eines Frequenzkanals in Fig. 29 liegt bei unter 50 kHz. Die Low-Cost Teilnehmer (dt. kostengünstigen Teilnehmer) können jedoch typischerweise bis 100 kHz und mehr echtzeitfähig verarbeiten.

Damit ist es den Teilnehmern möglich zumindest zwei Frequenzkanäle parallel zu empfangen und abzusuchen.

Es bietet sich an, das Sync-(Teil-)Datenpaket (oder Referenzdatenpaket 226) mittels Telegram-Splitting ebenfalls aufzuteilen. Aufgrund der sehr begrenzten Größe an Nutzdaten im Sync-(Teil-)Datenpaket (oder Referenzdatenpaket 226) sind typischerweise nicht mehr als 5 Teildatenpakete (oder Teil-Referenzdatenpakete) notwendig.

Wird eine Codierung eingesetzt, die es zulässt, dass zumindest ein Teildatenpaket (oder Teil-Referenzdatenpaket) verloren gehen kann, kann das Sprungmuster (oder Referenzsignalsprungmuster) für das aufgeteilte Sync-Datenpaket (oder Referenzdatenpaket 226) so gewählt werden, dass eine größere Bandbreite belegt ist als von dem Low-Cost-Teilnehmer empfangen werden kann. Wichtig ist nur, dass der Low-Cost-Empfänger unabhängig von Quarzoffset immer zumindest die minimale Anzahl an notwendigen Ressourcenelementen empfangen kann.

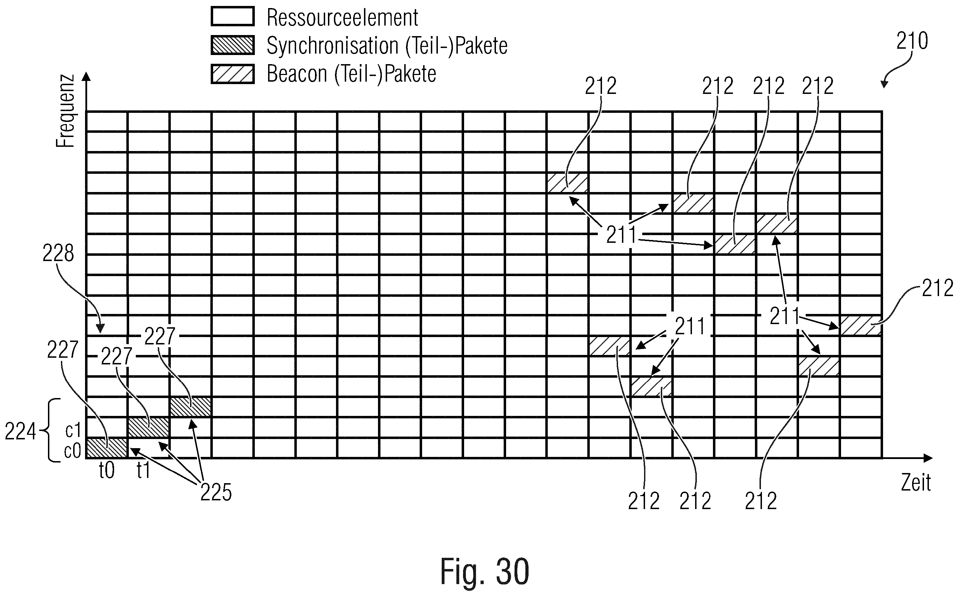

Fig. 30 zeigt in einem Diagramm eine durch ein Referenzsignalsprungmuster 228 definierte Belegung von Ressourcen 225 des vorgegebenen Frequenzbereichs 224 des Frequenzbands bei der Übertragung des Referenzsignals 220 mit einer Mehrzahl von Teil-Referenzdatenpaketen 227 sowie eine durch ein Steuersignalsprungmuster 210 angegebene Belegung von Ressourcen 211 des Frequenzbands bei der Übertragung des Steuersignals 120 mit der Mehrzahl von Teil-Steuerdatenpaketen 212, gemäß einem Ausführungsbeispiel der vorliegenden Erfindung. Dabei beschreibt die Ordinate die Frequenz in Frequenzkanälen und die Abszisse die Zeit in Zeitschlitzen.

Mit anderen Worten, Fig. 30 zeigt eine Unterteilung des Sync-Datenpakets (oder Referenzdatenpakets 226) in drei Subpakete (oder Teil-Referenzdatenpakete 227), wobei diese auf verschiedenen Frequenzen übertragen werden.

In Fig. 30 wurde das Sync-Datenpaket (oder Referenzdatenpaket 226) also in drei Teildatenpakete (oder Teil-Referenzdatenpakete 227) unterteilt und auf den Frequenzkanälen c0 bis c2 übertragen. Es könnte zwischen den Teildatenpaketen (oder Teil-Referenzdatenpakete 227) auch eine Pause bei der Übertragung eingefügt werden und die Anordnung der Teildatenpakete (oder Teil-Referenzdatenpakete 227) zu den Frequenzen anders gewählt werden. Wichtig ist nur, dass diese Struktur für alle weiteren Baken (oder Aussendungen des Steuersignals 220) beibehalten wird und dem Teilnehmer vorab bekannt ist.

Bei Ausführungsbeispielen kann die Aussendung des Sync-Datenpakets (oder Referenzdatenpakets 226) in Teildatenpakete (oder Teil-Referenzdatenpakete 227) unterteilt werden, wobei diese so platziert werden, dass ein Low-Cost-Teilnehmer zumindest einen Teil von diesen Teildatenpaketen (oder Teil-Referenzdatenpakete 227) empfangen kann. Das bedeutet, innerhalb der Bandbreite des Low-Cost-Empfängers müssen zumindest die für den fehlerfreien Empfang minimal notwendige Anzahl an Teildatenpaketen (oder Teil-Referenzdatenpaketen 227) liegen.

### C.3 Variation der Frequenzen der Sync-(Teil-)Datenpakete

Bei Ausführungsbeispielen kann das Referenzsignal 220 wiederholt (z.B periodisch) ausgesendet werden, wobei das Referenzsignal 220 abwechselnd in zumindest zwei vorgegeben Teilfrequenzbereichen des vorgegebenen Frequenzbereichs 224 ausgesendet werden kann.

Bei Ausführungsbeispielen können die zumindest zwei vorgegebenen Teilfrequenzbereiche in der Frequenz so weit voneinander getrennt sein, dass eine durch einen Frequenzversatz bedingte versehentliche Synchronisation auf den jeweils anderen vorgegebenen Teilfrequenzbereich nicht möglich ist.

Bei Ausführungsbeispielen können die Frequenzkanäle der zumindest zwei vorgegebenen Teilfrequenzbereiche frequenzmäßig so weit voneinander getrennt sein, dass auch mit Frequenzversatz benachbarte Frequenzkanäle nicht überlappen.

Bei Ausführungsbeispielen kann eine durch das Referenzsprungmuster angegebene Belegung von Ressourcen der jeweiligen vorgegebenen Teilfrequenzbereiche keine wiederholenden identischen Abstände zwischen den Ressourcen in der Zeit und/oder Frequenz aufweist.

Im Folgenden werden weitere Ausführungsbeispiele beschrieben.

In den in den Abschnitten C.1 und C.2 beschriebenen Ausführungsbeispielen wird das / werden die Sync-(Teil-)Datenpaket(e) immer auf der gleichen Frequenz bzw. auf den gleichen (benachbarten) Frequenzen übertragen, um Low-Cost-Teilnehmern eine Synchronisation in das Netzwerk zu ermöglichen.

Die Aussendung der Bake (oder des Steuersignals 120) erfolgt jedoch in einem größeren Frequenzbereich. Dadurch ist die Störsicherheit der Bake (oder des Steuersignals 120) im Vergleich zu den Sync-(Teil-)Datenpaket(en) (oder dem Referenzdatenpaket 125 / den Teil-Referenzdatenpaketen 127) größer. Des Weiteren kann es bei statischen Szenarien vorkommen, dass die wenigen Frequenzkanäle der Sync-(Teil-)Datenpakete (oder Teil-Referenzdatenpakete 127) genau in einem Fading-Loch liegen und deshalb nie von einem Teilnehmer empfangen werden.

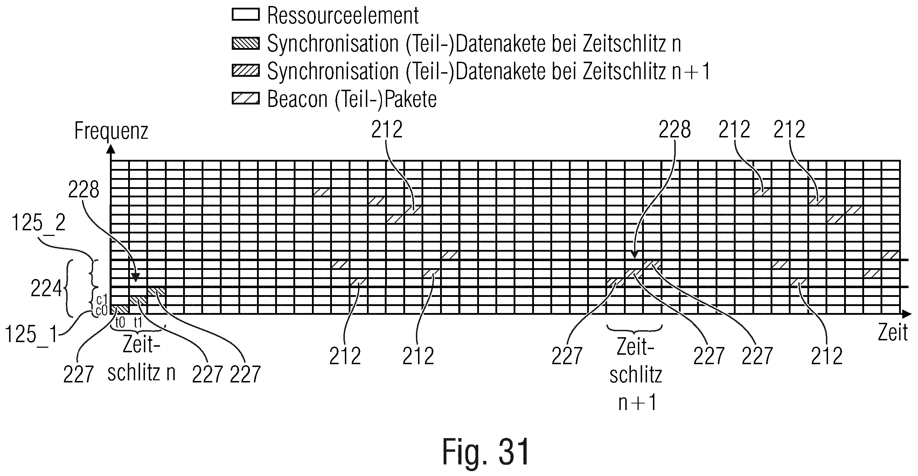

Bei Ausführungsbeispielen kann die Aussendung der Sync-(Teil-)Datenpakete (oder Teil-Referenzdatenpakete 127) periodisch vor jeder Bake die Frequenzlage ändern. Dieses Schema zeigt Fig. 31.

Im Detail zeigt Fig. 31 in einem Diagramm eine durch ein Referenzsignalsprungmuster 228 definierte Belegung von Ressourcen des Frequenzbands bei der wiederholten Aussendung des Referenzsignals 220 mit der Mehrzahl von Teil-Referenzdatenpaketen 227 in unterschiedlichen Teilfrequenzbereichen 125_1, 125_2 des vorgegebenen Frequenzbereiches 124 sowie eine durch ein Steuersignalsprungmuster 210 definierte Belegung von Ressourcen des Frequenzbands bei der wiederholten (periodischen) Übertragung des Steuersignals 120 mit der Mehrzahl von Teil-Steuerdatenpaketen 212, gemäß einem Ausführungsbeispiel der vorliegenden Erfindung. Dabei beschreibt die Ordinate die Frequenz in Frequenzkanälen und die Abszisse die Zeit in Zeitschlitzen.

Mit anderen Worten, Fig. 31 zeigt eine Variation der Frequenzkanäle der Sync-(Teil-)Datenpakete (oder Teil-Referenzdatenpakete 227). In Fig. 31 werden im Zeitslot n (oder in einer ersten Gruppe von Zeitschlitzen (t0, t1, t2) die Frequenzkanäle c0 bis c2 und im Zeitslot n+1 (oder in einer zweiten Gruppe von Zeitschlitzen) die Kanäle c3 bis c5 belegt. Im Zeitslot n+2 (oder in einer dritten Gruppe von Zeitschlitzen) könnten entsprechend die Frequenzkanäle c6 bis c8 belegt werden. Mit Zeitslot ist hierbei die Zeit zwischen zwei Baken gemeint, d.h. ein Timeslot umfasst das Referenzsignal (Sync-Beacon), das Steuersignal (Daten-Beacon) und die folgenden Datenübertragungsbereiche.

Somit kann beispielsweise ein Teilnehmer (z.B. Endpunkt 106), welcher in den Kanälen c0 bis c2 keine Sync-(Teil-)Datenpakete (oder Teil-Referenzdatenpakete 227) detektiert den Kanal wechseln und dort wieder nach Sync-(Teil-)Datenpaketen (oder Teil-Referenzdatenpaketen 227) Ausschau halten. Falls er dort wiederum nichts detektieren sollte könnte er wieder den Kanal wechseln und so weiter.

Die ermöglicht zudem Knoten (oder Endpunkten 106), die lokal eine Dauerstörung auf bestimmen Teilkanälen haben oder in einem Fading-Loch sind, sich trotzdem im Netzwerk zu synchronisieren.

In dem in Fig. 31 gezeigtem Ausführungsbeispiel ist zur Veranschaulichung eine aufsteigende Reihenfolge der Frequenzkanäle für die aufeinanderfolgenden Timeslots (oder Gruppen von Zeitschlitzen) gewählt. Dies ist jedoch nicht erforderlich, sodass in anderen Ausführungsbeispielen z.B. eine andere Abfolge der Frequenzkanäle (z.B.: Timeslot n: c0,c1,c2, Timeslot n+1: c10,c11,c12, Timeslot n+2: c5,c6,c7 etc.) bestimmt werden kann.

Bei Ausführungsbeispielen sind die Frequenzkanäle, welche für die Aussendung der Sync-(Teil-)Datenpakete (oder Teil-Referenzdatenpakete 127) verwendet werden, zeitlich variabel. Dabei gibt es eine zeitliche Periodizität mit der das gesamte Muster der Abfolge Kanäle wiederholt wird.

Um die Übertragungssicherheit zu maximieren, so ist es möglich die Sync-(Teil-)Datenpakete (oder Teil-Referenzdatenpakete 227) der verschiedenen Timeslots (oder Gruppen von Zeitschlitzen) aus derselben Synchronisationsinformation abzuleiten um somit eine beliebige Kombination der Sync-(Teil-)Datenpakete (Teil-Referenzdatenpakete 227) zur Rekonstruktion der Daten verwenden zu können. Ist dies der Fall, so kann der Empfänger (z.B. Basisstation 104) bei gleichbleibender Clusterung über die Timeslots (oder Gruppen von Zeitschlitzen) hinweg nicht eindeutig feststellen, welcher Frequenzversatz vorliegt, da er nicht bestimmen kann ob die Pakete zur Aussendung n oder n+1 gehörten, wenn der Frequenzversatz größer ist als der Abstand der Cluster.

Bei Ausführungsbeispielen sind die Cluster frequenzmäßig mindestens so weit von einander getrennt, dass eine versehentliche Synchronisation, durch Frequenzversatz, auf das im Frequenzbereich verschobene Cluster nicht möglich ist.

Innerhalb eines Clusters ist es auch notwendig exakt zu wissen welche der Subpakete (oder Teil-Referenzdatenpakete 227) empfangen wurden. Ist bei einer 3er Clusterung c0+c1+c2 eines der äußeren beiden Sync-(Teil-)Datenpakete (oder Teil-Referenzdatenpaketen 227) gestört, also c0 oder c2, so kann der Knoten (oder Endpunkt 102) zwar erfolgreich synchronisieren und dank des Fehlerschutzes auch decodieren, weiß aber nicht ob er c0+c1 oder c1+c2 empfangen hat.

Sind die Frequenzkanäle cX und cX+1 weit genug voneinander entfernt, dass auch trotz Frequenzversatz eindeutig festzustellen ist, auf welchem cX das Sync-(Teil-)Datenpakete (oder Teil-Referenzdatenpaket 227) versendet wurde, so ist diese Mehrdeutigkeit nichtmehr gegeben.

Bei Ausführungsbeispielen sind die Frequenzkanäle innerhalb eines Clusters frequenzmäßig mindestens so weit von einander getrennt, dass auch mit Frequenzversatz, benachbarte Kanäle nicht überlappen.

Ein anderer Lösungsweg ist die Cluster so zu gestalten, dass das Frequenzsprungmuster (oder Referenzsignalsprungmuster 228) innerhalb des Clusters eindeutig ist. Also z.B. keine Treppe wie im Bild gezeigt, sondern die Folge c0+c2+c1, welche bei erfolgreicher Detektion mindestens zweier Sync-(Teil-)Datenpakete (oder Teil-Referenzdatenpakete 227) eindeutig festlegt welche Sync-(Teil-)Datenpakete (oder Teil-Referenzdatenpakete 227) empfangen wurden.

Bei Ausführungsbeispielen sind die Cluster der Sync-(Teil-)Datenpakete (oder Teil-Referenzdatenpakete 227) so gewählt, dass es keine wiederholenden identischen Abstände in Zeit und Frequenz der Sync-(Teil-)Datenpaketen (oder Teil-Referenzdatenpaketen 227) innerhalb des Clusters gibt.

## C.4 Dynamische Regelung der Anzahl an verwendeten Sync-(Teil-)Datenpaketen

Bei Ausführungsbeispielen kann das Referenzsignal 220 in vorgegebenen Abständen (z.B. periodisch) gesendet werden, wobei ein Abstand zwischen zumindest zwei aufeinanderfolgenden Aussendungen des Referenzsignals 220 dynamisch an eine Anzahl neu anzumeldender Endpunkte angepasst ist, oder wobei das Referenzsignal 220 z.B. ansprechend auf ein externes Ereignis zusätzlich (z.B. zwischen zwei geplanten Aussendungen des Referenzsignals 220) gesendet wird.

Bei Ausführungsbeispielen kann ferner eine Anzahl an Teil-Referenzdatenpaketen 227, mit der das Referenzsignal versehen ist, dynamisch an die Anzahl neu anzumeldender Endpunkte angepasst werden.

Bei Ausführungsbeispielen kann ferner eine Anzahl an unterschiedlichen Frequenzkanälen des vorgegebenen Frequenzbereichs 224, auf die die Mehrzahl von Teil-Referenzdatenpaketen 227 verteilt werden, dynamisch an die Anzahl neu anzumeldender Endpunkte angepasst werden.

Im Folgenden werden weitere Ausführungsbeispiele beschrieben.

Häufig kommt es in Netzwerken vor, dass es Zeiten gibt in denen sich viele neue Teilnehmer (z.B. Endpunkte) im Netzwerk (z.B. Kommunikationssystem 102) anmelden wollen (z. B. bei Inbetriebnahme), aber es gibt auch Zeiten in denen es kaum/keine neuen Teilnehmer für das Netzwerk gibt.

Somit ist es zu einigen Zeitpunkten überflüssig die Sync-(Teil-)Datenpakete (Teil-Referenzdatenpakete 127) auszusenden, da sich mit hoher Wahrscheinlichkeit kein neuer Teilnehmer (z.B. Endpunkt 106) anmelden möchte. Zu einem anderen Zeitpunkt, möchten sich viele Teilnehmer anmelden, jedoch müssen diese sehr lange warten, bis sie Sync-(Teil-)Datenpakete (oder Teil-Referenzdatenpakete 227) auf den von den jeweiligen Teilnehmern gewählten Frequenzkanälen finden.

Es ist somit sinnvoll, die Anzahl der ausgesendeten Sync-(Teil-)Datenpakete (oder Teil-Referenzdatenpakete) dynamisch zu gestalten. Es ist auch möglich mehrere Sync-(Teil-)Datenpakete (oder Teil-Referenzdatenpakete 227) gleichzeitig auszusenden und die Information somit mehrfach auf verschiedenen Frequenzen gleichzeitig zu übertragen. In Fig. 31 könnte beispielsweise die Aussendung von den Zeitpunkten n und n+1 gemeinsam zum Zeitpunkt n erfolgen und zum Zeitpunkt n+1 könnte keine Aussendung erfolgen.

Bei Ausführungsbeispielen wird die Anzahl der ausgesendeten Sync-(Teil-)Datenpakete (oder Teil-Referenzdatenpakete 127) dynamisch gestaltet. Dabei ist es möglich zu manchen Zeitpunkten keine Sync-(Teil-)Datenpakete (oder Teil-Referenzdatenpakete 127) auszusenden, an anderen Zeitpunkten könnten auch gleichzeitig mehrere Cluster gesendet werden oder auch alle für die Aussendung der Sync-(Teil-)Datenpakete oder Teil-Referenzdatenpakete 127) vorgesehenen Frequenzkanäle belegt sein.

Häufig werden neue Teilnehmer (z.B. Endpunkte 106) im Rahmen einer Installation durch einen Monteur ausgebracht. Das heißt der Monteur bringt neue Geräte aus, welche sich dann automatisch mit dem Netzwerk verbinden.

Der Monteur weiß jedoch wann diese Teilnehmer ausgebracht wurden und kann dies der Basisstation 104 mitteilen (z. B. durch Knopfdruck an der Basis oder einer Web-Oberfläche).

Wird der Basis (oder Basisstation 104) mitgeteilt, dass neue Teilnehmer (z.B. Endpunkte 106) sich einwählen wollen, kann diese dynamisch wie oben beschrieben mehrere Sync-(Teil-)Datenpakete (oder Teil-Referenzdatenpakete 127) aussenden, um den Synchronisations/Anmeldeprozess zu beschleunigen.

Bei Ausführungsbeispielen sendet die Basisstation auf Mitteilung mehr Sync-(Teil- )Datenpakete (oder Teil-Referenzdatenpakete 127) als üblich aus.

### C.5 Verschränkte Cluster bei wiederholter Aussendung der Sync-(Teil-)Datenpakete vor einer Bake

Bei Ausführungsbeispielen kann das Referenzsignal 220 wiederholt ausgesendet werden, wobei das Referenzsignal 220 mit einer Mehrzahl von Teil-Referenzdatenpaketen 227 versehen ist, wobei die Mehrzahl von Teil-Referenzdatenpaketen zumindest zweier z.B. aufeinanderfolgenden Aussendungen des Referenzsignals 220 entsprechend jeweiliger Referenzsignalsprungmuster 228 zeitlich ineinander verschachtelt sind.

Bei Ausführungsbeispielen sind die jeweiligen Referenzsignalsprungmuster 228 in der Zeit und Frequenz zueinander verschobene Versionen voneinander.

Bei Ausführungsbeispielen kann ein zeitlicher Abstand zwischen der Mehrzahl von Teil-Referenzdatenpaketen 227 des jeweiligen Referenzsignals 220 der Anzahl an Wiederholungen entsprechen.

Im Folgenden werden weitere Ausführungsbeispiele beschrieben.

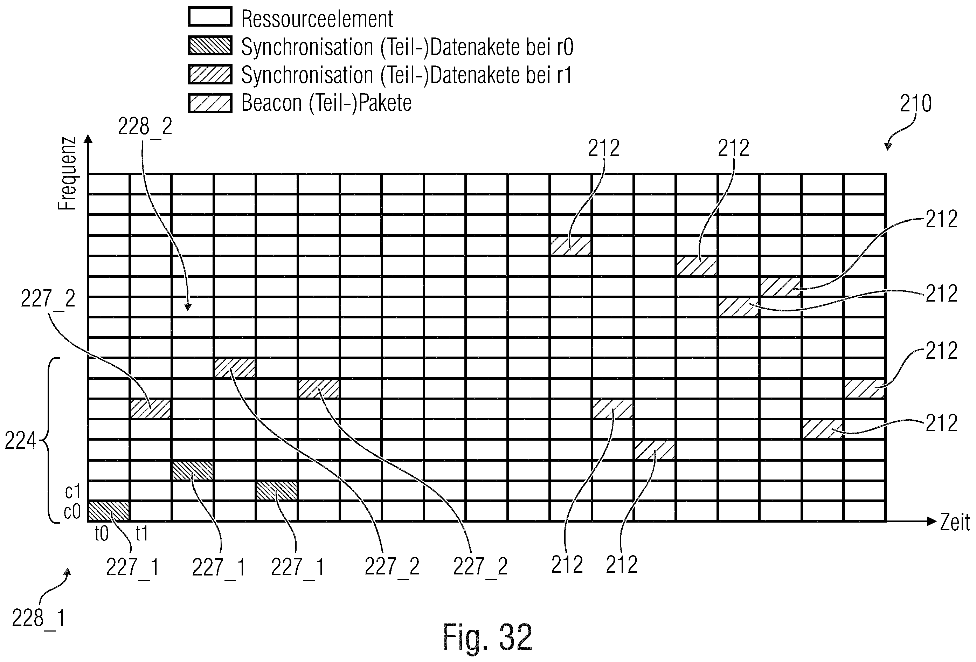

Werden wie in Abschnitt C.4 beschrieben die Sync-Teildatenpakete (oder Teil-Referenzdatenpakete 227) wiederholt ausgesendet, gibt es die Möglichkeit die zumindest zwei Aussendungen zeitlich zu verschachteln. Dies ist in Fig. 32 für eine zweifache Aussendung bei Unterteilung in drei Teilpakete (oder Teil-Referenzdatenpakete 227) zu sehen.

Im Detail zeigt Fig. 32 in einem Diagramm durch Referenzsignalsprungmuster 228_1, 228_2 angegebene Belegungen von Ressourcen des vorgegebenen Frequenzbereichs 224 des Frequenzbands bei der mehrfachen Aussendung des Referenzsignals 220, so dass die Mehrzahl von Teil-Referenzdatenpaketen 227_1, 227_2 der mehrfachen Aussendung des Referenzsignals 220 zeitlich ineinander verschachtelt sind, sowie eine durch ein Steuersignalsprungmuster 210 definierte Belegung von Ressourcen des Frequenzbands bei der Übertragung des Steuersignals mit der Mehrzahl von Teil-Steuerdatenpaketen, gemäß einem Ausführungsbeispiel der vorliegenden Erfindung. Dabei beschreibt die Ordinate die Frequenz in Frequenzkanälen und die Abszisse die Zeit in Zeitschlitzen. Mit anderen Worten, Fig. 32 zeigt eine zeitliche Verschachtelung von zwei Aussendungen von Sync-Teildatenpaketen (oder Teil-Referenzdatenpaketen 227_1,227_2).

Vorteil dieser zeitlichen Verschachtelung liegt in der Störfestigkeit, da zwischen benachbarten Frequenzkanälen ein größerer zeitlicher Abstand vorhanden ist. In Hinsicht auf die Eigenschaften für eine Synchronisation eines neuen Teilnehmers (z.B. Endpunkts 106) ändert sich für diesen nichts, außer dass es eine höhere Latenz beim Empfang der Sync-Teildatenpakete (oder Teil-Referenzdatenpakete 227) gibt. Dies ist nicht weiter tragisch, da der Teilnehmer nach Empfang der Sync-Teildatenpakete (oder Teil-Referenzdatenpakete 227) sowieso warten muss, bis er die Bake (oder das Steuersignal 120 mit den Steuersignaldatenpaketen 212) empfangen kann.

Da der Abstand zwischen dem letzten Sync-Teildatenpaket (oder Teil-Referenzdatenpaket 227) und dem Beginn der Bake (oder des Steuersignals 120 mit den Steuersignaldatenpaketen 212) hier von Cluster zu Cluster variiert, muss dieser Abstand (d.h. der zeitliche Beginn der Bake) dem Teilnehmer entweder vorab bekannt sein oder geeignet signalisiert werden.

Bei Ausführungsbeispielen werden bei wiederholter Aussendung der Sync-Teildatenpakete (oder Teil-Referenzdatenpakete 127) vor einer Bake die Wiederholungen verschachtelt.

Bei mehrfacher Wiederholung können alle Aussendungen ineinander verschachtelt werden, hier muss zwischen den Teildatenpaketen (oder Teil-Referenzdatenpaketen 227) einer Übertragung eine Pause gelassen werden, die der Anzahl der Wiederholungen entspricht.

In dem in Fig. 32 gezeigtem Ausführungsbeispiel wird eine einfache Wiederholung angewendet, somit muss zwischen den Teildatenpaketen (oder Teil-Referenzdatenpaketen) der ersten Aussendung r0 ein Zeitslot (dt. Zeitschlitz) frei gelassen werden. Bei zweifacher Wiederholung wären es zwei Zeitslots (dt. Zeitschlitze) und so weiter.

Aussendung r1 beginnt dann mit dem gleichen Muster (entspricht einem Cluster) bei Zeitschritt (oder Zeitschlitz) t1. Durch die äquidistante Wahl der Abstände ist sichergestellt, dass es zwischen den Wiederholungen nicht zu zeitlichen Überlagerungen kommt.

Würden zwei Wiederholungen verwendet, würde die zweite Wiederholung im Zeitschlitz t2 beginnen.

Bei Ausführungsbeispielen wird ein Grundcluster verwendet, welches bei allen wiederholten Aussendungen verwendet wird.

Bei Ausführungsbeispielen entsprechen die zeitlichen Abstände zwischen den Teildatenpaketen (oder Teil-Referenzdatenpaketen 227) innerhalb des Clusters der Anzahl an Wiederholungen.

**C.6 Nutzung bekannter Daten als virtuelle Präambel**

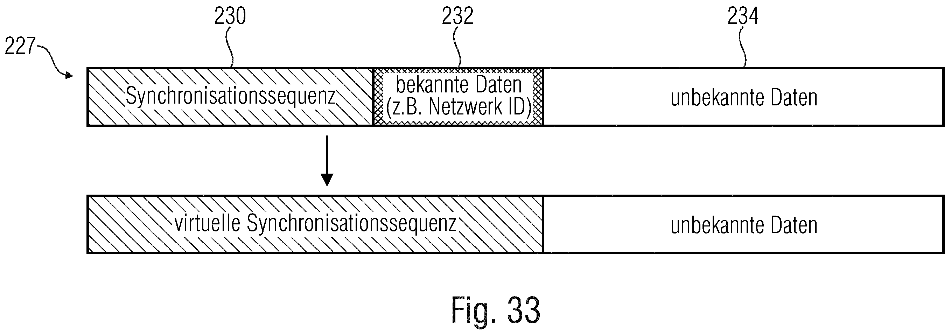

Bei Ausführungsbeispielen kann das Referenzsignal 220 mit einer Mehrzahl von Teil-Referenzdatenpaketen 227 versehen sein, wobei zumindest zwei der Mehrzahl von Teil-Referenzdatenpaketen 227 Synchronisationssequenzen, die dem Endpunkt bekannt sind, aufweisen, wobei die zumindest zwei der Mehrzahl von Teil-Referenzdatenpaketen 227 dem Endpunkt 106 bekannte Daten (z.B. eine ID des Kommunikationssystems) aufweisen, wie dies nachfolgend anhand von Fig. 33 erläutert wird.

Fig. 33 zeigt eine schematische Ansicht eines der Mehrzahl von Teil-Referenzdatenpaketen 227, gemäß einem Ausführungsbeispiel der vorliegenden Erfindung. Wie in Fig. 33 gezeigt ist, kann das Teil-Referenzdatenpaket 227 eine Synchronisationssequenz 230, bekannten Daten 232, wie z.B. eine Identifikation des Kommunikationssystems 102, und unbekannten Daten 234 aufweisen. Dabei können, wie in Fig. 33 angedeutet ist, die Synchronisationssequenz 230 und die bekannten Daten 232 eine virtuelle Synchronisationssequenz bilden.

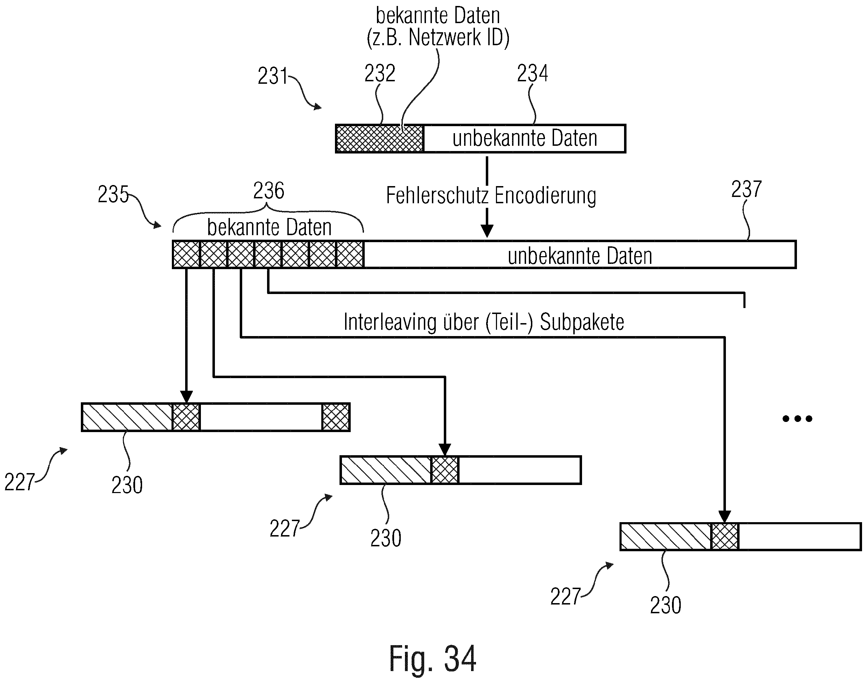

Fig. 34 zeigt eine schematische Ansicht der Codierung und Aufteilung der Daten 231 (=bekannte Daten und unbekannte Daten) eines Referenzdatenpakets auf eine Mehrzahl von Teil-Referenzdatenpaketen 227, gemäß einem Ausführungsbeispiel der vorliegenden Erfindung. Wie in Fig. 34 zu erkennen ist, können die Daten 231 umfassend bekannte Daten 232 und unbekannte 234 encodiert bzw. mit einem Fehlerschutzcode versehen werden, um codierte Daten 235 umfassend codierte bekannte Daten 236 und codierte unbekannte Daten 237 zu erhalten. Die codierten bekannten Daten 236 können dabei verschachtelt auf die Teil-Referenzdatenpakete 227 aufgeteilt werden, so dass in den jeweiligen Teil-Referenzdatenpaketen 227 die jeweiligen Teile der codierten bekannten Daten 236 unmittelbar benachbart zu den jeweiligen Synchronisationssequenzen 230 angeordnet sind.

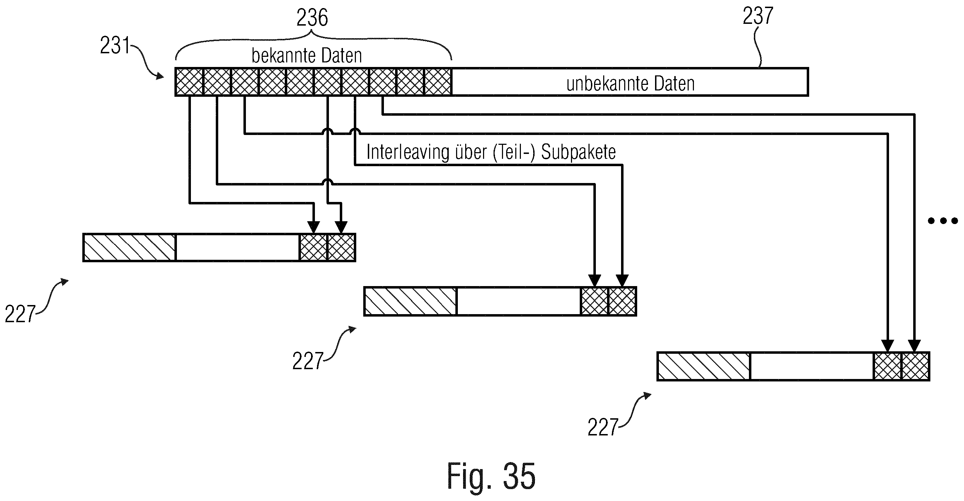

Fig. 35 zeigt eine schematische Ansicht der Aufteilung von codierten Daten 235 umfassend bekannte codierte Daten 236 und unbekannte codierte Daten 237 auf die Mehrzahl von Teil-Referenzdatenpaketen 227, gemäß einem Ausführungsbeispiel der vorliegenden Erfindung. Wie auch bei Fig. 35 werden die codierten bekannten Daten 236 verschachtelt auf die Teil-Referenzdatenpakete 227 aufgeteilt. Im Kontrast zu Fig. 35 werden in den jeweiligen Teil-Referenzdatenpaketen 227 die jeweiligen Teile der codierten bekannten Daten 236 mit einem vorgegebenen Abstand zu den jeweiligen Synchronisationssequenzen 230 angeordnet.

Im Folgenden werden weitere Ausführungsbeispiele beschrieben.

Häufig weiß ein Teilnehmer (z.B. Endpunkt 106), welcher sich noch nicht mit einem Netzwerk verbunden hat, schon vorab mit welchem Netzwerk (oder Kommunikationssystem 102) er sich verbinden möchte.

Die eindeutige Identifizierung eines Netzwerks erfolgt in der Regel anhand der Netzwerk-ID oder einer vergleichbaren, dem Teilnehmer jedoch vorab bekannten Information.

Typsicherweise ist ein Teilnehmer in Reichweite mehrerer Netzwerke und muss aufgrund der Netzwerk-ID das korrekte Netzwerk (oder Kommunikationssystem 102) wählen, mit dem er sich verbinden möchte.

Damit der Teilnehmer nicht immer die Bake (oder das Steuersignal 120) eines Netzwerkes (oder Kommunikationssystems 102) empfangen muss, ist es sinnvoll die Netzwerk-ID bereits vorab in den Sync-(Teil-)Datenpaketen (oder Referenzsignal mit den Teil-Referenzdatenpaketen 227) einzubringen.

Wird das Kanalzugriffsmuster nach Abschnitt A berechnet, ist dies unabdinglich, da die Netzwerk-ID in die Berechnung des Kanalzugriffsmusters eingeht.

Die bekannte Netzwerk-ID wird somit in den Sync-Teildatenpaketen (oder Teil-Referenzdatenpaketen 227) übertragen und ist dem neu anzumeldenden Teilnehmer (z.B. Endpunkt 160) vor der Synchronisation bekannt. Bei der Übertragung der Netzwerk-ID in den Sync-(Teil-)Datenpaketen (oder Teil-Referenzdatenpaketen 227) kann die Netzwerk-ID somit als bekannte Daten angenommen werden (ähnlich zu einer Synchronisationssequenz).

Liegen neben der Synchronisationssequenz 230 weitere bekannte Daten 232 vor, können diese ebenfalls für die Synchronisation einsetzt werden. Durch die weiteren Daten kann die Genauigkeit der Schätzung erheblich verbessert werden ("erweiterte virutelle Synchronisationssequenz").

Bei Ausführungsbeispielen werden bekannte Daten 232 (z.B. Netzwerk-ID) zur Verbesserung der Synchronisation eingesetzt.

Wird die Netzwerk-ID direkt vor oder nach der festen Synchronisationssequenz 230 in den Sync-Teildatenpaketen (oder Teil-Referenzdatenpaketen 227) eingebracht, kann diese zusammen mit der Präambel (oder Synchronisationssequenz 230) zu einer längeren "virtuellen Präambel" kombiniert werden. Damit kann dann eine verbesserte Synchronisation durchgeführt werden.

Bei Ausführungsbeispielen werden die bekannten Daten 232 in den Sync-Teildatenpaketen (oder Teil-Referenzdatenpaketen 227) direkt vor oder nach der Synchronisationssequenz 230 angeordnet, so dass sich gemeinsam mit der Synchronisationssequenz 230 eine erweiterte zusammenhängende virtuelle Synchronisationssequenz ergibt.

Bei Verwendung von Telegram-Splitting wird in der Regel eine Codierung der Nutzdaten und eine Verschachtelung (engl. interleaving) über die Teildatenpakete durchgeführt.

Soll nun die Netzwerk-ID weiterhin für die Synchronisation eingesetzt werden, muss das Interleaving so durchgeführt werden, dass die encodierten Symbole weiterhin direkt vor oder nach der Synchronisationssequenz 230 eingebracht werden.

Fig. 34 zeigt eine Synchronisationssequenz 230, die als Präambel ausgestaltet ist und somit am Beginn der (Teil-)Subpakete (oder Teil-Referenzdatenpakete 227) positioniert ist. Alternative Ausführungsbeispiele können statt einer Präambel auch eine Mid- oder Postambel verwenden.

Im Teilnehmer kann vor der Synchronisation eine Encodierung der bekannten Daten (z.B. Netzwerk-ID) (ohne die folgenden unbekannten Daten) durchgeführt werden. Nach der Anwendung des Verschachtelers (engl. interleaver) können die vorab bekannten Symbole für die Synchronisation extrahiert und mit der bekannten Synchronisationssequenz kombiniert werden.

Wird für den Empfang ein flexibler Decoder verwendet, der es erlaubt gegen mehr als eine zusammenhängende Synchronisationssequenz je Teilpaket zu synchronisieren, so kann es von Vorteil sein, die bekannten Daten nicht vorne anzustellen, sondern diese in die Mitte oder an das Ende des Teilpakets zu platzieren, da dann die Frequenz und Phasenschätzung erleichtert wird, wenn sich das Signal durch Störungen oder Toleranzen über der Zeit verändert (z.B. bei Mobilität der Endknoten), wie dies in Fig. 35 gezeigt ist.

Hierbei ist zu beachten, dass genug bekannte Daten vorhanden sein müssen, so dass die bekannten Daten mindestens zwei aufeinanderfolgende Symbole in den Teilpaketen (oder Referenzdatenpaketen 227) belegen, da sonst (je nach Modulationsart und Intersymbol-Interferenz) die bekannten Daten auf Grund der unbekannten vorhergehenden bzw. nachfolgenden Daten nicht gut zur Unterstützung der Synchronisation geeignet sind.

Bei Ausführungsbeispielen werden die bekannten Daten in den Teildatenpaketen (oder Teil-Referenzdatenpaketen) nicht direkt vor oder hinter der Synchronisationssequenz 230 platziert, sondern im Paket (oder Teil-Referenzdatenpaket 227) verteilt, so dass sie mindestens zwei aufeinanderfolgende Symbole mit Abstand zu der Synchronisationssequenz des Teildatenpakets (oder Teil-Referenzdatenpaket 227) belegen.

### C.7 Verschiedene Coderaten

Bei Ausführungsbeispielen kann das Referenzsignal 220 mit einer Mehrzahl von Teil-Referenzdatenpaketen 227 versehen sein, wobei eine Anzahl der Teil-Referenzdatenpakete 227 an einen für das Steuersignal 120 verwendeten Fehlerschutzcode angepasst ist.

Bei Ausführungsbeispielen können das Referenzsignal 220 und das Steuersignal 120 mit dem gleichen Fehlerschutzcode oder mit Fehlerschutzcodes vergleichbarerer Leistungsfähigkeit versehen sein.

Bei Ausführungsbeispielen können die Mehrzahl Teil-Referenzdatenpaketen 227 symbolidentisch sein.

Im Folgenden werden weitere Ausführungsbeispiele beschrieben.

Um die höchstmögliche Übertragungssicherheit zu gewährleisten, ist es vorteilhaft die übertragenen Daten mit einem Fehlerschutzcode zu versehen. Je nach Anforderung des Systems, kann es notwendig sein, dass mehr Sync-(Teil-) Datenpakete (oder Teil-Referenzdatenpakete 227) verwendet werden, damit die Schwelle bei der das Paket (oder Teil-Referenzdatenpaket 227) synchronisiert werden kann mindestens unterhalb der Schwelle liegt bei der es decodiert werden kann.

Wird beispielsweise ein sehr niederratiger Fehlerschutz im Baken verwendet, so ist dieses Paket z.B. bis zu einem SNR von 0dB decodierbar. Werden jetzt nur sehr weniger Sync-(Teil- )Datenpakete (oder Teil-Referenzdatenpakete 227) ausgesendet, so kann es passieren, dass die Sync-(Teil-)Datenpakete (oder Teil-Referenzdatenpakete 227) nur bis zu einem SNR von 3dB erfolgreich synchronisiert werden können. In diesem Fall wäre der erhöhte Fehlerschutz verschwendete Energie in der Aussendung da ohne eine Synchronisation der Sync-(Teil- )Datenpakete (oder Teil-Referenzdatenpakete 227) der Baken (oder die Teil-Steuerdatenpakete 212 des Steuersignals 120) nicht empfangen werden können, da dessen Position und Frequenzsprungmuster (oder Steuersignalsprungmuster 210) nicht bekannt sind.

Dementsprechend ist es notwendig die Anzahl der Sync-(Teil-)Datenpakete (oder Teil-Referenzdatenpakete 227) an den zu verwendenden Fehlerschutzcode der Bake (oder des Steuersignals 120) anzupassen.

Bei Ausführungsbeispielen wird die Anzahl der Sync-(Teil-)Datenpakete (oder Teil-Referenzdatenpakete 227) an den verwendeten Fehlerschutz im Baken (oder in den Teil-Steuersignaldatenpaketen 212 des Steuersignals 120) angepasst.

Da die Information im Sync-Datenpaket (oder Teil-Referenzdatenpaket 227) ebenfalls bei der gleichen Schwelle wie der Baken decodierbar sein muss, ist es sinnvoll, das Sync-Datenpaket mit einem gleichwertigen Fehlerschutzcode zu versehen wie den Baken.

Bei Ausführungsbeispielen können Baken und Sync-Datenpaket den gleichen Fehlerschutzcode nutzen.

Bei Ausführungsbeispielen können Baken und Sync-Datenpaket Fehlerschutzcodes nutzen, die vergleichbare Leistungsfähigkeit besitzen.

Ist das Sync-Datenpaket sehr kurz, so kann es sinnvoll sein, anstelle eines gängigen Fehlerschutzcodes (z.B. Faltungscode) einen einfachen Wiederholungcode zu nutzen und die volle Information in jedes einzelne Sync-(Teil-) Datenpaket (oder Teil-Referenzdatenpaket 227) zu packen.

Bei Ausführungsbeispielen können alle Sync-(Teil-)Datenpakete (oder Teil-Referenzdatenpakete) symbolidentisch sein.

## D. Weitere Ausführungsbeispiele

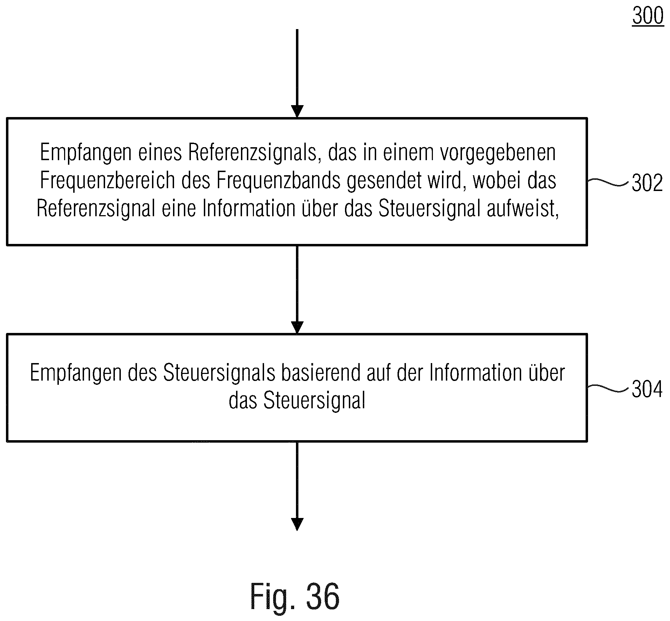

Fig. 36 zeigt ein Flussdiagramm eines Verfahrens 300 zum Betrieb eines Endpunkts eines Kommunikationssystems, gemäß einem Ausführungsbeispiel der vorliegenden Erfindung. Das Kommunikationssystem kommuniziert in einem Frequenzband, welches von einer Mehrzahl von Kommunikationssystemen zur Kommunikation genutzt wird [z.B. wobei die Kommunikationssysteme untereinander unkoordiniert sind], wobei in dem Kommunikationssystem [z.B. eine Basisstation des Kommunikationssystems] zur Koordinierung der Teilnehmer des Kommunikationssystems ein Steuersignal ausgesendet wird, wobei das Steuersignal entsprechend einer durch ein Steuersignalsprungmuster angegebenen frequenzsprungbasierten [z.B. und zeitsprungbasierten] Belegung von Ressourcen des Frequenzbands verteilt übertragen wird, wobei der Endpunkt einen Empfänger aufweist, wobei eine Empfangsbandbreite des Empfängers zumindest um den Faktor 5 kleiner ist als eine Bandbreite der durch das Steuersignalsprungmuster angegebenen frequenzsprungbasierten [z.B. und zeitsprungbasierten] Belegung von Ressourcen des Frequenzbands. Das Verfahren 300 umfasst einen Schritt 302 des Empfangens eines Referenzsignals [z.B. Synchronisationssignal], das in einem vorgegebenen Frequenzbereich [z.B. einem oder mehreren Frequenzkanälen] des Frequenzbands [z.B. von der Basisstation des Kommunikationssystems] gesendet wird, wobei das Referenzsignal eine Information über das Steuersignal aufweist. Ferner umfasst das Verfahren 300 einen Schritt 304 des Empfangens des Steuersignals basierend auf der Information über das Steuersignal, wobei die Information über das Steuersignal, die das Referenzsignal aufweist, eine Information über das Steuersignalsprungmuster oder eine Information über die vom Kommunikationssystem zur Übertragung des Steuersignals verwendbaren Ressourcen des Frequenzbands aufweist, wobei das Referenzsignal in einem vorgegebenen Frequenzbereich des Frequenzbands übertragen wird, wobei das Referenzsignal eine Mehrzahl von Teil-Referenzdatenpaketen aufweist, die die Information über das Steuersignal enthalten, wobei das Referenzsignal entsprechend eines Referenzsprungmusters übertragen wird, wobei das Referenzsprungmuster eine frequenz- und/oder zeitsprungbasierte Belegung von Ressourcen des vorgegebenen Frequenzbereichs angibt, wobei das Referenzsignal entsprechend des Referenzsprungmusters empfangen wird, um zumindest einen zur Dekodierung ausreichenden Teil der Mehrzahl von Teil-Referenzdatenpaketen zu erhalten.

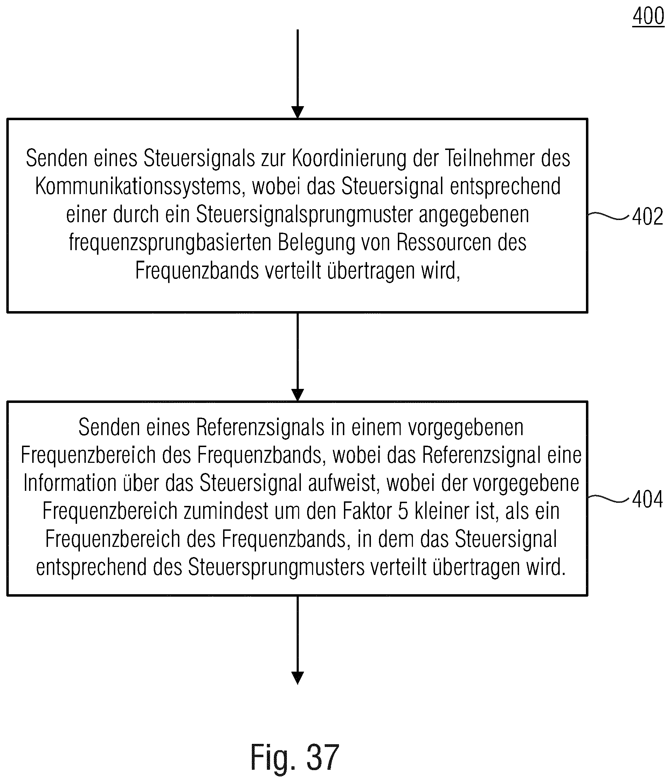

Fig. 37 zeigt ein Flussdiagramm eines Verfahrens 400 zum Betrieb einer Basisstation eines Kommunikationssystems, gemäß einem Ausführungsbeispiel der vorliegenden Erfindung. Das Kommunikationssystem kommuniziert in einem Frequenzband, welches von einer Mehrzahl von Kommunikationssystemen zur Kommunikation genutzt wird [z.B. wobei die Kommunikationssysteme untereinander unkoordiniert sind]. Das Verfahren 400 umfasst einen Schritt 402 des Sendens eines Steuersignals zur Koordinierung der Teilnehmer des Kommunikationssystems, wobei das Steuersignal entsprechend einer durch ein Steuersignalsprungmuster angegebenen frequenzsprungbasierten [z.B. und zeitsprungbasierten] Belegung von Ressourcen des Frequenzbands verteilt übertragen wird. Ferner umfasst das Verfahren 400 einen Schritt 404 des Sendens eines Referenzsignals [z.B. Synchronisationssignal] in einem vorgegebenen Frequenzbereich [z.B. einem oder mehreren Frequenzkanälen] des Frequenzbands, wobei das Referenzsignal eine Information über das Steuersignal aufweist, wobei der vorgegebene Frequenzbereich zumindest um den Faktor 5 kleiner [z.B. schmaler] ist, als ein Frequenzbereich des Frequenzbands, in dem das Steuersignal entsprechend des Steuersprungmusters verteilt übertragen wird, wobei die Information über das Steuersignal, die das Referenzsignal aufweist, eine Information über das Steuersignalsprungmuster oder eine Information über die vom Kommunikationssystem zur Übertragung des Steuersignals verwendbaren Ressourcen des Frequenzbands aufweist, wobei das Referenzsignal mit einer Mehrzahl von Teil-Referenzdatenpaketen versehen ist, die die Information über das Steuersignal enthalten, wobei das Referenzsignal entsprechend eines Referenzsignalsprungmusters gesendet wird, wobei das Referenzsignalsprungmuster eine frequenz- und/oder zeitsprungbasierte Belegung von Ressourcen des vorgegebenen Frequenzbereichs angibt, wobei ein Referenzdatenpaket mit der Information über das Steuersignal auf die Mehrzahl von Teil-Referenzdatenpaketen aufgeteilt ist, so dass jedes der Teil-Referenzdatenpakete nur einen Teil des Referenzdatenpakets aufweist, wobei die Mehrzahl von Teil-Referenzdatenpaketen kanalcodiert sind, so dass nur eine Teilmenge der Mehrzahl von Teil-Referenzdatenpaketen zur erfolgreichen Decodierung des Referenzdatenpakets erforderlich ist.

Ausführungsbeispiele finden Anwendung in Systemen zur Funkübertragung von Daten von Endgeräten zu einer Basisstation oder von einer/mehrerer Basisstationen zu Endgeräten. Beispielsweise kann es sich bei einem System dabei um ein persönliches Netzwerk (engl. Personal Area Network, PAN) oder ein Niedrigenergie-Weitverkehrsnetzwerk (engl. Low Power Wide Area Network, LPWAN) handeln, wobei die Endgeräte z.B. batteriebetriebene Sensoren (Sensorknoten) sein können.

Ausführungsbeispiele zielen auf Anwendungsfälle ab, in welchen eine Nachricht (Datenpaket) in mehreren Teil-Datenpaketen mittels des sogenannten Telegrammaufteilungs-Verfahrens (engl. Telegram-Splitting-Multiple-Access, TSMA) übertragen wird. Besonders vorteilhaft ist die Anwendung für den Fall, dass die Basisstation batteriebetrieben ist, sodass der Betrieb des Basisstationsempfängers unter dem Aspekt des Energieverbrauchs optimiert wird.

Wie bereits erwähnt können die hierin beschriebenen Ausführungsbeispiele eingesetzt werden, um Daten basierend auf dem Telegram-Splitting-Verfahren zwischen den Teilnehmern des Kommunikationssystems zu übertragen. Beim Telegram-Splitting-Verfahren werden Daten, wie z.B. ein Telegramm oder Datenpaket, in eine Mehrzahl von Sub-Datenpakete (oder Teildatenpakte, oder Teilpakete) aufgeteilt und die Sub-Datenpakete unter Verwendung eines Zeit- und/oder Frequenzsprungmusters in der Zeit und/oder in der Frequenz verteilt von einem Teilnehmer zu einem anderen Teilnehmer (z.B. von der Basistation zum Endpunkt, oder vom Endpunkt zur Basisstation) des Kommunikationssystems übertragen, wobei der Teilnehmer, der die Sub-Datenpakete empfängt, diese wieder zusammenfügt (oder kombiniert), um das Datenpaket zu erhalten. Jedes der Sub-Datenpakete enthält dabei nur einen Teil des Datenpakets. Das Datenpaket kann ferner kanalcodiert sein, so dass zum fehlerfreien Decodieren des Datenpakets nicht alle Sub-Datenpakete, sondern nur ein Teil der Sub-Datenpakete erforderlich ist.

Bei der Übertragung von Daten basierend auf dem Telegram-Splitting-Verfahren, können die Sub-Datenpakete in einer Teilmenge (z.B. einer Auswahl) der verfügbaren Ressourcen des netzwerkspezifischen Kanalzugriffsmusters verteilt übertragen werden. Im Detail können die Sub-Datenpaketen basierend auf dem relativen Kanalzugriffsmuster, d.h. in den Ressourcen des relativen Kanalzugriffsmusters, übertragen werden. Beispielsweise kann pro Ressource ein Sub-Datenpaket übertragen werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Literaturverzeichnis

[1] DE 10 2011 082 098 B4

[2] IEEE Std. 802.15.4 - 2015 - IEEE Standard for Low-Rate Wireless Networks, 2015

[3] G. Kilian, H. Petkov, R. Psiuk, H. Lieske, F. Beer, J. Robert, and A. Heuberger, "Improved coverage for low-power telemetry systems using telegram splitting," in Proceedings of 2013 European Conference on Smart Objects, Systems and Technologies (SmartSysTech), 2013

[4] G. Kilian, M. Breiling, H. H. Petkov, H. Lieske, F. Beer, J. Robert, and A. Heuberger, "Increasing Transmission Reliability for Telemetry Systems Using Telegram Splitting," IEEE Transactions on Communications, vol. 63, no. 3, pp. 949-961, Mar. 2015

Abkürzungsverzeichnis

CRC: Cyclic Redundancy Check
LPWAN: Low Power Wide Area Network
LSB: Least Significant Bit(s)
MSB: Most Significant Bit(s)
PAN: Personal Area Network
TLS: Transport Layer Security
TSMA: Telegram-Splitting-Multiple-Access

**Patentansprüche**

1. Endpunkt (106) eines Kommunikationssystems (102),

   wobei in dem Kommunikationssystem (102) zur Koordinierung der Teilnehmer des Kommunikationssystems (102) ein Steuersignal (120) ausgesendet wird, wobei das Steuersignal (120) entsprechend einer durch ein Steuersignalsprungmuster (210) angegebenen frequenzsprungbasierten Belegung von Ressourcen (211) eines Frequenzbands verteilt übertragen wird,
   wobei der Endpunkt (106) einen Empfänger (182) aufweist, wobei eine Empfangsbandbreite des Empfängers (182) zumindest um den Faktor 3 kleiner ist als eine Bandbreite der durch das Steuersignalsprungmuster (210) angegebenen frequenzsprungbasierten Belegung von Ressourcen (211) des Frequenzbands;
   wobei der Endpunkt (106) ausgebildet ist, um ein Referenzsignal (220) zu empfangen, wobei das Referenzsignal (220) eine Information über das Steuersignal (120) aufweist,
   wobei der Endpunkt (106) ausgebildet ist, um das Steuersignal (120) basierend auf der Information über das Steuersignal (120) zu empfangen,
   wobei die Information über das Steuersignal (120), die das Referenzsignal (220) aufweist, eine Information über das Steuersignalsprungmuster (210) oder eine Information über die vom Kommunikationssystem zur Übertragung des Steuersignals (120) verwendbaren Ressourcen des Frequenzbands aufweist,
   wobei das Referenzsignal (220) in einem vorgegebenen Frequenzbereich (224) des Frequenzbands übertragen wird,
   wobei das Referenzsignal (220) eine Mehrzahl von Teil-Referenzdatenpaketen (227) aufweist, die die Information über das Steuersignal (120) enthalten, wobei das Referenzsignal (220) entsprechend eines Referenzsprungmusters (228) übertragen wird, wobei das Referenzsprungmuster (228) eine frequenz- und/oder zeitsprungbasierte Belegung von Ressourcen (225) des vorgegebenen Frequenzbereichs (224) angibt,
   wobei der Endpunkt (106) ausgebildet ist, um das Referenzsignal (220) entsprechend des Referenzsprungmusters (228) zu empfangen, um zumindest einen zur Dekodierung ausreichenden Teil der Mehrzahl von Teil-Referenzdatenpaketen (227) zu erhalten.

2. Endpunkt (106) nach Anspruch 1,
   wobei der Endpunkt (106) ausgebildet ist, um eine Empfangsfrequenz des Empfängers (182) des Endpunkts (106) basierend auf dem Steuersignalsprungmuster (210) auf die jeweiligen durch das Steuersignalsprungmuster (210) angegebenen Ressourcen (211) des Frequenzbands umzuschalten, um das Steuersignal (120) zu empfangen.

3. Endpunkt (106) nach einem der Ansprüche 1 bis 2,
wobei die Information über das Steuersignal (120) eine Information über eine Zeit- und Frequenzlage des Steuersignals (120) in Bezug auf das Referenzsignal (220) aufweist.

4. Endpunkt (106) nach einem der Ansprüche 1 bis 3,
wobei der Endpunkt (106) ausgebildet ist, um einen Zeitgeber und/oder Frequenzgeber des Endpunkts (106) auf das Referenzsignal (220) zu synchronisieren.

5. Endpunkt (106) nach einem der Ansprüche 1 bis 4,

wobei der Empfänger (182) des Endpunkts (106) eine Empfangsbandbreite aufweist, die einer Bandbreite von zwei bis zehn unmittelbar benachbarten Frequenzkanälen, in die das Frequenzband unterteilt ist, entspricht, oder wobei der Empfänger (182) des Endpunkts (106) eine Empfangsbandbreite von 250 kHz oder weniger aufweist.

6. Endpunkt (106) nach einem der Ansprüche 1 bis 5,

wobei das Referenzsignal (220) in vorgegebenen Abständen ausgesendet wird,
wobei das Referenzsignal (220) abwechselnd in zumindest zwei dem Endpunkt (106) bekannten vorgegebenen Teilfrequenzbereichen des vorgegebenen Frequenzbereichs ausgesendet wird.

7. Endpunkt (106) nach Anspruch 1,

wobei das Referenzsignal (220) entsprechend eines Referenzsprungmusters (228) übertragen wird, wobei das Referenzsprungmuster (228) eine frequenz- und/oder zeitsprungbasierte Belegung von Ressourcen (225) des vorgegebenen Frequenzbereichs (224) angibt,
wobei die Ressourcen (225) durch Frequenzkanäle definiert sind,
wobei zumindest zwei benachbarte Frequenzkanäle der entsprechend des Referenzsprungmusters (228) belegten Frequenzkanäle frequenzmäßig so weit voneinander getrennt sind, dass sich diese auch mit Frequenzversatz nicht überlappen.

8. Endpunkt (106) nach Anspruch 1,

wobei das Referenzsignal (220) entsprechend eines Referenzsprungmusters (228) übertragen wird, wobei das Referenzsprungmuster (228) eine frequenz- und/oder zeitsprungbasierte Belegung von Ressourcen des vorgegebenen Frequenzbereichs (224) angibt,
wobei eine durch das Referenzsprungmuster (228) angegebene Belegung von Ressourcen (225) keine wiederholenden identischen Abstände zwischen den Ressourcen (225) in der Zeit und/oder Frequenz aufweist.

9. Endpunkt (106) nach einem der Ansprüche 1 bis 8,

wobei das Referenzsignal (220) eine Mehrzahl von Teil-Referenzdatenpaketen (227) aufweist,
wobei die zumindest zwei der Mehrzahl von Teil-Referenzdatenpaketen (227) dem Endpunkt (106) bekannte Informationen aufweisen,
wobei der Endpunkt (106) ausgebildet ist, um eine Synchronisation basierend auf den bekannten Informationen durchzuführen.

10. Endpunkt (106) nach einem der Ansprüche 1 bis 9,
wobei das Steuersignal (120) und/oder das Referenzsignal (220) eine Information über ein netzwerkspezifisches Kanalzugriffsmuster (110) aufweist, wobei das netzwerkspezifische Kanalzugriffsmuster (110) eine für die Kommunikation des Kommunikationssystems (102) verwendbare frequenz- und/oder zeitsprungbasierte Belegung von Ressourcen (112) des Frequenzbands angibt.

11. Basisstation (104) eines Kommunikationssystems (102),

wobei die Basisstation (104) ausgebildet ist, um zur Koordinierung der Teilnehmer des Kommunikationssystems (102) ein Steuersignal (120) zu senden, wobei das Steuersignal (120) entsprechend einer durch ein Steuersignalsprungmuster (210) angegebenen frequenzsprungbasierten Belegung von Ressourcen (211) eines Frequenzbands verteilt übertragen wird,

wobei die Basisstation (104) ausgebildet ist, um ein Referenzsignal (220) in einem vorgegebenen Frequenzbereich (224) des Frequenzbands zu senden, wobei das Referenzsignal (220) eine Information über das Steuersignal (120) aufweist,

wobei der vorgegebene Frequenzbereich (224) zumindest um den Faktor 3 kleiner ist, als ein Frequenzbereich (214) des Frequenzbands, in dem das Steuersignal (120) entsprechend des Steuersprungmusters (210) verteilt übertragen wird,

wobei die Information über das Steuersignal (120), die das Referenzsignal (220) aufweist, eine Information über das Steuersignalsprungmuster (210) oder eine Information über die vom Kommunikationssystem zur Übertragung des Steuersignals (120) verwendbaren Ressourcen des Frequenzbands aufweist,

wobei die Basisstation (104) ausgebildet ist, um das Referenzsignal (220) mit einer Mehrzahl von Teil-Referenzdatenpaketen (227) zu versehen, die die Information über das Steuersignal (120) enthalten,

wobei die Basisstation (104) ausgebildet ist, um das Referenzsignal (220) entsprechend eines Referenzsignalsprungmusters (228) zu senden, wobei das Referenzsignalsprungmuster (228) eine frequenz- und/oder zeitsprungbasierte Belegung von Ressourcen (225) des vorgegebenen Frequenzbereichs (224) angibt,

wobei die Basisstation (104) ausgebildet ist, um ein Referenzdatenpaket (226) mit der Information über das Steuersignal (120) auf die Mehrzahl von Teil-Referenzdatenpaketen (227) aufzuteilen, so dass jedes der Teil-Referenzdatenpakete (227) nur einen Teil des Referenzdatenpakets (226) aufweist,

wobei die Mehrzahl von Teil-Referenzdatenpaketen (227) kanalcodiert sind, so dass nur eine Teilmenge der Mehrzahl von Teil-Referenzdatenpaketen (226) zur erfolgreichen Decodierung des Referenzdatenpakets (226) erforderlich ist.

12. Kommunikationssystem, mit folgenden Merkmalen:

    einem Endpunkt (106) gemäß einem der Ansprüche 1 bis 10, und
    einer Basisstation (104) gemäß Anspruch 11.

13. Verfahren (300) zum Betrieb eines Endpunkts (106) eines Kommunikationssystems, wobei in dem Kommunikationssystem zur Koordinierung der Teilnehmer des Kommunikationssystems ein Steuersignal (120) ausgesendet wird, wobei das Steuersignal (120) entsprechend einer durch ein Steuersignalsprungmuster (210) angegebenen frequenzsprungbasierten Belegung von Ressourcen eines Frequenzbands verteilt übertragen wird, wobei der Endpunkt (106) einen Empfänger aufweist, wobei eine Empfangsbandbreite des Empfängers zumindest um den Faktor 3 kleiner ist als eine Bandbreite der durch das Steuersignalsprungmuster (210) angegebenen frequenzsprungbasierten Belegung von Ressourcen des Frequenzbands, wobei das Verfahren aufweist:

    Empfangen (302) eines Referenzsignals (220), wobei das Referenzsignal (220) eine Information über das Steuersignal (120) aufweist,
    Empfangen (304) des Steuersignals basierend auf der Information über das Steuersignal,
    wobei die Information über das Steuersignal (120), die das Referenzsignal (220) aufweist, eine Information über das Steuersignalsprungmuster (210) oder eine Information über die vom Kommunikationssystem zur Übertragung des Steuersignals (120) verwendbaren Ressourcen des Frequenzbands aufweist,
    wobei das Referenzsignal (220) in einem vorgegebenen Frequenzbereich (224) des Frequenzbands übertragen wird,
    wobei das Referenzsignal (220) eine Mehrzahl von Teil-Referenzdatenpaketen (227) aufweist, die die Information über das Steuersignal (120) enthalten, wobei das Referenzsignal (220) entsprechend eines Referenzsprungmusters (228) übertragen wird, wobei das Referenzsprungmuster (228) eine frequenz- und/oder zeitsprungbasierte Belegung von Ressourcen (225) des vorgegebenen Frequenzbereichs (224) angibt,
    wobei das Referenzsignal (220) entsprechend des Referenzsprungmusters (228) empfangen wird, um zumindest einen zur Dekodierung ausreichenden Teil der Mehrzahl von Teil-Referenzdatenpaketen (227) zu erhalten.

14. Verfahren (400) zum Betrieb einer Basisstation (104) eines Kommunikationssystems, wobei das Verfahren (400) aufweist:

    Senden (402) eines Steuersignals zur Koordinierung der Teilnehmer des Kommunikationssystems, wobei das Steuersignal (120) entsprechend einer durch ein Steuersignalsprungmuster (210) angegebenen frequenzsprungbasierten Belegung von Ressourcen eines Frequenzbands verteilt übertragen wird,

Senden (404) eines Referenzsignals (220) in einem vorgegebenen Frequenzbereich (224) des Frequenzbands, wobei das Referenzsignal (220) eine Information über das Steuersignal (120) aufweist,

wobei der vorgegebene Frequenzbereich zumindest um den Faktor 3 kleiner ist, als ein Frequenzbereich des Frequenzbands, in dem das Steuersignal (120) entsprechend des Steuersprungmusters verteilt übertragen wird,

wobei die Information über das Steuersignal (120), die das Referenzsignal (220) aufweist, eine Information über das Steuersignalsprungmuster (210) oder eine Information über die vom Kommunikationssystem zur Übertragung des Steuersignals (120) verwendbaren Ressourcen des Frequenzbands aufweist,

wobei das Referenzsignal (220) mit einer Mehrzahl von Teil-Referenzdatenpaketen (227) versehen ist, die die Information über das Steuersignal (120) enthalten,

wobei das Referenzsignal (220) entsprechend eines Referenzsignalsprungmusters (228) gesendet wird, wobei das Referenzsignalsprungmuster (228) eine frequenz- und/oder zeitsprungbasierte Belegung von Ressourcen (225) des vorgegebenen Frequenzbereichs (224) angibt,

wobei ein Referenzdatenpaket (226) mit der Information über das Steuersignal (120) auf die Mehrzahl von Teil-Referenzdatenpaketen (227) aufgeteilt ist, so dass jedes der Teil-Referenzdatenpakete (227) nur einen Teil des Referenzdatenpakets (226) aufweist,

wobei die Mehrzahl von Teil-Referenzdatenpaketen (227) kanalcodiert sind, so dass nur eine Teilmenge der Mehrzahl von Teil-Referenzdatenpaketen (226) zur erfolgreichen Decodierung des Referenzdatenpakets (226) erforderlich ist.

15. Computerprogramm zur Durchführung des Verfahrens gemäß einem der Ansprüche 13 oder 14, wenn das Computerprogramm auf einem Computer oder Mikroprozessor abläuft.

## Claims

1. A terminal point (106) of a communication system (102),

   wherein a control signal (120) is emitted in the communication system (102) for coordinating the participants of the communication system (102), the control signal (120) being transferred distributed in correspondence with a frequency hop-based occupancy of resources (211) of a frequency band, indicated by a control signal hopping pattern (210),

   wherein the terminal point (106) comprises a receiver (182), wherein a receive bandwidth of the receiver (182) is smaller by at least the factor 3 than a bandwidth of the frequency hop-based occupancy of resources (211) of the frequency band, indicated by the control signal hopping pattern (210);

   wherein the terminal point (106) is configured to receive a reference signal (220), wherein the reference signal (220) comprises information on the control signal (120),

   wherein the terminal point (106) is configured to receive the control signal (120) based on the information on the control signal (120),

   wherein the information on the control signal (120), which comprise the reference signal (220), comprise information on the control signal hopping pattern (210) or information on the resources of the frequency band usable by the communication system for transferring the control signal (120),

   wherein the reference signal (220) is transferred in a predetermined frequency range (224) of the frequency band,

   wherein the reference signal (220) comprises a plurality of partial reference data packets (227) which contain the information on the control signal (120), wherein the reference signal (220) is transferred in correspondence with a reference hopping pattern (228), wherein the reference hopping pattern (228) indicates a frequency hop and/or time hop-based occupancy of resources (225) of the predetermined frequency range (224),

   wherein the terminal point (106) is configured to receive the reference signal (220) in correspondence with the reference hopping pattern (228) to obtain at least a part of the plurality of partial reference data packets (227) sufficient for decoding.

2. The terminal point (106) in accordance with claim 1,
   wherein the terminal point (106) is configured to switch a receive frequency of the receiver (182) of the terminal point (106) to the respective resources (211) of the frequency band, indicated by the control signal hopping pattern (210), based on the control signal hopping pattern (210) to receive the control signal (120).

3. The terminal point (106) in accordance with claim 1 or 2,
   wherein the information on the control signal (120) comprise information on the time and frequency position of the control signal (120) relative to the reference signal (220).

4. The terminal point (106) in accordance with any of claims 1 to 3,
   wherein the terminal point (106) is configured to synchronize a timer and/or frequency generator of the terminal point (106) to the reference signal (220).

5. The terminal point (106) in accordance with any of claims 1 to 4,

   wherein the receiver (182) of the terminal point (106) comprises a receive bandwidth which corresponds to a bandwidth of two to ten directly adjacent frequency channels which the frequency band is divided into,
   or wherein the receiver (182) of the terminal point (106) comprises a receive bandwidth of 250 kHz or less.

6. The terminal point (106) in accordance with any of claims 1 to 5,

   wherein the reference signal (220) is emitted in predetermined distances,
   wherein the reference signal (220) is emitted alternatingly in at least two predetermined partial frequency ranges of the predetermined frequency range known to the terminal point (106).

7. The terminal point (106) in accordance with claim 1,

   wherein the reference signal (220) is transferred in correspondence with a reference hopping pattern (228),
   wherein the reference hopping pattern (228) indicates a frequency hop and/or time hop-based occupancy of resources (225) of the predetermined frequency range (224),
   wherein the resources (225) are defined by frequency channels,
   wherein at least two adjacent frequency channels of the frequency channels occupied in correspondence with the reference hopping pattern (228) are spaced apart from one another in frequency to such an extent that these do not overlap, not even with a frequency offset.

8. The terminal point (106) in accordance with claim 1,

   wherein the reference signal (220) is transferred in correspondence with a reference hopping pattern (228),
   wherein the reference hopping pattern (228) indicates a frequency hop and/or time hop-based occupancy of resources of the predetermined frequency range (224),
   wherein an occupancy of resources (225) indicated by the reference hopping pattern (228) does not comprise any repetitive identical distances between the resources (225) in time and/or frequency.

9. The terminal point (106) in accordance with any of claims 1 to 8,

   wherein the reference signal (220) comprises a plurality of partial reference data packets (227),
   wherein the at least two of the plurality of partial reference data packets (227) comprise information known to the terminal point (106),
   wherein the terminal point (106) is configured to perform synchronization based on the known information.

10. The terminal point (106) in accordance with any of claims 1 to 9,
    wherein the control signal (120) and/or the reference signal (120) comprise information on a network-specific channel access pattern (110), wherein the network-specific channel access pattern (110) indicates a frequency hop and/or time hop-based occupancy of resources (112) of the frequency band, usable for communication of the communication system (102).

11. A base station (104) of a communication system (102),

    wherein the base station (104) is configured to transmit a control signal (120) for coordinating the participants of the communication system (102), wherein the control signal (120) is transferred distributed in correspondence with a frequency hop-based occupancy of resources (211) of a frequency band, indicated by a control signal hopping pattern (210),
    wherein the base station (104) is configured to transmit a reference signal (220) in a predetermined frequency range (224) of the frequency band, wherein the reference signal (220) comprises information on the control signal (220),

wherein the predetermined frequency range (224) is smaller by at least the factor 3 than a frequency range (214) of the frequency band in which the control signal (120) is transferred distributed in correspondence with the control hopping pattern (210),

wherein the information on the control signal (120), which comprise the reference signal (220), comprise information on the control signal hopping pattern (210) or information on the resources of the frequency band usable by the communication system for transferring the control signal (120),

wherein the base station (104) is configured to provide the reference signal (220) with a plurality of partial reference data packets (227) which contain the information on the control signal (120),

wherein the base station (104) is configured to transmit the reference signal (220) in correspondence with a reference signal hopping pattern (228), wherein the reference signal hopping pattern (228) indicates a frequency hop and/or time hop-based occupancy of resources (225) of the predetermined frequency range (224),

wherein the base station (104) is configured to split a reference data packet (226) having the information on the control signal (120) into the plurality of partial reference data packets (227) so that each of the partial reference data packets (227) comprises only a part of the reference data packet (226),

wherein the plurality of partial reference data packets (227) are channel-encoded so that only a subset of the plurality of partial reference data packets (226) is required for successfully decoding the reference data packet (226).

12. A communication system comprising:

a terminal point (106) in accordance with any of claims 1 to 10, and
a base station (104) in accordance with claim 11.

13. A method (300) for operating a terminal point (106) of a communication system, wherein a control signal (120) is emitted in the communication system for coordinating the participants of the communication system, wherein the control signal (120) is transferred distributed in correspondence with a frequency hop-based occupancy of resources of a frequency band, indicated by a control signal hopping pattern (210), wherein the terminal point (106) comprises a receiver, wherein a receive bandwidth of the receiver is smaller by at least the factor 3 than a bandwidth of the frequency hop-based occupancy of resources of the frequency band, indicated by the control signal hopping pattern (210), the method comprising:

receiving (302) a reference signal (220), wherein the reference signal (220) comprises information on the control signal (120),

receiving (304) the control signal based on the information on the control signal,

wherein the information on the control signal (120), which comprise the reference signal (220), comprise information on the control signal hopping pattern (210) or information on the resources of the frequency band usable by the communication system for transferring the control signal (120),

wherein the reference signal (220) is transferred in a predetermined frequency range (224) of the frequency band,

wherein the reference signal (220) comprises a plurality of partial reference data packets (227) which contain the information on the control signal (120), wherein the reference signal (220) is transferred in correspondence with a reference hopping pattern (228), wherein the reference hopping pattern (228) indicates a frequency hop and/or time hop-based occupancy of resources (225) of the predetermined frequency range (224),

wherein the reference signal (220) is received in correspondence with the reference hopping pattern (228) to obtain at least a part of the plurality of partial reference data packets (227) sufficient for decoding.

14. A method (400) for operating a base station (104) of a communication system, the method (400) comprising:

transmitting (402) a control signal for coordinating the participants of the communication system, wherein the control signal (120) is transferred distributed in correspondence with a frequency hop-based occupancy of resources of a frequency band, indicated by a control signal hopping pattern (210),

transmitting (404) a reference signal (220) in a predetermined frequency range (224) of the frequency band, wherein the reference signal (220) comprises information on the control signal (120),

wherein the predetermined frequency range is smaller by at least the factor 3 than a frequency range of the frequency band in which the control signal (120) is transferred distributed in correspondence with the control hopping pattern,

wherein the information on the control signal (120), which comprise the reference signal (220), comprise information on the control signal hopping pattern (210) or information on the resources of the frequency band usable by the communication system for transferring the control signal (120),

wherein the reference signal (220) is provided with a plurality of partial reference data packets (227) which contain the information on the control signal (120),

wherein the reference signal (220) is transferred in correspondence with a reference signal hopping pattern (228), wherein the reference hopping pattern (228) indicates a frequency hop and/or time hop-based occupancy of resources (225) of the predetermined frequency range (224),

wherein a reference data packet (226) having the information on the control signal (120) is split into the plurality of partial reference data packets (227) so that each of the partial reference data packets (227) comprises only a part of the reference data packet (226),

wherein the plurality of partial reference data packets (227) are channel-encoded so that only a subset of the plurality of partial reference data packets (226) is required for successfully decoding the reference data packet (226).

15. A computer program for performing the method in accordance with claim 13 or 14 when the computer program runs on a computer or microprocessor.

**Revendications**

1. Point d'extrémité (106) d'un système de communication (102),

dans lequel dans le système de communication (102) pour la coordination des participants du système de communication (102) un signal de commande (120) est émis, le signal de commande (120) étant transmis de manière répartie selon une allocation de ressources (211) d'une bande de fréquences qui est basée sur le saut de fréquence et indiquée par un modèle de saut de signal de commande (210),

dans lequel le point d'extrémité (106) présente un récepteur (182), une bande passante de réception du récepteur (182) étant inférieure au moins d'un facteur 3 à une bande passante de l'allocation de ressources (211) de la bande de fréquences qui est basée sur le saut de fréquence et est indiquée par le modèle de saut de signal de commande (210) ;

dans lequel le point d'extrémité (106) est conçu pour recevoir un signal de référence (220), le signal de référence (220) présentant une information sur le signal de commande (120),

dans lequel le point d'extrémité (106) est conçu pour recevoir le signal de commande (120) sur base de l'information sur le signal de commande (120),

dans lequel l'information sur le signal de commande (120) qui présente le signal de référence (220) présente une information sur le modèle de saut de signal de commande (210) ou une information sur les ressources de la bande de fréquences qui peuvent être utilisées par le système de communication pour transmettre le signal de commande (120),

dans lequel le signal de référence (220) est transmis dans une plage de fréquences prédéterminée (224) de la bande de fréquences,

dans lequel le signal de référence (220) présente une pluralité de paquets de données de référence partiels (227) qui contiennent l'information sur le signal de commande (120), le signal de référence (220) étant transmis selon un modèle de saut de référence (228), le modèle de saut de référence (228) indiquant une allocation de ressources (225) de la plage de fréquences prédéterminée (224) qui est basée sur le saut de fréquence et/ou de temps,

dans lequel le point d'extrémité (106) est conçu pour recevoir le signal de référence (220) selon le modèle de saut de référence (228) afin d'obtenir au moins une partie de la pluralité de paquets de données de référence partiels (227) suffisante pour le décodage.

2. Point d'extrémité (106) selon la revendication 1,
dans lequel le point d'extrémité (106) est conçu pour commuter une fréquence de réception du récepteur (182) du point d'extrémité (106) sur base du modèle de saut de signal de commande (210) vers les ressources respectives (211) de la bande de fréquences qui sont indiquées par le modèle de saut de signal de commande (210) afin de recevoir le signal de commande (120).

3. Point d'extrémité (106) selon l'une des revendications 1 à 2,
dans lequel l'information sur le signal de commande (120) présente une information sur une position temporelle et fréquentielle du signal de commande (120) par rapport au signal de référence (220).

4. Point d'extrémité (106) selon l'une des revendications 1 à 3,

dans lequel le point d'extrémité (106) est conçu pour synchroniser un temporisateur et/ou générateur de fréquence du point d'extrémité (106) avec le signal de référence (220).

5. Point d'extrémité (106) selon l'une des revendications 1 à 4,

dans lequel le récepteur (182) du point d'extrémité (106) présente une bande passante de réception qui correspond à une bande passante de deux à dix canaux de fréquences immédiatement adjacents dans lesquels la bande de fréquences est divisée,
ou dans lequel le récepteur (182) du point d'extrémité (106) présente une bande passante de réception inférieure ou égale à 250 kHz.

6. Point d'extrémité (106) selon l'une des revendications 1 à 5,

dans lequel le signal de référence (220) est émis à intervalles prédéterminés,
dans lequel le signal de référence (220) est émis en alternance dans au moins deux plages de fréquences partielles de la plage de fréquence prédéterminée qui sont prédéterminées et connues du point d'extrémité (106).

7. Point d'extrémité (106) selon la revendication 1,

dans lequel le signal de référence (220) est transmis selon un modèle de saut de référence (228), le modèle de saut de référence (228) indiquant une allocation de ressources de la plage de fréquences prédéterminée (224) qui est basée sur le saut de fréquence et/ou de temps,
dans lequel les ressources (225) sont définies par des canaux de fréquences,
dans lequel au moins deux canaux de fréquences adjacents parmi les canaux de fréquences disposés selon le modèle de saut de référence (228) sont suffisamment séparés les uns des autres en fréquences de manière à ce que ceux-ci ne se chevauchent pas non plus en cas de décalage de fréquence.

8. Point d'extrémité (106) selon la revendication 1,

dans lequel le signal de référence (220) est transmis selon un modèle de saut de référence (228), le modèle de saut de référence (228) indiquant une allocation de ressources (225) de la plage de fréquences prédéterminée qui est basée sur le saut de fréquence et/ou de temps,
dans lequel une allocation de ressources (225) indiquée par un modèle de saut de référence (228) ne présente pas d'intervalles identiques se répétant dans le temps et/ou la fréquence entre les ressources (225).

9. Point d'extrémité (106) selon l'une des revendications 1 à 8,

dans lequel le signal de référence (220) présente une pluralité de paquets de données de référence partiels (227),
dans lequel les au moins deux paquets parmi la pluralité de paquets de données de référence partiels (227) présentent des informations connues du point d'extrémité (106),
dans lequel le point d'extrémité (106) est conçu pour réaliser une synchronisation sur base des informations connues.

10. Point d'extrémité (106) selon l'une des revendications 1 à 9,
dans lequel le signal de commande (120) et/ou le signal de référence (220) présente une information sur un modèle d'accès de canal spécifique au réseau (110), le modèle d'accès de canal spécifique au réseau (110) indiquant une allocation de ressources (112) de la bande de fréquences qui est basée sur des sauts de fréquence et/ou de temps et qui peut être utilisée pour la communication du système de communication (102).

11. Station de base (104) d'un système de communication (102),

dans lequel la station de base (104) est conçue pour émettre un signal de commande (120) pour la coordination des participants du système de communication (102), le signal de commande (120) étant transmis de manière répartie selon une allocation de ressources (211) d'une bande de fréquences qui est basée sur le saut de fréquence et est indiquée par un modèle de saut de signal de commande (210),
dans lequel la station de base (104) est conçue pour émettre un signal de référence (220) dans une plage de fréquences prédéterminée (224) de la bande de fréquences, le signal de référence (220) présentant une information sur le signal de commande (120),

dans lequel la plage de fréquences prédéterminée (224) est inférieure au moins d'un facteur 3 à une plage de fréquences (214) de la bande de fréquences dans laquelle le signal de commande (120) est transmis de manière répartie selon le modèle de saut de commande (210),

dans lequel l'information sur le signal de commande (120) qui présente le signal de référence (220) présente une information sur le modèle de saut de signal de commande (210) ou une information sur les ressources de la bande de fréquences qui peuvent être utilisées par le système de communication pour transmettre le signal de commande (120),

dans lequel la station de base (104) est conçue pour doter le signal de référence (220) d'une pluralité de paquets de données de référence partiels (227) qui contiennent l'information sur le signal de commande (120),

dans lequel la station de base (104) est conçue pour envoyer le signal de référence (220) selon un modèle de saut de signal de référence (228), le modèle de saut de signal référence (228) indiquant une allocation de ressources (225) de la plage de fréquences prédéterminée (224) qui est basée sur le saut de fréquence et/ou de temps,

dans lequel la station de base (104) est conçue pour répartir sur la pluralité de paquets de données de référence partiels (227) un paquet de données de référence (226) avec l'information sur le signal de commande (120) de telle sorte que chacun des paquets de données de référence partiel (227) ne présente qu'une partie du paquet de données de référence (226),

dans lequel la pluralité des paquets de données de référence partiels (227) sont codés par canal de telle sorte que seule une quantité partielle de la pluralité des paquets de données de référence partiels (226) soit nécessaire pour réussir à décoder le paquet de données de référence (226).

12. Système de communication avec les caractéristiques suivantes :

un point d'extrémité (106) selon l'une des revendications 1 à 10, et
une station de base (104) selon la revendication 11.

13. Procédé (300) destiné à faire fonctionner un point d'extrémité (106) d'un système de communication, dans lequel dans le système de communication un signal de commande (120) est émis pour la coordination des participants du système de communication, le signal de commande (120) étant transmis de manière répartie selon une allocation de ressources d'une bande de fréquences qui est basée sur le saut de fréquence et est indiquée par un modèle de saut de signal de commande (210), dans lequel le point d'extrémité (106) présente un récepteur, une bande passante de réception du récepteur étant inférieure au moins d'un facteur 3 à une bande passante de l'allocation de ressources de la bande de fréquences qui est basée sur le saut de fréquence et est indiquée par le modèle de saut de signal de commande (210), dans lequel le procédé présente :

recevoir (302) un signal de référence (220), le signal de référence (220) présentant une information sur le signal de commande (120),
recevoir (304) le signal de commande sur base de l'information sur le signal de commande,
dans lequel l'information sur le signal de commande (120) qui présente le signal de référence (220) présente une information sur le modèle de saut de signal de commande (210) ou une information sur les ressources de la bande de fréquences qui peuvent être utilisées par le système de communication pour transmettre le signal de commande (120),
dans lequel le signal de référence (220) est transmis dans une plage de fréquences prédéterminée (224) de la bande de fréquences,
dans lequel le signal de référence (220) présente une pluralité de paquets de données de référence partiels (227) qui contiennent l'information sur le signal de commande (120), le signal de référence (220) étant transmis selon un modèle de saut de référence (228), le modèle de saut de référence (228) indiquant une allocation de ressources (225) de la plage de fréquences prédéterminée (224) qui est basée sur le saut de fréquence et/ou de temps,
dans lequel le signal de référence (220) est reçu selon le modèle de saut de référence (228) afin d'obtenir au moins une partie de la pluralité de paquets de données de référence partiels (227) qui soit suffisante pour le décodage.

14. Procédé (400) destiné à faire fonctionner une station de base (104) d'un système de communication, dans lequel le procédé (400) présente :

envoyer (402) un signal de commande pour la coordination des participants du système de communication, le signal de commande (120) étant transmis de manière répartie selon une allocation de ressources d'une bande de fréquences qui est basée sur le saut de fréquence et est indiquée par un modèle de saut de signal de commande (210),

envoyer (404) un signal de référence (220) dans une plage de fréquences prédéterminée (224) de la bande de fréquences, le signal de référence (220) présentant une information sur le signal de commande (120),

dans lequel la plage de fréquences prédéterminée est inférieure au moins d'un facteur 3 à une plage de fréquences de la bande de fréquences dans laquelle le signal de commande (120) est transmis de manière répartie selon le modèle de saut de commande,

dans lequel l'information sur le signal de commande (120) qui présente le signal de référence (220) présente une information sur le modèle de saut de signal de commande (210) ou une information sur les ressources de la bande de fréquences qui peuvent être utilisées par le système de communication pour transmettre le signal de commande (120),

dans lequel le signal de référence (220) est doté d'une pluralité de paquets de données de référence partiels (227) qui contiennent l'information sur le signal de commande (120),

dans lequel le signal de référence (220) est envoyé selon un modèle de saut de signal de référence (228), le modèle de saut de signal de référence (228) indiquant une allocation de ressources (225) de la plage de fréquences prédéterminée (224) qui est basée sur le saut de fréquence et/ou de temps,

dans lequel un paquet de données de référence (226) avec l'information sur le signal de commande (120) est réparti sur la pluralité de paquets de données de référence partiels (227) de telle sorte que chacun des paquets de données de référence partiel (227) ne présente qu'une partie du paquet de données de référence (226),

dans lequel la pluralité des paquets de données de référence partiels (227) sont codés par canal de telle sorte que seule une quantité partielle de la pluralité de paquets de données de référence partiels (226) soit nécessaire pour réussir à décoder le paquet de données de référence (226).

15. Programme informatique destiné à réaliser le procédé selon l'une des revendications 13 ou 14, lorsque le programme informatique est exécuté sur un ordinateur ou un microprocesseur.

Fig. 1

Fig. 2

EP 3 847 758 B1

Fig. 3

EP 3 847 758 B1

Fig. 4

<u>130</u>

132                 134

| netzwerkspezifischer Identifikator | periodischer Zahlengenerator |
|---|---|

140                  142, 142'

ID                               Z

randomisierender Zuordner
$R = map\_rand(ID, Z)$     136

144

R

Frequenz-/Zeitpunkt-Zuordner
$(f,t = map\_ft(R)$     138

146                  148

Frequenzinformation f               Zeitinformation t

Kanalzugriffsmuster

Fig. 5

<u>130</u>

132                    135_1                   135_2

| netzwerkspezifischer Identifikator | periodischer Bakenindex | periodischer Zeitschlitzindex |

140        143_1        143_2

ID                                    Z1            Z2

randomisierender Zuordner
R=map_rand(ID, Z1, Z2)                                    136

144

R

Frequenz-/Zeitpunkt-Zuordner
(f,t=map_ft(R)                                    138

146                                    148

Frequenzinformation f                          Zeit-
                                      information t

Kanalzugriffsmuster

## Fig. 6

Fig. 7

Fig. 8

Fig. 9

EP 3 847 758 B1

Fig. 10

EP 3 847 758 B1

Fig. 11

EP 3 847 758 B1

Fig. 12

EP 3 847 758 B1

Fig. 13

Fig. 14

Legend:
- ▨ = Ressourceelemente des Grund-Kanalzugriffsmusters
- ▨ = bei Bedarf zusätzlich aktivierbare Elemente des Kanalzugriffsmusters

EP 3 847 758 B1

110

Frequenz

regelmäßig stärker gestörter (z.B. durch externe Netzwerke stark belegter) Frequenzbereich

Frequenzkanäle werden nicht ins Kanalzugriffsmuster aufgenommen

112 112 112 112 112 112 112 112 112 112 112 112

115

Zeit

**Fig. 15**

Fig. 16

EP 3 847 758 B1

Fig. 17

Fig. 18

Fig. 19

Fig. 20

relativer Frequenz-kanal-index

relatives Kanalzugriffsmuster
mit gleichzeitiger Aussendung auf
mehreren Frequenzkanälen
(116)

gleichzeitige Belegung von zwei Frequenzkanälen

Fig. 21

Fig. 22

Fig. 23

| Anwendungsfälle | $T_{frame}$ (ms) | A | $T_{RE}$ (ms) | F | Z | F x Z Ressourceelemente je Ressourcen-Frame |
|---|---|---|---|---|---|---|
| Latenzkritisch (Batteriebetrieben) | 360 | 0,33 | 15 | 1 | 8 | 8 |
| Latenzkritisch (Stromnetz) | 480 | 0,50 | 15 | 5 | 16 | 80 |
| Interferenzrobust (Batteriebetrieben) | 9000 | 0,10 | 30 | 1 | 30 | 30 |
| Interferenzrobust (Stromnetz) | 9000 | 0,33 | 30 | 10 | 100 | 1000 |

Fig. 24

Fig. 25

Fig. 26

Fig. 27

EP 3 847 758 B1

Fig. 28

EP 3 847 758 B1

Fig. 29

Fig. 30

Fig. 31

EP 3 847 758 B1

Fig. 32

EP 3 847 758 B1

Fig. 33

bekannte Daten
(z.B. Netzwerk ID)

231          232          234

bekannte Daten | unbekannte Daten

Fehlerschutz Encodierung

235          236                                              237

bekannte Daten

bekannte Daten | unbekannte Daten

Interleaving über (Teil-) Subpakete

227          230

227          230

• • •

227          230

Fig. 34

Fig. 35

300

Empfangen eines Referenzsignals, das in einem vorgegebenen Frequenzbereich des Frequenzbands gesendet wird, wobei das Referenzsignal eine Information über das Steuersignal aufweist, — 302

Empfangen des Steuersignals basierend auf der Information über das Steuersignal — 304

Fig. 36

400

Senden eines Steuersignals zur Koordinierung der Teilnehmer des Kommunikationssystems, wobei das Steuersignal entsprechend einer durch ein Steuersignalsprungmuster angegebenen frequenzsprungbasierten Belegung von Ressourcen des Frequenzbands verteilt übertragen wird, ~402

Senden eines Referenzsignals in einem vorgegebenen Frequenzbereich des Frequenzbands, wobei das Referenzsignal eine Information über das Steuersignal aufweist, wobei der vorgegebene Frequenzbereich zumindest um den Faktor 5 kleiner ist, als ein Frequenzbereich des Frequenzbands, in dem das Steuersignal entsprechend des Steuersprungmusters verteilt übertragen wird. ~404

Fig. 37

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2002080769 A1
- EP 2151928 A1

- DE 102011082098 B4

**In der Beschreibung aufgeführte Nicht-Patentliteratur**

- Bluetooth Clock Recovery and Hop Sequence Synchronization Using Software Defined Radios. **T ABASSAM A A et al.** REGION 5 CONFERENCE, 2008 IEEE. IEEE, 17 April 2008, 1-5
- Bluetooth Inquiry Time Characterization and Selection. **PETERSON B S et al.** IEEE TRANSACTIONS ON MOBILE COMPUTING. IEEE SERVICE CENTER, 01 September 2006, vol. 5, 1173-1187
- The Inquiry and Page Procedure in Bluetooth Connection. **TAQWAN THAMRIN et al.** SOFT COMPUTING AND PATTERN RECOGNITION, 2009. SOCPAR'09. INTERNATIONAL CONFERENCE OF. IEEE, 04 December 2009, 218-222

- IEEE Standard for Low-Rate Wireless Networks. *IEEE Std. 802.15.4 - 2015*, 2015
- **G. KILIAN** ; **H. PETKOV** ; **R. PSIUK** ; **H. LIESKE** ; **F. BEER** ; **J. ROBERT** ; **A. HEUBERGER**. Improved coverage for low-power telemetry systems using telegram splitting. *Proceedings of 2013 European Conference on Smart Objects, Systems and Technologies (SmartSysTech)*, 2013
- **G. KILIAN** ; **M. BREILING** ; **H. H. PETKOV** ; **H. LIESKE** ; **F. BEER** ; **J. ROBERT** ; **A. HEUBERGER**. Increasing Transmission Reliability for Telemetry Systems Using Telegram Splitting. *IEEE Transactions on Communications*, March 2015, vol. 63 (3), 949-961